(19) Europäisches Patentamt / European Patent Office / Office européen des brevets

(11) **EP 4 322 360 A1**

(12) **EUROPEAN PATENT APPLICATION**
published in accordance with Art. 153(4) EPC

(43) Date of publication:
**14.02.2024 Bulletin 2024/07**

(21) Application number: **22794805.6**

(22) Date of filing: **24.04.2022**

(51) International Patent Classification (IPC):
**H02J 3/38** *(2006.01)*　　**H02J 3/46** *(2006.01)*
**H02J 3/32** *(2006.01)*

(52) Cooperative Patent Classification (CPC):
**Y02E 10/56**

(86) International application number:
**PCT/CN2022/088722**

(87) International publication number:
**WO 2022/228334 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021　CN 202110481296**

(71) Applicant: **Huawei Digital Power Technologies Co., Ltd.**
**Shenzhen, Guangdong 518043 (CN)**

(72) Inventors:
• **LI, Lin**
  **Shenzhen, Guangdong 518043 (CN)**
• **XU, Zhiwu**
  **Shenzhen, Guangdong 518043 (CN)**
• **GUO, Haibin**
  **Shenzhen, Guangdong 518043 (CN)**

(74) Representative: **Gill Jennings & Every LLP**
**The Broadgate Tower**
**20 Primrose Street**
**London EC2A 2ES (GB)**

(54) **POWER SYSTEM AND CONTROL METHOD FOR POWER SYSTEM**

(57)　A power system and a power system control method are disclosed. The power system (100) includes N direct current coupling units (102, 103, 104), N direct current buses (105, 106, 107), and a main controller (101). The N direct current coupling units (102, 103, 104) are in a one-to-one correspondence with the N direct current buses (105, 106, 107); and the N direct current coupling units (102, 103, 104) are configured to supply power to a power grid (108). Each direct current coupling unit (102, 103, 104) includes an energy unit (1022, 1032), and the energy unit (1022, 1032) is configured to generate electric energy. The main controller (101) is configured to: obtain a total network input demand power, where the total network input demand power is a network input power required by the power grid (108); obtain first amplitude limiting values, where the first amplitude limiting value indicates a maximum discharging power that can be supplied by each energy unit (1022, 1032) to the power grid (108); and determine first network input power values based on the total network input demand power and the first amplitude limiting values, where the first network input power value is a power value that is allocated to each energy unit (1022, 1032) and that is input to the power grid (108), at least one direct current coupling unit (102, 103, 104) is in a first amplitude limiting state, and the first amplitude limiting state is that a first network input power value is equal to a first amplitude limiting value corresponding to the first network input power value. This can improve running reliability of the power system.

Method 100

```
S110: A main controller obtains a total network
access demand power of a power grid
        |
S120: The main controller obtains first amplitude
limiting values of N direct current coupling units
        |
S130: The main controller determines first network
access power values of the N direct current coupling
units based on the total network access demand
power and the first amplitude limiting values of the
N direct current coupling units
```

FIG. 5

## Description

This application claims priority to Chinese Patent Application No. 202110481296.3, filed with the China National Intellectual Property Administration on April 30, 2021 and entitled "POWER SYSTEM AND POWER SYSTEM CONTROL METHOD", which is incorporated herein by reference in its entirety.

## TECHNICAL FIELD

This application relates to the field of power systems, and more specifically, to a power system and a power system control method.

## BACKGROUND

In recent years, with an increasing proportion of new energy power such as wind energy and solar energy in power systems, structure characteristics and operation control modes of conventional power systems will be transformed to form new energy power systems.

However, uncertainty of the new energy power is high. If power allocation is performed based on a rated capacity, energy conversion efficiency of a new energy device may be low. If power allocation is performed based on a current maximum power of each device, overvoltage or overcurrent may easily occur on some devices in a power system, and reliability of the entire power system is reduced.

Therefore, a power system and a power system control method are urgently needed to improve running reliability of the power system.

## SUMMARY

This application provides a power system and a power system control method, to improve running reliability of the power system.

According to a first aspect, a power system is provided. The power system includes N direct current coupling units, N direct current buses, and a controller, the N direct current coupling units are in a one-to-one correspondence with the N direct current buses, the N direct current coupling units are configured to supply power to a power grid, each of the N direct current coupling units includes an energy unit, the energy unit is configured to generate electric energy, and N is a positive integer; and the main controller is configured to: obtain a total network input demand power of the power grid, where the total network input demand power is a network input power required by the power grid; obtain first amplitude limiting values of the N direct current coupling units, where the first amplitude limiting value indicates a maximum discharging power that can be supplied by the energy unit in each direct current coupling unit to the power grid; and determine first network input power values of the N direct current coupling units based on the total network input demand power and the first amplitude limiting values of the N direct current coupling units, where the first network input power value is a power value that is allocated to the energy unit in each direct current coupling unit and that is input to the power grid, at least one of the N direct current coupling units is in a first amplitude limiting state, and the first amplitude limiting state is that a first network input power value allocated to a direct current coupling unit is equal to a first amplitude limiting value corresponding to the direct current coupling unit.

Therefore, in this application, the main controller in the power system may obtain the maximum discharging power that can be currently supplied by the energy unit in the direct current coupling unit to the power grid, namely the first amplitude limiting value. The main controller allocates the first network input power value to each direct current coupling unit based on the first amplitude limiting value and the total network input demand power. This can avoid reduction of running reliability of the power system caused by a power component in the power system that exceeds the amplitude limit, thereby improving running reliability of the power system.

With reference to the first aspect, in some implementations of the first aspect, each of the N direct current coupling units further includes an inverter unit, and the inverter unit is configured to: receive, through the direct current bus, electric energy output by the energy unit, and supply electric energy to the power grid after performing direct current-to-alternating current conversion on the electric energy; and the main controller is specifically configured to: determine a minimum value in the following as the first amplitude limiting value of each direct current coupling unit: a first power value of each direct current coupling unit and a second power value of each direct current coupling unit, where the first power value is a maximum discharging power of the energy unit in each direct current coupling unit, and the second power value is a maximum discharging power of the inverter unit in each direct current coupling unit.

Therefore, in this application, the main controller uses a minimum value in the first power value and the second power value of each direct current coupling unit as the first amplitude limiting value of the direct current coupling unit. Therefore, compared with allocating the total network input demand power based on a rated power, allocating the first network input power value to each direct current coupling unit based on the first amplitude limiting value and the total network input demand power can further improve utilization of electric energy generated by the energy unit of the power system.

With reference to the first aspect, in some implementations of the first aspect, the main controller is specifically configured to perform a plurality of rounds of first iterative calculation, to determine the first network input power values of the N direct current coupling units, where each round of first iterative calculation in the plurality of rounds of first iterative calculation includes: determining $L_1$ first direct current coupling units, where the first direct current coupling unit is a direct current coupling unit to which no first network input power value is allocated in the previous first iterative calculation, $L_1$ is a positive integer, and $L_1 \leq N$; calculating first candidate network input power values of the $L_1$ first direct current coupling units, where the first candidate network input power values are determined based on the total network input demand power and first power values of the $L_1$ direct current coupling units, and the first power value is a maximum discharging power of the energy unit in each direct current coupling unit; and determining first network input power values of the $L_1$ first direct current coupling units based on the first candidate network input power values and first amplitude limiting values that are of the $L_1$ first direct current coupling units.

Therefore, in this application, the first network input power value may be allocated to each direct current coupling unit through a plurality of rounds of first iterative calculation, thereby improving running reliability of the power system.

With reference to the first aspect, in some implementations of the first aspect, the main controller is specifically configured to determine $L_2$ second direct current coupling units in the $L_1$ first direct current coupling units, where first candidate network input power values of the second direct current coupling units are greater than or equal to first amplitude limiting values corresponding to the second direct current coupling units, and $L_2$ is a positive integer; and determine first network input power values of the $L_2$ second direct current coupling units, where the $L_2$ second direct current coupling units are in the first amplitude limiting state.

Therefore, in this application, the first candidate network input power value obtained through calculation is not directly used as the power value that is allocated to the energy unit in each direct current coupling unit and that is input to the power grid, but the $L_2$ second direct current coupling units in the first amplitude limiting state are determined, and a corresponding first amplitude limiting value is allocated to each direct current coupling unit in the first amplitude limiting state as the first network input power value, thereby improving running reliability the power system.

With reference to the first aspect, in some implementations of the first aspect, each round of first iterative calculation in the plurality of rounds of first iterative calculation further includes:

when $L_1 = L_2$, determining to end the plurality of rounds of first iterative calculation; and
when $L_1 > L_2$, determining to start a next round of first iterative calculation.

With reference to the first aspect, in some implementations of the first aspect, the main controller is specifically configured to: determine that the first candidate network input power value of each of the $L_1$ first direct current coupling units is less than the first amplitude limiting value corresponding to the first direct current coupling unit; and determine that the first network input power value of each of the $L_1$ first direct current coupling units is the first candidate network input power value corresponding to the first direct current coupling unit.

With reference to the first aspect, in some implementations of the first aspect, the main controller is specifically configured to determine the first candidate network input powers of the $L_1$ first direct current coupling units when the following condition is met:

$$p_{bus\_energy\_to\_grid\_j} = p_{ref\_1} \frac{p_{bus\_\max\_energy\_j}}{\sum_{j \in L_1} p_{bus\_\max\_energy\_j}}$$

where $P_{bus\_energy\_to\_grid\_j}$ represents a first candidate network input power value of a $j^{th}$ first direct current coupling unit in the $L_1$ first direct current coupling units, $P_{pref\_1}$ represents a reference network input demand power, the reference network input demand power is a difference between the total network input demand power and a first allocated power, and the first allocated power is a sum of first network input power values that have been allocated to direct current coupling units in the previous first iterative calculation; and $P_{bus\_max\_energy\_j}$ represents a first power value of the $j^{th}$ first direct current coupling unit in the $L_1$ first direct current coupling units, $\sum_{j \in L_1} p_{bus\_\max\_energy\_j}$ represents a sum of the first power values of the $L_1$ first direct current coupling units, and $1 \leq j \leq L_1$.

Therefore, in this application, when the first candidate network input power value of the first direct current coupling unit in a round of iterative calculation is less than the first amplitude limiting value corresponding to the first direct current coupling unit. In other words, the first direct current coupling unit is in the first amplitude limiting state in a round of calculation, it may be determined that the first network input power value of each of the $L_1$ first direct current coupling units is the first candidate network input power value corresponding to the first direct current coupling unit, thereby further improving utilization of electric energy generated by the energy units in the power system.

According to a second aspect, a power system control method is provided. A power system includes N direct current coupling units, N direct current buses, and a controller, the N direct current coupling units are in a one-to-one correspondence with the N direct current buses, the N direct current coupling units are configured to supply power to a power grid, each of the N direct current coupling units includes an energy unit, the energy unit is configured to generate electric energy, and N is a positive integer; and the method includes: the controller obtains a total network input demand power of the power grid, where the total network input demand power is a network input power required by the power grid; the controller obtains first amplitude limiting values of the N direct current coupling units, where the first amplitude limiting value indicates a maximum discharging power that can be supplied by the energy unit in each direct current coupling unit to the power grid; and the controller determines first network input power values of the N direct current coupling units based on the total network input demand power and the first amplitude limiting values of the N direct current coupling units, where the first network input power value is a power value that is allocated to the energy unit in each direct current coupling unit and that is input to the power grid, at least one of the N direct current coupling units is in a first amplitude limiting state, and the first amplitude limiting state is that a first network input power value allocated to a direct current coupling unit is equal to a first amplitude limiting value corresponding to the direct current coupling unit.

Therefore, in this application, the main controller in the power system may obtain the maximum discharging power that can be currently supplied by the energy unit in the direct current coupling unit to the power grid, namely the first amplitude limiting value. The main controller allocates the first network input power value to each direct current coupling unit based on the first amplitude limiting value and the total network input demand power. This can avoid reduction of running reliability of the power system caused by a power component in the power system that exceeds the amplitude limit, thereby improving running reliability of the power system.

With reference to the second aspect, in some implementations of the second aspect, each of the N direct current coupling units further includes an inverter unit, where the inverter unit is configured to: receive, through the direct current bus, electric energy output by the energy unit, and supply electric energy to the power grid after performing direct current-to-alternating current conversion on the electric energy; and that the controller obtains first amplitude limiting values of the N direct current coupling units includes: the controller determines a minimum value in the following as the first amplitude limiting value of each direct current coupling unit: a first power value of each direct current coupling unit and a second power value of each direct current coupling unit, where the first power value is a maximum discharging power of the energy unit in each direct current coupling unit, and the second power value is a maximum discharging power of the inverter unit in each direct current coupling unit.

With reference to the second aspect, in some implementations of the second aspect, that the controller determines first network input power values of the N direct current coupling units based on the total network input demand power and the first amplitude limiting values of the N direct current coupling units includes: the controller performs a plurality of rounds of first iterative calculation, to determine the first network input power values of the N direct current coupling units, where each round of first iterative calculation in the plurality of rounds of first iterative calculation includes: the controller determines $L_1$ first direct current coupling units, where the first direct current coupling unit is a direct current coupling unit to which no first network input power value is allocated in the previous first iterative calculation, $L_1$ is a positive integer, and $L_1 \leq N$; the controller calculates first candidate network input power values of the $L_1$ first direct current coupling units, where the first candidate network input power values are determined based on the total network input demand power and first power values of the $L_1$ direct current coupling units, and the first power value is a maximum discharging power of the energy unit in each direct current coupling unit; and the controller determines first network input power values of the $L_1$ first direct current coupling units based on the first candidate network input power values and first amplitude limiting values that are of the $L_1$ first direct current coupling units.

With reference to the second aspect, in some implementations of the second aspect, that the controller determines first network input power values of the $L_1$ first direct current coupling units based on the first candidate network input power values and first amplitude limiting values that are of the $L_1$ first direct current coupling units includes: the controller determines $L_2$ second direct current coupling units in the $L_1$ first direct current coupling units, where first candidate network input power values of the second direct current coupling units are greater than or equal to first amplitude limiting values corresponding to the second direct current coupling units, and $L_2$ is a positive integer; and the controller determines first network input power values of the $L_2$ second direct current coupling units, where the $L_2$ second direct current coupling units are in the first amplitude limiting state.

With reference to the second aspect, in some implementations of the second aspect, each round of first iterative calculation in the plurality of rounds of first iterative calculation further includes: when $L_1 = L_2$, the controller determines to end the plurality of rounds of first iterative calculation; and when $L_1 > L_2$, the controller determines to start a next round of first iterative calculation.

With reference to the second aspect, in some implementations of the second aspect, that the controller determines first network input power values of the $L_1$ first direct current coupling units based on the first candidate network input power values and first amplitude limiting values that are of the $L_1$ first direct current coupling units includes: determining that the first candidate network input power value of each of the $L_1$ first direct current coupling units is less than the first amplitude limiting value corresponding to the first direct current coupling unit; and determining that the first network input power value of each of the $L_1$ first direct current coupling units is the first candidate network input power value corresponding to the first direct current coupling unit.

With reference to the second aspect, in some implementations of the second aspect, that the controller calculates first candidate network input power values of the $L_1$ first direct current coupling units includes: determining the first candidate network input powers of the $L_1$ first direct current coupling units when the following condition is met:

$$p_{bus\_energy\_to\_grid\_j} = p_{ref} \frac{p_{bus\_max\_energy\_j}}{\sum_{j \in L_1} p_{bus\_max\_energy\_j}}$$

where $P_{bus\_energy\_to\_grid\_j}$ represents a first candidate network input power value of a $j^{th}$ first direct current coupling unit in the $L_1$ first direct current coupling units, $P_{pref}$ represents a reference network input demand power, the reference network input demand power is a difference between the total network input demand power and a first allocated power, and the first allocated power is a sum of first network input power values that have been allocated to direct current coupling units in the previous first iterative calculation; and $P_{bus\_max\_energy\_j}$ represents a first power value of the $j^{th}$ first direct current coupling unit in the $L_1$ first direct current coupling units, $\sum_{j \in L_1} p_{bus\_max\_energy\_j}$ represents a sum of the first power values of the $L_1$ first direct current coupling units, and $1 \leq j \leq L_1$.

According to a third aspect, a power system control method is provided. The method is applied to a power system, the power system includes N direct current coupling units, N direct current buses, and a main controller, the N direct current coupling units are configured to supply power to a power grid, the N direct current coupling units are in a one-to-one correspondence with the N direct current buses, each of the N direct current coupling units includes an energy storage unit, the energy storage unit is configured to store electric energy, N is a positive integer, and the method includes: the main controller obtains the energy storage network input demand power of the power grid, where the energy storage network input demand power refers to a network input power that needs to be supplied by the energy storage unit to the power grid; the main controller obtains second amplitude limiting values of the N direct current coupling units, where the second amplitude limiting value indicates a maximum discharging power that can be supplied by the energy storage unit in each direct current coupling unit to the power grid; and the main controller determines a second network input power value of each direct current coupling unit based on the energy storage network input demand power and the second amplitude limiting values of the N direct current coupling units, where the second network input power value is a power value that is allocated to the energy storage unit in each direct current coupling unit and that is input to the power grid, the energy storage unit in at least one of the N direct current coupling units is in a second amplitude limiting state, and the second amplitude limiting state is that a second network input power value allocated to a direct current coupling unit is equal to a second amplitude limiting value corresponding to the direct current coupling unit.

Therefore, in this application, the main controller in the power system may obtain the maximum discharging power that can be currently supplied by the energy storage unit in the direct current coupling unit to the power grid, namely the second amplitude limiting value. The main controller allocates the second network input power value to each direct current coupling unit based on the second amplitude limiting value and the energy storage network input demand power. This can avoid reduction of running reliability of the power system caused by a power component in the power system that exceeds the amplitude limit, thereby improving running reliability of the power system. In addition, the energy storage units in the power system can perform equalized discharging, thereby prolonging the life cycle of power components in the energy storage units.

With reference to the third aspect, in some implementations of the third aspect, each of the N direct current coupling units further includes an inverter unit, and the inverter unit is configured to: receive, through the direct current bus, electric energy output by the energy storage unit, and supply electric energy to the power grid after performing direct current-to-alternating current conversion on the electric energy; and that the main controller obtains second amplitude limiting values of the N direct current coupling units includes: the main controller determines a minimum value in the following as the second amplitude limiting value of each direct current coupling unit: a second power value of each direct current coupling unit, and a third power value of each direct current coupling unit, where the second power value is a maximum discharging power of the inverter unit in each direct current coupling unit, and the third power value is a maximum discharging power of the energy storage unit in each direct current coupling unit.

Therefore, in this application, the main controller uses a minimum value in the second power value and the third power value of each direct current coupling unit as the second amplitude limiting value of the direct current coupling unit. This can avoid reduction of running reliability of the power system caused by a power component in the power system that exceeds the amplitude limit, thereby improving running reliability of the power system.

With reference to the third aspect, in some implementations of the third aspect, each of the N direct current coupling units further includes an inverter unit and an energy unit, the energy unit is configured to generate electric energy, and the inverter unit is configured to: receive, through the direct current bus, electric energy output by the energy unit and/or the energy storage unit, and supply electric energy to the power grid after performing direct current-to-alternating current conversion on the electric energy; and that the main controller obtains second amplitude limiting values of the N direct current coupling units includes: the main controller determines a minimum value in the following as the second amplitude limiting value of each direct current coupling unit: a third power value of each direct current coupling unit, and a remaining discharging power value of each direct current coupling unit, where the third power value is a maximum discharging power of the energy storage unit in each direct current coupling unit, the remaining discharging power value is a second power value of each direct current coupling unit minus a first network input power value, the second power value is a maximum discharging power of the inverter unit in each direct current coupling unit, and the first network input power value refers to a power value that is allocated to the energy unit in each direct current coupling unit and that is input to the power grid.

Therefore, in this application, in a power system including an energy unit, the main controller uses the minimum value in the second power value and the fourth power value of each direct current coupling unit as the second amplitude limiting value of the direct current coupling unit. This can avoid reduction of running reliability of the power system caused by a power component in the power system that exceeds the amplitude limit, thereby improving running reliability of the power system.

With reference to the third aspect, in some implementations of the third aspect, that the main controller determines a second network input power value of each direct current coupling unit based on the energy storage network input demand power and the second amplitude limiting values of the N direct current coupling units includes: the main controller performs a plurality of rounds of second iterative calculation, to determine the second network input power values of the N direct current coupling units, where each round of second iterative calculation in the plurality of rounds of second iterative calculation includes: the main controller determines $M_1$ third direct current coupling units, where each third direct current coupling unit is a direct current coupling unit to which no second network input power value is allocated in the previous second iterative calculation, $M_1$ is a positive integer, and $M_1 \leq N$; the main controller calculates second candidate network input power values of the $M_1$ third direct current coupling units, where the second candidate network input power values are determined based on the energy storage network input demand power and first energy values of the N direct current coupling units, and the first energy value is electric energy currently stored by the energy storage unit in each direct current coupling unit; and the main controller determines second network input power values of the $M_1$ third direct current coupling units based on the second candidate network input power values and second amplitude limiting values that are of the $M_1$ third direct current coupling units.

With reference to the third aspect, in some implementations of the third aspect, that the main controller determines second network input power values of the $M_1$ third direct current coupling units based on the second candidate network input power values and second amplitude limiting values that are of the $M_1$ third direct current coupling units includes: the main controller determines $M_2$ fourth direct current coupling units in the $M_1$ third direct current coupling units, where a second candidate network input power value of each fourth direct current coupling unit is greater than or equal to a second amplitude limiting value corresponding to the fourth direct current coupling unit, and $M_2$ is a positive integer; and the main controller determines second network input power values of the $M_2$ fourth direct current coupling units, where the $M_2$ direct current coupling units are in the second amplitude limiting state.

With reference to the third aspect, in some implementations of the third aspect, each round of first iterative calculation in the plurality of rounds of first iterative calculation further includes: when $M_1=M_2$, the main controller determines to end the plurality of rounds of second iterative calculation; and when $L_1>L_2$, the main controller determines to start a next round of second iterative calculation.

With reference to the third aspect, in some implementations of the third aspect, that the main controller determines second network input power values of the $M_1$ third direct current coupling units based on the second candidate network input power values and second amplitude limiting values that are of the $M_1$ third direct current coupling units includes: determining that the second candidate network input power value of each of the $M_1$ third direct current coupling units is less than the second amplitude limiting value corresponding to the third direct current coupling unit; and determining that a second network input power value of each of the $M_1$ third direct current coupling units is the second candidate network input power value corresponding to the third direct current coupling unit.

With reference to the third aspect, in some implementations of the third aspect, that the main controller calculates second candidate network input power values of the $M_1$ third direct current coupling units includes: determining reference energy storage network access demand power, where the reference energy storage network access demand power is a difference that is obtained by subtracting a sum of second network access power values that have been allocated to the direct current coupling unit in the previous second iterative calculation from the energy storage network access demand power; and determining the second candidate network input power values of the $M_1$ third direct current coupling units when the following condition is met:

$$p_{bus\_bat\_to\_grid\_j} = P_{pref\_2} \frac{SOE_{bus\_j}}{\sum\limits_{j \in M_1} SOE_{bus\_j}}$$

where $P_{bus\_bat\_to\_grid\_j}$ represents a second candidate network input power value of a $j^{th}$ third direct current coupling unit in the $M_1$ third direct current coupling units, $P_{pref\_2}$ represents a reference energy storage network input demand power, the reference energy storage network input demand power is a difference that is obtained by subtracting a sum of second network input power values that have been allocated to the direct current coupling unit in the previous second iterative calculation from the energy storage network input demand power, $SOE_{bus\_j}$ represents the first energy value of the $j^{th}$ third direct current coupling unit in the $M_1$ third direct current coupling units, $\sum\limits_{j \in M_1} SOE_{bus\_j}$ represents a sum of the first energy values of the $M_1$ third direct current coupling units, and $1 \le j \le M_1$.

Therefore, in this application, the second candidate network input power value obtained through calculation is not directly used as the power value that is allocated to the energy storage unit in each direct current coupling unit and that is input to the power grid, but the $M_2$ fourth direct current coupling units in the second amplitude limiting state are determined, and a corresponding second amplitude limiting value is allocated to the direct current coupling unit in the second amplitude limiting state as the second network input power value, thereby improving running reliability the power system.

According to a fourth aspect, a power system is provided. The power system includes N direct current coupling units, N direct current buses, and a main controller, the N direct current coupling units correspond to the N direct current buses one by one, and the N direct current coupling units are configured to supply power to a power grid, each of the N direct current coupling units includes an energy storage unit, where the energy storage unit is configured to store energy, and N is a positive integer; and the main controller is configured to: obtain an energy storage network input demand power of the power grid, where the energy storage network input demand power refers to a network input power that needs to be supplied by the energy storage unit to the power grid; obtain second amplitude limiting values of the N direct current coupling units, where the second amplitude limiting value indicates a maximum discharging power that can be supplied by the energy storage unit in each direct current coupling unit to a power grid; and determine a second network input power value of each direct current coupling unit based on the energy storage network input demand power and the second amplitude limiting values of the N direct current coupling units, where the second network input power value is a power value that is allocated to the energy storage unit in each direct current coupling unit and that is input to the power grid, and an energy storage unit in at least one of the N direct current coupling units is in a second amplitude limiting state, where the second amplitude limiting state is that a second network input power value allocated to a direct current coupling unit is equal to a second amplitude limiting value corresponding to the direct current coupling unit.

Therefore, in this application, the main controller in the power system may obtain the maximum discharging power that can be currently supplied by the energy storage unit in the direct current coupling unit to the power grid, namely the second amplitude limiting value. The main controller allocates the second network input power value to each direct current coupling unit based on the first amplitude limiting value and the energy storage network input demand power. This can avoid reduction of running reliability of the power system caused by a power component in the power system that exceeds the amplitude limit, thereby improving running reliability of the power system. In addition, the energy storage units in the power system can perform equalized discharging, thereby prolonging the life cycle of power components in the energy storage units.

With reference to the fourth aspect, in some implementations of the fourth aspect, each of the N direct current coupling units further includes an inverter unit, and the inverter unit is configured to: receive, through the direct current bus, electric energy output by the energy storage unit, and supply electric energy to the power grid after performing direct current-to-alternating current conversion on the electric energy; and that the main controller is specifically configured to: the main controller obtains second amplitude limiting values of the N direct current coupling units includes: the main controller determines a minimum value in the following as the second amplitude limiting value of each direct current coupling unit: a second power value of each direct current coupling unit, and a third power value of each direct current coupling unit, where the second power value is a maximum discharging power of the inverter unit in each direct current coupling unit, and the third power value is a maximum discharging power of the energy storage unit in each direct current coupling unit.

With reference to the fourth aspect, in some implementations of the fourth aspect, each of the N direct current coupling units further includes an inverter unit and an energy unit, the energy unit is configured to generate electric energy, and the inverter unit is configured to: receive, through the direct current bus, electric energy output by the energy unit and/or the energy storage unit, and supply electric energy to the power grid after performing direct current-to-alternating current conversion on the electric energy; and that the main controller is specifically configured to obtain second amplitude limiting values of the N direct current coupling units includes: determining a minimum value in the following as the second amplitude limiting value of each direct current coupling unit: a third power value of each direct current coupling unit, and a remaining discharging power value of each direct current coupling unit, where the third power value is a maximum discharging power of the energy storage unit in each direct current coupling unit, the remaining discharging power value is a second power value of each direct current coupling unit minus a first network input power value, the second power value is a maximum discharging power of the inverter unit in each direct current coupling unit, and the first network input power value refers to a power value that is allocated to the energy unit in each direct current coupling unit and that is input to the power grid.

With reference to the fourth aspect, in some implementations of the fourth aspect, the controller is specifically configured to perform a plurality of rounds of second iterative calculation, to determine the second network input power values of the N direct current coupling units, where each round of second iterative calculation in the plurality of rounds of second iterative calculation includes: determining $M_1$ third direct current coupling units, where each third direct current coupling unit is a direct current coupling unit to which no second network input power value is allocated in the previous second iterative calculation, $M_1$ is a positive integer, and $M_1 \leq N$; calculating second candidate network input power values of the $M_1$ third direct current coupling units, where the second candidate network input power values are determined based on the energy storage network input demand power and first energy values of the N direct current coupling units, and the first energy value is electric energy currently stored by the energy storage unit in each direct current coupling unit; and determining second network input power values of the $M_1$ third direct current coupling units based on the second candidate network input power values and second amplitude limiting values that are of the $M_1$ third direct current coupling units.

With reference to the fourth aspect, in some implementations of the fourth aspect, the controller is specifically configured to: determine $M_2$ fourth direct current coupling units in the $M_1$ third direct current coupling units, where a second candidate network input power value of each fourth direct current coupling unit is greater than or equal to a second amplitude limiting value corresponding to the fourth direct current coupling unit, and $M_2$ is a positive integer; and determine second network input power values of the $M_2$ fourth direct current coupling units, where the $M_2$ direct current coupling units are in the second amplitude limiting state.

With reference to the fourth aspect, in some implementations of the fourth aspect, the controller is specifically configured to: when $M_1=M_2$, determine to end the plurality of rounds of second iterative calculation; or when $L_1>L_2$, determine to start a next round of second iterative calculation.

With reference to the fourth aspect, in some implementations of the fourth aspect, the controller is specifically configured to: determine that the second candidate network input power value of each of the $M_1$ third direct current coupling units is less than the second amplitude limiting value corresponding to the third direct current coupling unit; and determine that a second network input power value of each of the $M_1$ third direct current coupling units is the second candidate network input power value corresponding to the third direct current coupling unit.

With reference to the fourth aspect, in some implementations of the fourth aspect, the controller is specifically configured to: determine reference energy storage network input demand power, where the reference energy storage network input demand power is a difference that is obtained by subtracting a sum of second network input power values that have been allocated to the direct current coupling unit in the previous second iterative calculation from the energy storage network input demand power; and determining the second candidate network input power values of the $M_1$ third direct current coupling units when the following condition is met:

$$p_{bus\_bat\_to\_grid\_j} = p_{pref\_2} \frac{SOE_{bus\_j}}{\sum_{j \in M_1} SOE_{bus\_j}}$$

where $P_{bus\_bat\_to\_grid\_j}$ represents a second candidate network input power value of a $j^{th}$ third direct current coupling unit in the $M_1$ third direct current coupling units, $P_{pref\_2}$ represents a reference energy storage network input demand power, the reference energy storage network input demand power is a difference that is obtained by subtracting a sum of second network input power values that have been allocated to the direct current coupling unit in the previous second iterative calculation from the energy storage network input demand power, $SOE_{bus\_j}$ represents the first energy value of the $j^{th}$ third direct current coupling unit in the $M_1$ third direct current coupling units, $\sum_{j \in M_1} SOE_{bus\_j}$ represents a sum of the first energy values of the $M_1$ third direct current coupling units, and $1 \leq j \leq M_1$.

According to a fifth aspect, a power system is provided. The power system includes N direct current coupling units, N direct current buses, and a controller, the N direct current coupling units are in a one-to-one correspondence with the N direct current buses, the N direct current coupling units are configured to transmit electric energy to a power grid, each of the N direct current coupling units includes an inverter unit, and each of the N direct current coupling units further includes an energy unit and/or an energy storage unit; the inverter unit is configured to: receive, through the direct current bus, electric energy output by the energy unit, and supply electric energy to the power grid after performing direct current-to-alternating current conversion on the electric energy, or the inverter unit is configured to absorb electric energy of the power grid through the direct current bus, and supply electric energy to the energy storage unit after performing alternating current-to-direct current conversion on the electric energy, where the energy unit is configured to generate electric energy, and the energy storage unit is configured to store electric energy; and the main controller is configured to: obtain discharging demand powers of N direct current coupling units, where the discharging demand power indicates a power that is allocated to the energy unit in each direct current coupling unit and that is used to charge the energy storage unit in each of the N direct current coupling units; obtain charging demand powers of N direct current coupling units, where the charging demand power indicates a power that is allocated to the energy storage unit in each direct current coupling unit and that is obtained from the energy unit in each of the N direct current coupling units; and determine a first inversion power value of each direct current coupling unit based on the discharging demand powers of the N direct current coupling units and the charging demand powers of the N direct current coupling units, where the first inversion power value indicates a power at which the inverter unit in each direct current coupling unit supplies electric energy to the power grid, or the first inversion power value indicates a power at which the inverter unit in each direct current coupling unit absorbs electric energy from the power grid.

Therefore, in this application, the first inversion power value of the inverter unit in each of the N direct current coupling units may be determined, so that electric energy generated by the energy unit of the direct current coupling unit is charged to the energy storage unit of the direct current coupling unit and/or another direct current coupling unit, thereby reducing an electric energy waste of the energy unit.

With reference to the fifth aspect, in some implementations of the fifth aspect, the main controller is specifically configured to: obtain a total charging demand power, where the total charging demand power is a total power that is allocated to the energy storage units in N direct current coupling units and that is obtained from the energy units in the N direct current coupling units; obtain third amplitude limiting values of the N direct current coupling units, where the third amplitude limiting value indicates a maximum charging power that can be supplied by the energy storage unit in each direct current coupling unit; and determine a charging demand power of each direct current coupling unit based on the total charging demand power and the third amplitude limiting values of the N direct current coupling units, where at least one of the N direct current coupling units is in a third amplitude limiting state, and the third amplitude limiting state is that a charging demand power allocated to a direct current coupling unit is equal to a third amplitude limiting value corresponding to the direct current coupling unit.

Therefore, in this application, the charging demand power of each direct current coupling unit may be determined based on the third amplitude limiting value. This can avoid reduction of running reliability of the power system caused by a power component in the power system that exceeds the amplitude limit, thereby improving running reliability of the power system. In addition, the energy storage units in the power system can perform equalized charging, thereby prolonging the life cycle of power components in the energy storage units.

With reference to the fifth aspect, in some implementations of the fifth aspect, the main controller is specifically configured to perform a plurality of rounds of third iterative calculation, to determine charging demand powers of the N direct current coupling units, where each round of third iterative calculation in the plurality of rounds of third iterative calculation includes: determining $T_1$ fifth direct current coupling units, where the fifth direct current coupling unit is a direct current coupling unit to which no charging demand power is allocated in the previous third iterative calculation, $T_1$ is a positive integer, and $T_1 \leq N$; calculating candidate charging demand powers of the $T_1$ fifth direct current coupling units, where the candidate charging demand power is determined based on the total charging demand power and second energy values of the N direct current coupling units, and the second energy value is a difference between a sum of electric energy values that can be stored by the energy storage unit in each direct current coupling unit and a stored electric energy value; and determining charging demand powers of the $T_1$ fifth direct current coupling units based on the candidate charging demand powers and third amplitude limiting values that are of the $T_1$ fifth direct current coupling units.

With reference to the fifth aspect, in some implementations of the fifth aspect, the main controller is specifically configured to: determine $T_2$ sixth direct current coupling units in the $T_1$ fifth direct current coupling units, where candidate charging demand power of the sixth direct current coupling unit is greater than or equal to the third amplitude limiting value corresponding to the sixth direct current coupling unit, and $T_2$ is a positive integer; and determine charging demand powers of the $T_2$ sixth direct current coupling units, where the $T_2$ sixth direct current coupling units are in the third amplitude limiting state.

With reference to the fifth aspect, in some implementations of the fifth aspect, each round of first iterative calculation in the plurality of rounds of third iterative calculation further includes: when $T_1=T_2$, determining to end the plurality of rounds of third iterative calculation; and when $T_1>T_2$, determining to start a next round of third iterative calculation.

With reference to the fifth aspect, in some implementations of the fifth aspect, the main controller is specifically configured to: determine that the candidate charging demand power of each of the $T_1$ fifth direct current coupling unit is less than the third amplitude limiting value corresponding to the fifth direct current coupling unit; and determine that the charging demand power of each of the $T_1$ fifth direct current coupling units is the candidate charging demand power corresponding to the fifth direct current coupling unit.

With reference to the fifth aspect, in some implementations of the fifth aspect, the main controller is specifically configured to: determine a reference charging demand power, where the reference charging demand power is a difference that is obtained by subtracting a sum of charging demand powers that have been allocated to the direct current coupling unit in the previous third iterative calculation from the charging demand power; and determine candidate charging demand powers of the $T_1$ fifth direct current coupling units when the following condition is met:

$$p_{bus\_bat\_charge\_j} = p_{pref\_3} \frac{SOE_{bus\_able\_j}}{\sum_{j \in T_1} SOE_{bus\_able\_j}}$$

where $p_{bus\_bat\_charge\_j}$ represents a candidate charging demand power of a $j^{th}$ fifth direct current coupling unit in the $T_1$ fifth direct current coupling units, $P_{pref\_3}$ represents a reference total charging demand power, the reference total charging demand power is a difference that is obtained by subtracting a sum of charging demand powers that have been allocated to the direct current coupling unit in the previous third iterative calculation from the charging demand power, and $SOE_{bus\_able\_j}$ represents the second energy value of the $j^{th}$ fifth direct current coupling unit in the $T_1$ fifth direct current coupling units, $\sum_{j \in T_1} SOE_{bus\_able\_j}$ represents a sum of the second energy values of the $T_1$ fifth direct current coupling units, and $1 \leq j \leq T_1$.

With reference to the fifth aspect, in some implementations of the fifth aspect, the main controller is specifically configured to: determine exchange powers of N direct current coupling units, where the exchange power is obtained by subtracting a charging demand power corresponding to each direct current coupling unit from a discharging demand power of the direct current coupling unit; determine adjustment demand powers based on the exchange powers of the N direct current coupling units; and determine first inversion power values of the N direct current coupling units based on the adjustment demand powers and the exchange powers of the N direct current coupling units.

With reference to the fifth aspect, in some implementations of the fifth aspect, the main controller is specifically configured to: determine first candidate inversion power values of the N direct current coupling units based on the exchange powers of the N direct current coupling units, where the first candidate inversion power value is a sum of the exchange power of each direct current coupling unit and a corresponding first network input power value, or the first candidate inversion power value is a difference that is obtained by subtracting a corresponding absorption power value from the exchange power of each direct current coupling unit, where the first network input power value refers to a power value that is allocated to the energy unit in each direct current coupling unit and that is input to the power grid, and the absorption power value refers to a power value that is allocated to the energy storage unit in each direct current coupling unit and that is of the power grid; and determine the adjustment demand powers based on the first candidate inversion power values of the N direct current coupling units and the exchange powers of the N direct current coupling units.

With reference to the fifth aspect, in some implementations of the fifth aspect, the main controller is specifically configured to: determine a discharging adjustment demand value, where the discharging adjustment demand value is a sum of differences that are obtained by subtracting a corresponding second power value from the first candidate inversion power value of each direct current coupling unit that is in the N direct current coupling units and whose first candidate inversion power value is greater than 0 and greater than the corresponding second power value; determine a charging adjustment demand value, where the charging adjustment demand value is a sum of differences that are obtained by subtracting a corresponding first candidate inversion power value from a fourth power value of each direct current coupling unit whose first candidate inversion power value is less than 0 and less than the corresponding fourth power value, where the second power value is a maximum discharging power of the inverter unit in each direct current coupling unit, and the fourth power value is a maximum charging power of the inverter unit in each direct current coupling unit; and determine the adjustment demand power, where the adjustment demand power is an absolute value of a difference that is obtained by subtracting the charging adjustment demand value from the discharging adjustment demand value.

With reference to the fifth aspect, in some implementations of the fifth aspect, the main controller is specifically configured to: determine adjustment proportion values of N direct current coupling units, where the adjustment proportion value is a proportion of an exchange power value of each direct current coupling unit to a sum of exchange power values of direct current coupling units whose exchange power values are greater than 0; determine second candidate inversion power values of the N direct current coupling units, where the second candidate inversion power value of the direct current coupling unit whose first candidate inversion power value is greater than 0 is a minimum value in a corresponding first candidate inversion power value and a corresponding second power value, and the second candidate inversion power value of the direct current coupling unit whose first candidate inversion power value is less than 0 is a maximum value in a corresponding first candidate inversion power value and a corresponding fourth power value; when it is determined that the discharging demand power is greater than the charging demand power, determine that the first inversion power value of the direct current coupling unit whose exchange power value is less than 0 is a difference that is obtained by subtracting a product of an adjustment demand power and a corresponding adjustment proportion value from a corresponding second candidate inversion power value, and determine that the first inversion power value of the direct current coupling unit whose exchange power is greater than 0 is a corresponding second candidate inversion power value; and when it is determined that the discharging demand power is less than the charging demand power, determine that the first inversion power value of the direct current coupling unit whose exchange power value is less than 0 is a corresponding second candidate inversion power value, and determine that the first inversion power value of the direct current coupling unit whose exchange power value is greater than 0 is a difference that is obtained by subtracting a product of the adjustment demand power and a corresponding adjustment proportion value from the corresponding second candidate inversion power value.

According to a sixth aspect, a power system control method is provided. The method is applied to a power system, the power system includes N direct current coupling units, N direct current buses, and a controller, the N direct current coupling units are configured to transmit electric energy to a power grid, the N direct current coupling units are in a one-to-one correspondence with the N direct current buses, each of the N direct current coupling units includes an inverter unit, and each of the N direct current coupling units further includes an energy unit and/or an energy storage unit; the inverter unit is configured to: receive, through the direct current bus, electric energy output by the energy unit, and supply electric energy to the power grid after performing direct current-to-alternating current conversion on the electric energy, or the inverter unit is configured to absorb electric energy of the power grid through the direct current bus, and supply electric energy to the energy storage unit after performing alternating current-to-direct current conversion on the electric energy, where the energy unit is configured to generate electric energy, and the energy storage unit is configured to store electric energy; and the method includes: the controller obtains discharging demand powers of N direct current coupling units, where the discharging demand power indicates a power that is allocated to the energy unit in each direct current coupling unit and that is used to charge the energy storage unit in each of the N direct current coupling units; the controller obtains charging demand powers of N direct current coupling units, where the charging demand power indicates a power that is allocated to the energy storage unit in each direct current coupling unit and that is obtained from the energy unit in each of the N direct current coupling units; and the controller determines a first inversion power value of each direct current coupling unit based on the discharging demand powers of the N direct current coupling units and the charging demand powers of the N direct current coupling units, where the first inversion power value indicates a power at which the inverter unit in each direct current coupling unit supplies electric energy to the power grid, or the first inversion power value indicates a power at which the inverter unit in each direct current coupling unit absorbs electric energy from the power grid.

Therefore, in this application, the first inversion power value of the inverter unit in each of the N direct current coupling units may be determined, so that electric energy generated by the energy unit of the direct current coupling unit is charged to the energy storage unit of the direct current coupling unit and/or another direct current coupling unit, thereby reducing an electric energy waste of the energy unit.

With reference to the sixth aspect, in some implementations of the sixth aspect, that the controller obtains charging demand powers of N direct current coupling units includes: the controller obtains a total charging demand power, where the total charging demand power is a total power that is allocated to the energy storage units in N direct current coupling units and that is obtained from the energy units in the N direct current coupling units; the controller obtains third amplitude limiting values of the N direct current coupling units, where the third amplitude limiting value indicates a maximum charging power that can be supplied by the energy storage unit in each direct current coupling unit; and the controller determines a charging demand power of each direct current coupling unit based on the total charging demand power and the third amplitude limiting values of the N direct current coupling units, where at least one of the N direct current coupling units is in a third amplitude limiting state, and the third amplitude limiting state is that a charging demand power allocated to a direct current coupling unit is equal to a third amplitude limiting value corresponding to the direct current coupling unit.

With reference to the sixth aspect, in some implementations of the sixth aspect, that the controller determines a charging demand power of each direct current coupling unit based on the total charging demand power and the third amplitude limiting values of the N direct current coupling units includes: the controller performs a plurality of rounds of third iterative calculation, to determine charging demand powers of the N direct current coupling units, where each round of third iterative calculation in the plurality of rounds of third iterative calculation includes: determining $T_1$ fifth direct current coupling units, where the fifth direct current coupling unit is a direct current coupling unit to which no charging demand power is allocated in the previous third iterative calculation, $T_1$ is a positive integer, and $T_1 \leq N$; the controller calculates candidate charging demand powers of the $T_1$ fifth direct current coupling units, where the candidate charging demand power is determined based on the total charging demand power and second energy values of the N direct current coupling units, and the second energy value is a difference between a sum of electric energy values that can be stored by the energy storage unit in each direct current coupling unit and a stored electric energy value; and the controller determines charging demand powers of the $T_1$ fifth direct current coupling units based on the candidate charging demand powers and third amplitude limiting values that are of the $T_1$ fifth direct current coupling units.

With reference to the sixth aspect, in some implementations of the sixth aspect, that the controller determines charging demand powers of the $T_1$ fifth direct current coupling units based on the candidate charging demand powers and third amplitude limiting values that are of the $T_1$ fifth direct current coupling units includes: the controller determines $T_2$ sixth direct current coupling units in the $T_1$ fifth direct current coupling units, where a candidate charging demand power of each sixth direct current coupling unit is greater than or equal to a third amplitude limiting value corresponding to the sixth direct current coupling unit, and $T_2$ is a positive integer; and the controller determines charging demand powers of the $T_2$ sixth direct current coupling units, where the $T_2$ sixth direct current coupling units are in the third amplitude limiting state.

With reference to the sixth aspect, in some implementations of the sixth aspect, each round of first iterative calculation in the plurality of rounds of third iterative calculation further includes: when $T_1 = T_2$, the controller determines to end the plurality of rounds of third iterative calculation; and when $T_1 > T_2$, the controller determines to start a next round of third iterative calculation.

With reference to the sixth aspect, in some implementations of the sixth aspect, that the controller determines charging demand powers of the $T_1$ fifth direct current coupling units based on the candidate charging demand powers and third amplitude limiting values that are of the $T_1$ fifth direct current coupling units includes: determining that the candidate charging demand power of each of the $T_1$ fifth direct current coupling unit is less than the third amplitude limiting value corresponding to the fifth direct current coupling unit; and determining that the charging demand power of each of the $T_1$ fifth direct current coupling units is the candidate charging demand power corresponding to the fifth direct current coupling unit.

With reference to the sixth aspect, in some implementations of the sixth aspect, that the controller calculates candidate charging demand powers of the $T_1$ fifth direct current coupling units includes: determining a reference charging demand power, where the reference charging demand power is a difference that is obtained by subtracting a sum of charging demand powers that have been allocated to the direct current coupling unit in the previous third iterative calculation from the charging demand power; and determining the candidate charging demand powers of the $T_1$ fifth direct current coupling units with reference to the following aspect:

$$P_{bus\_bat\_charge\_j} = P_{\max\_energy\_to\_bat} \frac{SOE_{bus\_able\_j}}{\sum_{j \in P_1} SOE_{bus\_able\_j}}$$

where $P_{bus\_bat\_to\_grid\_j}$ represents a first candidate charging power value of a $j^{th}$ fifth direct current coupling unit in the $T_1$ fifth direct current coupling units, $P_{\max\_energy\_to\_bat}$ represents a reference charging demand power, the reference charging demand power is a difference that is obtained by subtracting a sum of charging demand powers that have been allocated to the direct current coupling unit in the previous third iterative calculation from the charging demand power, and $SOE_{bus\_able\_j}$ represents the second energy value of the $j^{th}$ fifth direct current coupling unit in the $T_1$ fifth

direct current coupling units, $\sum_{j \in T_1} SOE_{bus\_able\_j}$ represents a sum of the second energy values of the $T_1$ fifth direct current

coupling units, and $1 \leq j \leq T_1$.

With reference to the sixth aspect, in some implementations of the sixth aspect, that the controller determines a first inversion power value of each direct current coupling unit based on the discharging demand powers of the N direct current coupling units and the charging demand powers of the N direct current coupling units includes: the controller determines exchange powers of N direct current coupling units, where the exchange power is obtained by subtracting a charging demand power corresponding to each direct current coupling unit from a discharging demand power of the direct current coupling unit; the controller determines adjustment demand powers based on the exchange powers of the N direct current coupling units; and the controller determines first inversion power values of the N direct current coupling units based on the adjustment demand powers and the exchange powers of the N direct current coupling units.

With reference to the sixth aspect, in some implementations of the sixth aspect, that the controller determines adjustment demand powers based on the exchange powers of the N direct current coupling units includes: the controller determines first candidate inversion power values of the N direct current coupling units based on the exchange powers of the N direct current coupling units, where the first candidate inversion power value is a sum of the exchange power of each direct current coupling unit and a corresponding first network input power value, or the first candidate inversion power value is a difference that is obtained by subtracting a corresponding absorption power value from the exchange power of each direct current coupling unit, where the first network input power value refers to a power value that is allocated to the energy unit in each direct current coupling unit and that is input to the power grid, and the absorption power value refers to a power value that is allocated to the energy storage unit in each direct current coupling unit and that is of the power grid; and the controller determines the adjustment demand powers based on the first candidate inversion power values of the N direct current coupling units and the exchange powers of the N direct current coupling units.

With reference to the sixth aspect, in some implementations of the sixth aspect, that the controller determines the adjustment demand powers based on the first candidate inversion power values of the N direct current coupling units and the exchange powers of the N direct current coupling units includes: the controller determines a discharging adjustment demand value, where the discharging adjustment demand value is a sum of differences that are obtained by subtracting a corresponding second power value from the first candidate inversion power value of each direct current coupling unit that is in the N direct current coupling units and whose first candidate inversion power value is greater than 0 and greater than the corresponding second power value; the controller determines a charging adjustment demand value, where the charging adjustment demand value is a sum of differences that are obtained by subtracting a corresponding first candidate inversion power value from a fourth power value of each direct current coupling unit whose first candidate inversion power value is less than 0 and less than the corresponding fourth power value, where the first power value is a maximum discharging power of the inverter unit in each direct current coupling unit, and the fourth power value is a maximum charging power of the inverter unit in each direct current coupling unit; and the controller determines the adjustment demand power, where the adjustment demand power is an absolute value of a difference that is obtained by subtracting the charging adjustment demand value from the discharging adjustment demand value.

With reference to the sixth aspect, in some implementations of the sixth aspect, that the controller determines first inversion power values of the N direct current coupling units based on the adjustment demand powers and the exchange powers of the N direct current coupling units includes: the controller determines adjustment proportion values of N direct current coupling units, where the adjustment proportion value is a proportion of an exchange power value of each direct current coupling unit to a sum of exchange power values of direct current coupling units whose exchange power values are greater than 0; the controller determines second candidate inversion power values of the N direct current coupling units, where the second candidate inversion power value of the direct current coupling unit whose first candidate inversion power value is greater than 0 is a minimum value in a corresponding first candidate inversion power value and a corresponding second power value, and the second candidate inversion power value of the direct current coupling unit whose first candidate inversion power value is less than 0 is a maximum value in a corresponding first candidate inversion power value and a corresponding fourth power value; when it is determined that the discharging demand power is greater than the charging demand power, the controller determines that the first inversion power value of the direct current coupling unit whose exchange power value is less than 0 is a difference that is obtained by subtracting a product of an adjustment demand power and a corresponding adjustment proportion value from a corresponding second candidate inversion power value, and determine that the first inversion power value of the direct current coupling unit whose exchange power is greater than 0 is a corresponding second candidate inversion power value; and when it is determined that the discharging demand power is less than the charging demand power, the controller determines that the first inversion power value of the direct current coupling unit whose exchange power value is less than 0 is a corresponding second candidate inversion power value, and determine that the first inversion power value of the direct current coupling unit whose exchange power value is greater than 0 is a difference that is obtained by subtracting a product of the adjustment demand power and a corresponding adjustment proportion value from the corresponding second candidate inversion power value.

According to a seventh aspect, a power system control method is provided. The method is applied to a power system, the power system includes N direct current coupling units, N direct current buses, and a main controller, the N direct current coupling units are configured to absorb power from a power grid, the N direct current coupling units are in a one-to-one correspondence with the N direct current buses, each of the N direct current coupling units includes an energy storage unit, the energy storage unit is configured to store electric energy, N is a positive integer, and the method includes: the main controller obtains an absorption demand power of the power grid, where the absorption demand power is a power that needs to be absorbed by an energy storage unit in the N direct current coupling units from the power grid; the main controller obtains fourth amplitude limiting values of the N direct current coupling units, where the fourth amplitude limiting value indicates a maximum charging power that can be supplied by each direct current coupling unit; and the main controller determines absorption power values of the N direct current coupling units based on the absorption demand power and the fourth amplitude limiting values of the N direct current coupling units, where the absorption power value is a power value that is allocated to the energy unit in each direct current coupling unit and that is of the power grid, at least one of the N direct current coupling units is in a fourth amplitude limiting state, the fourth amplitude limiting state is that an absorption power value allocated to a direct current coupling unit is equal to a fourth amplitude limiting value corresponding to the direct current coupling unit.

Therefore, in this application, the main controller in the power system may obtain the maximum charging power that can be supplied by each direct current coupling unit, namely the maximum charging power that can be currently absorbed by the energy storage unit in the direct current coupling unit from the power grid, namely a fourth amplitude limiting value. The main controller allocates the absorption power value to each direct current coupling unit based on the absorption demand power value and the fourth amplitude limiting value. This can avoid reduction of running reliability of the power system caused by a power component in the power system that exceeds the amplitude limit, thereby improving running reliability of the power system.

With reference to the seventh aspect, in some implementations of the seventh aspect, each of the N direct current coupling units further includes an inverter unit, the inverter unit is configured to receive electric energy of the power grid through the direct current bus, and transmit electric energy to the energy storage unit after performing alternating current-to-direct current conversion on the electric energy, and the method further includes: that the main controller obtains fourth amplitude limiting values of the N direct current coupling units includes: the main controller determines a minimum value in the following as the fourth amplitude limiting value of each direct current coupling unit: an absolute value of a fourth power value of each direct current coupling unit and a fifth power value of each direct current coupling unit, where the fourth power value is a maximum charging power of the inverter unit in each direct current coupling unit, and the fifth power value is a maximum charging power of the energy storage unit in each direct current coupling unit.

Therefore, in this application, the main controller uses a minimum value in the fourth power value and the fifth power value of each direct current coupling unit as the fourth amplitude limiting value of the direct current coupling unit, thereby improving running reliability of the power system.

With reference to the seventh aspect, in some implementations of the seventh aspect, that the main controller determines absorption power values of the N direct current coupling units based on the absorption demand power and the fourth amplitude limiting values of the N direct current coupling units includes: the main controller performs a plurality of rounds of fourth iterative calculation, to determine the absorption power values of the N direct current coupling units, where each round of fourth iterative calculation in the plurality of rounds of fourth iterative calculation includes:

With reference to the seventh aspect, in some implementations of the seventh aspect, the main controller determines $Q_1$ seventh direct current coupling units, where each seventh direct current coupling unit is a direct current coupling unit to which no absorption power value is allocated in the previous fourth iterative calculation, $Q_1$ is a positive integer, and $Q_1 \leq N$; the main controller calculates first candidate absorption power values of the $Q_1$ seventh direct current coupling units, where the first candidate absorption power values are determined based on the absorption demand powers and second energy values of the $Q_1$ direct current coupling units, and the second energy value is a difference between a sum of storable electric energy values of the energy storage units in each direct current coupling unit and a stored electric energy value; and the main controller determines absorption power values of the $Q_1$ seventh direct current coupling units based on the first candidate absorption power values and the fourth amplitude limiting values that are of the $Q_1$ seventh direct current coupling units.

With reference to the seventh aspect, in some implementations of the seventh aspect, that the main controller determines absorption power values of the N direct current coupling units based on the absorption demand power and the fourth amplitude limiting values of the N direct current coupling units includes: the main controller determines $Q_2$ eighth direct current coupling units in the $Q_1$ seventh direct current coupling units, where the first candidate absorption power value of the eighth direct current coupling unit is greater than or equal to the fourth amplitude limiting value corresponding to the eighth direct current coupling unit, and $Q_2$ is a positive integer; and the main controller determines absorption power values of the $Q_2$ eighth direct current coupling units, where the $Q_2$ eighth direct current coupling units are in the fourth amplitude limiting state.

With reference to the seventh aspect, in some implementations of the seventh aspect, each round of fourth iterative calculation in the plurality of rounds of fourth iterative calculation further includes:
when $Q_1=Q_2$, the main controller determines to end the plurality of rounds of fourth iterative calculation; and when $Q_1>Q_2$, the main controller determines to start a next round of fourth iterative calculation.

With reference to the seventh aspect, in some implementations of the seventh aspect, that the main controller determines absorption power values of the N direct current coupling units based on the absorption demand power and the fourth amplitude limiting values of the N direct current coupling units includes: determining that a first candidate absorption power value of each of the $Q_1$ seventh direct current coupling units is less than a fourth amplitude limiting value corresponding to the seventh direct current coupling unit; and determining that an absorption power value of each of the $Q_1$ seventh direct current coupling unit is the first candidate absorption power value corresponding to the seventh direct current coupling unit.

With reference to the seventh aspect, in some implementations of the seventh aspect, that the main controller calculates first candidate absorption power values of the $Q_1$ seventh direct current coupling units includes: determining a first reference absorption demand power, where the first reference absorption demand power is a difference that is obtained by subtracting a sum of absorption power values that have been allocated to the direct current coupling unit in the previous fourth iterative calculation from the absorption demand power; and determining the first candidate absorption power values of the $Q_1$ seventh direct current coupling units when the following condition is met:

$$p_{bus\_bat\_from\_grid\_j} = P_{ref\_absorb} \frac{SOE_{bus\_able\_j}}{\sum\limits_{j \in Q_1} SOE_{bus\_able\_j}}$$

where $P_{bus\_bat\_from\_grid\_j}$ represents a first candidate absorption power value of a $j^{th}$ direct current coupling unit in the $Q_1$ seventh direct current coupling units, $P_{ref\_absorb}$ represents a first reference absorption demand power, the first reference absorption demand power is a difference that is obtained by subtracting a sum of absorption power values that have been allocated to the direct current coupling unit in the previous fourth iterative calculation from the absorption demand power, $SOE_{bus\_able\_j}$ represents the second energy value of the $j^{th}$ seventh direct current coupling unit in the

$Q_1$ seventh direct current coupling units, $\sum\limits_{j \in Q_1} SOE_{bus\_able\_j}$ represents a sum of second energy values of the $Q_1$ seventh direct current coupling units, and $1 \le j \le Q_1$.

Therefore, in this application, the absorption power is allocated to each direct current coupling unit by using an iterative algorithm, so that the energy storage units in the direct current coupling unit can perform equalized discharging, thereby prolonging the life cycle of power components in the energy storage units.

According to an eighth aspect, a power system is provided. The power system includes N direct current coupling units, N direct current buses, and a controller, the N direct current coupling units are in a one-to-one correspondence with the N direct current buses, the N direct current coupling units are configured to absorb power from a power grid, each of the N direct current coupling units includes an energy storage unit, the energy storage unit is configured to store electric energy, and N is a positive integer; and the main controller is configured to: obtain an absorption demand power of the power grid, where the absorption demand power is a power that needs to be absorbed by an energy storage unit in the N direct current coupling units from the power grid; and obtain a fourth amplitude limiting value of the N direct current coupling units, where the fourth amplitude limiting values indicate a maximum charging power that can be supplied by each direct current coupling unit; determine absorption power values of the N direct current coupling units based on the absorption demand power and the fourth amplitude limiting value of the N direct current coupling units, where the absorption power value is a power value that is allocated to the energy unit in each direct current coupling unit and that is of the power grid, at least one of the N direct current coupling units is in a fourth amplitude limiting state, and the fourth amplitude limiting state is that an absorption power value allocated to a direct current coupling unit is equal to a fourth amplitude limiting value corresponding to the direct current coupling unit.

Therefore, in this application, the main controller in the power system may obtain the maximum charging power that can be supplied by each direct current coupling unit, namely the maximum charging power that can be currently absorbed by the energy storage unit in the direct current coupling unit from the power grid, namely a fourth amplitude limiting value. The main controller allocates the absorption power value to each direct current coupling unit based on the absorption demand power value and the fourth amplitude limiting value. This can avoid reduction of running reliability of the power system caused by a power component in the power system that exceeds the amplitude limit, thereby improving running reliability of the power system.

With reference to the eighth aspect, in some implementations of the eighth aspect, each of the N direct current coupling units further includes an inverter unit, and the inverter unit is configured to receive electric energy of the power grid through the direct current bus, and transmit electric energy to the energy storage unit after performing alternating current-to-direct current conversion on the electric energy; and the main controller is specifically configured to determine a minimum value in the following as the fourth amplitude limiting value of each direct current coupling unit: an absolute value of a fourth power value of each direct current coupling unit and a fifth power value of each direct current coupling unit, where the fourth power value is a maximum charging power of the inverter unit in each direct current coupling unit, and the fifth power value is a maximum charging power of the energy storage unit in each direct current coupling unit.

With reference to the eighth aspect, in some implementations of the eighth aspect, the main controller is specifically configured to perform a plurality of rounds of fourth iterative calculation, to determine the absorption power values of the N direct current coupling units, where each round of fourth iterative calculation in the plurality of rounds of fourth iterative calculation includes: the main controller determines $Q_1$ seventh direct current coupling units, where each seventh direct current coupling unit is a direct current coupling unit to which no absorption power value is allocated in the previous fourth iterative calculation, $Q_1$ is a positive integer, and $Q_1 \leq N$; the main controller calculates first candidate absorption power values of the $Q_1$ seventh direct current coupling units, where the first candidate absorption power values are determined based on the absorption demand powers and second energy values of the $Q_1$ direct current coupling units, and the second energy value is a difference between a sum of storable electric energy values of the energy storage units in each direct current coupling unit and a stored electric energy value; and the main controller determines absorption power values of the $Q_1$ seventh direct current coupling units based on the first candidate absorption power values and the fourth amplitude limiting values that are of the $Q_1$ seventh direct current coupling units.

With reference to the eighth aspect, in some implementations of the eighth aspect, the main controller is specifically configured to: determine $Q_2$ eighth direct current coupling units in the $Q_1$ seventh direct current coupling units, where first candidate absorption power values of the eighth direct current coupling units are greater than or equal to the fourth amplitude limiting values corresponding to the eighth direct current coupling units, and $Q_2$ is a positive integer; and the main controller determines absorption power values of the $Q_2$ eighth direct current coupling units, where the $Q_2$ eighth direct current coupling units are in the fourth amplitude limiting state.

With reference to the eighth aspect, in some implementations of the eighth aspect, each round of fourth iterative calculation in the plurality of rounds of fourth iterative calculation further includes:

when $Q_1 = Q_2$, the main controller determines to end the plurality of rounds of fourth iterative calculation; and when $Q_1 > Q_2$, the main controller determines to start a next round of fourth iterative calculation.

With reference to the eighth aspect, in some implementations of the eighth aspect, the main controller is specifically configured to: determine that the first candidate absorption power value of each of the $Q_1$ seventh direct current coupling units is less than fourth amplitude limiting value corresponding to the seventh direct current coupling unit; and determine that the absorption power value of each of the $Q_1$ seventh direct current coupling units is the first candidate absorption power value corresponding to the seventh direct current coupling unit.

With reference to the eighth aspect, in some implementations of the eighth aspect, the main controller is specifically configured to: determine a first reference absorption demand power, where the first reference absorption demand power is a difference that is obtained by subtracting a sum of absorption power values that have been allocated to the direct current coupling unit in the previous fourth iterative calculation from the absorption demand power; and determine the first candidate absorption power values of the $Q_1$ seventh direct current coupling units when the following condition is met:

$$p_{bus\_bat\_from\_grid\_j} = p_{ref\_absorb} \frac{SOE_{bus\_able\_j}}{\sum_{j \in Q_1} SOE_{bus\_able\_j}}$$

where $P_{bus\_bat\_from\_grid\_j}$ represents a first candidate absorption power value of a $j^{th}$ direct current coupling unit in the $Q_1$ seventh direct current coupling units, $P_{ref\_absorb}$ represents a first reference absorption demand power, the first reference absorption demand power is a difference that is obtained by subtracting a sum of absorption power values that have been allocated to the direct current coupling unit in the previous fourth iterative calculation from the absorption demand power, $SOE_{bus\_able\_j}$ represents the second energy value of the $j^{th}$ seventh direct current coupling unit in the

$Q_1$ seventh direct current coupling units, $\sum_{j \in Q_1} SOE_{bus\_able\_j}$ represents a sum of second energy values of the $Q_1$ seventh direct current coupling units, and $1 \leq j \leq Q_1$.

**BRIEF DESCRIPTION OF DRAWINGS**

FIG. 1 is a schematic diagram of an example of a power system to which this application is applicable;
FIG. 2 is a schematic diagram of a structure of an example of an energy unit to which this application is applicable;
FIG. 3 is a schematic diagram of a structure of an example of an energy storage unit to which this application is applicable;
FIG. 4 is a schematic diagram of a structure of an example of an inverter unit to which this application is applicable;
FIG. 5 is a schematic flowchart of allocating a first network input power value to a direct current coupling unit based on this application;
FIG. 6A and FIG. 6B are a schematic flowchart of an example of determining a first network input power value according to this application;
FIG. 7 is a schematic flowchart of allocating a second network input power value to a direct current coupling unit based on this application;
FIG. 8A and FIG. 8B are a schematic flowchart of an example of determining a second network input power value according to this application;
FIG. 9 is a schematic flowchart of allocating a first inversion power value to a direct current coupling unit based on this application;
FIG. 10A and FIG. 10B are a schematic flowchart of determining a first inversion power value according to this application;
FIG. 11 is a schematic flowchart of allocating an absorption power value to a direct current coupling unit based on this application;
FIG. 12A and FIG. 12B are a schematic flowchart of an example of determining an absorption power value according to this application;
FIG. 13 is a schematic flowchart of another example of allocating a first inversion power value to a direct current coupling unit based on this application; and
FIG. 14 is a schematic diagram of a structure of an apparatus to which this application is applicable.

**DESCRIPTION OF EMBODIMENTS**

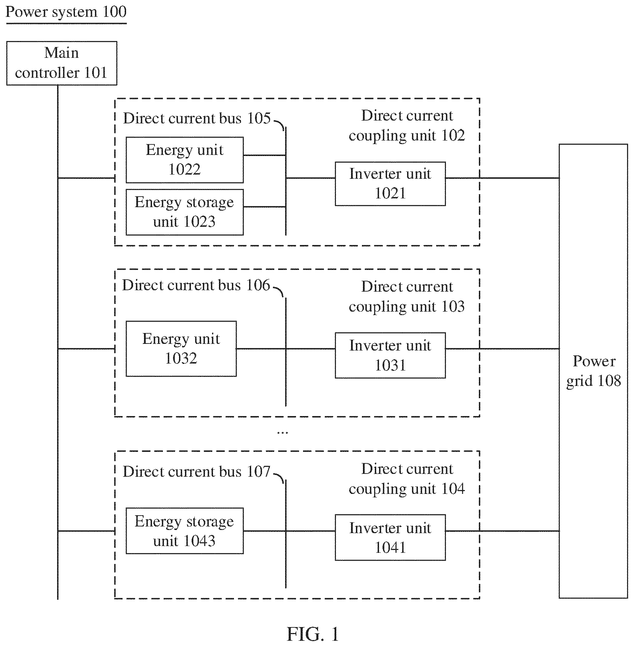

The following describes technical solutions of this application with reference to accompanying drawings.
The technical solutions provided in this application may be applied to various power systems. To facilitate understanding of embodiments of this application, a power system to which the technical solutions provided in embodiments of this application are applied is first described in detail with reference to FIG. 1. FIG. 1 is a schematic diagram of a power system 100 according to an embodiment of this application. As shown in FIG. 1, the power system may include at least one main controller, for example, the main controller 101 shown in FIG. 1. The power system 100 may further include at least one direct current coupling unit, for example, direct current coupling units 102 to 104 shown in FIG. 1. The power system 100 may further include at least one direct current bus, for example, direct current buses 105 to 107 shown in FIG. 1. The direct current coupling units 102 to 104 are in a one-to-one correspondence with the direct current buses 105 to 107. The main controller 101 may control the direct current coupling units 102 to 104. Therefore, the main controller 101, the direct current coupling units 102 to 104, and the direct current buses 105 to 107 in FIG. 1 form a power system that can transmit electric energy to a power grid 108. In other words, the direct current coupling units 102 to 104 may supply power to the power grid 108, and the direct current coupling units 102 to 104 may also absorb electric energy from the power grid 108.
Each direct current coupling unit includes an inverter unit, for example, the inverter units 1021, 1031, and 1041 shown in FIG. 1. Each direct current coupling unit may further include an energy unit, for example, the energy units 1022 and 1032 shown in FIG. 1. Each direct current coupling unit may further include an energy storage unit, for example, the energy storage units 1033 and 1043 shown in FIG. 1. Direct current sides of the inverter units 1021, 1031, and 1041 are connected to the direct current buses 105 to 107, and alternating current sides thereof are connected to the power grid 108. The inverter units 1021, 1031, and 1041 are configured to receive, through the direct current buses 105 to 107, electric energy output by the energy units 1022 and 1032, and/or electric energy discharged by the energy storage units 1033 and 1043, and supply electric energy to the power grid 108 after performing direct current-to-alternating current conversion on the electric energy. The inverter units 1021, 1031, and 1041 may be further configured to absorb electric energy from the power grid 108, and supply electric energy to the energy storage units 1033 and 1043 through the direct current buses 105 to 107 after performing alternating current-to-direct current conversion on the electric energy. The energy units 1022 and 1032 are configured to generate electric energy, and the energy storage units 1033 and 1043 are configured to store electric energy.

Optionally, the energy unit may be a new energy unit, for example, an electric apparatus that generates electric energy by using solar energy, geothermal energy, wind energy, marine energy, biomass energy, or nuclear fusion energy. The following uses an energy unit that uses solar energy to generate electric energy as an example.

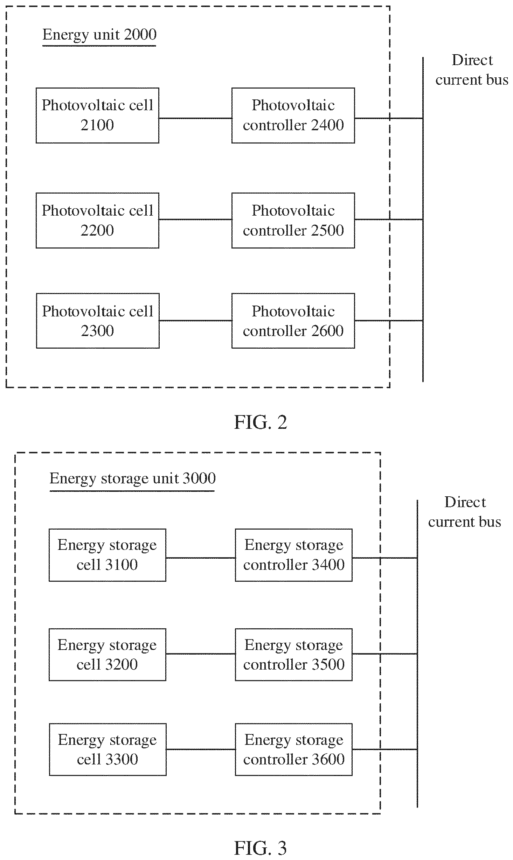

FIG. 2 is a schematic diagram of a structure of an energy unit 2000 according to an embodiment of this application. The energy unit 2000 may be applied to the system shown in FIG. 1. The energy unit may include at least one photovoltaic cell, for example, photovoltaic cells 2100 to 2300 shown in FIG. 2. The energy unit may further include at least one photovoltaic controller, for example, photovoltaic controllers 2400 to 2600 shown in FIG. 2. The photovoltaic cells 2100 to 2300 are connected to the direct current bus through the photovoltaic controllers 2400 to 2600. The photovoltaic cells 2100 to 2300, for example, monocrystalline silicon solar photovoltaic cells, polycrystalline silicon solar photovoltaic cells, or amorphous silicon solar photovoltaic cells, are configured to directly convert solar energy into electric energy. The photovoltaic controllers 2400 to 2600 are configured to respectively control the photovoltaic cells 2100 to 2300. Optionally, the photovoltaic controller may obtain a maximum discharging power that can be supplied by a corresponding photovoltaic cell. For example, the photovoltaic controller may be an MPPT controller. The MPPT controller can track the maximum power point of a photovoltaic cell in real time and controls the photovoltaic cell to output electric energy at the maximum power.

FIG. 3 is a schematic diagram of a structure of an energy storage unit 3000 according to an embodiment of this application. The energy storage unit 3000 may include at least one energy storage cell, for example, the energy storage cells 3100 to 3300 shown in FIG. 3. The energy storage unit 3000 may further include at least one energy storage controller, for example, the energy storage controllers 3400 to 3600 shown in FIG. 3. The energy storage cells 3100 to 3300 are connected to the direct current bus through the energy storage controllers 3400 to 3600. The energy storage cells 3100 to 3300, for example, lead-acid cells or lithium-ion energy storage cells, may be configured to store electric energy, and may be further configured to supply electric energy. The energy storage controllers 3400 to 3600 are respectively configured to control the energy storage cells 3100 to 3300, and may be DC-DC controllers.

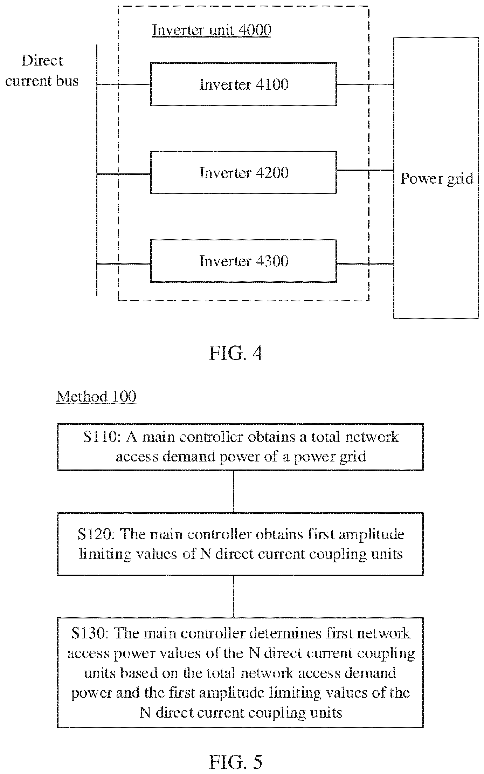

FIG. 4 is a schematic diagram of a structure of an inverter unit 4000 according to an embodiment of this application. The inverter unit 4000 may include at least one inverter, for example, inverters 4100 to 4300 shown in FIG. 4. Direct current sides of the inverters 4100 to 4300 are connected to a direct current bus, alternating current sides of the inverters 4100 to 4300 are connected to a power grid, and a power direction of the inverters 4100 to 4300 may be from the direct current bus to the power grid, or may be from the power grid to the direct current bus.

It should be noted that a photovoltaic system is used as an example in this application, and constitutes no limitation on this application.

The power system shown in FIG. 1 may be applied to a scenario in which a power grid schedules power to access a network, or may be applied to a scenario in which a power grid schedules power to absorb power from the power grid.

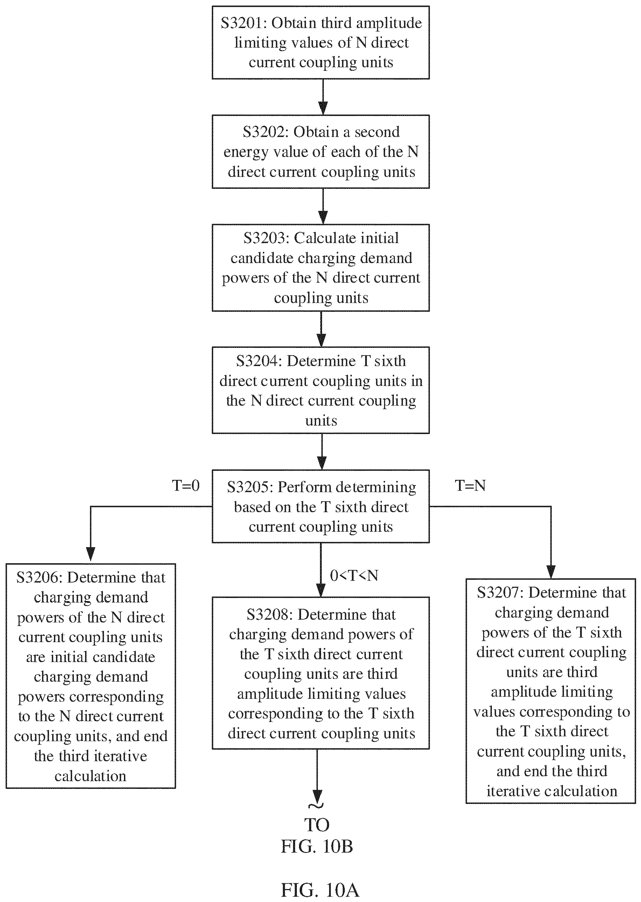

First, with reference to FIG. 5 to FIG. 10B, a scenario in which a power grid schedules a power to access a network is described.

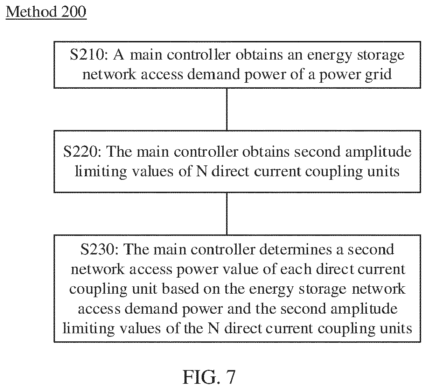

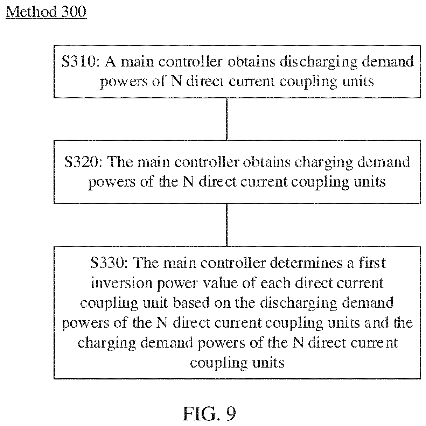

It should be noted that FIG. 5 shows a method 100 for allocating a network input power to an energy unit, FIG. 7 shows a method 200 for allocating a network input power to an energy storage unit, and FIG. 9 shows a method 300 for allocating a first inversion power to an inverter unit. The method 100, the method 200, and the method 300 may be independently used in a power system, or may be used together in the power system.

For example, when the method 100 and the method 200 are used together, it may be understood that the method 100 is used to allocate a network input power to energy units in a direct current coupling system; and if the energy units cannot meet a scheduling requirement of a power grid, the method 200 is used to allocate a network input power to energy storage units in the direct current coupling system.

For example, when the method 100 and the method 300 are used together, it may be understood that the method 100 is used to allocate a network input power to energy units in a direct current coupling system; and if the energy units can meet a scheduling requirement of a power grid, the method 300 may be used to allocate a first inversion power to the inverter units in the direct current coupling system, so that remaining electric energy of the energy units can be transmitted to the energy storage units for storage.

FIG. 5 is a schematic flowchart of a method 100 for allocating a network input power to an energy unit according to an embodiment of this application. The method 100 may be applied to a power system, and the power system includes N direct current coupling units, N direct current buses, and a main controller.

For clarity, the following uses a photovoltaic power system in which solar energy is converted into electric energy as an example for description.

S110: A main controller obtains a total network input demand power of a power grid.

The total network input demand power is a network input power required by the power grid.

S120: The main controller obtains first amplitude limiting values of N direct current coupling units.

The first amplitude limiting value indicates a maximum discharging power that can be supplied by an energy unit in each of the N direct current coupling units to the power grid.

S130: The main controller determines first network input power values of the N direct current coupling units based on the total network input demand power and the first amplitude limiting values of the N direct current coupling units.

The first network input power value is a power value that is allocated to an energy unit in each of the N direct current coupling units and that is input to the power grid, where at least one of the N direct current coupling units is in a first amplitude limiting state, and the first amplitude limiting state is that a first network input power value allocated to a direct current coupling unit is equal to a first amplitude limiting value corresponding to the direct current coupling unit.

In a possible implementation, a manner of obtaining the first amplitude limiting value in step S120 in FIG. 5 is described with reference to the following steps S121 to S123.

S121: The main controller obtains first power values of N direct current coupling units.

The first power value is a maximum discharging power of the energy unit in each direct current coupling unit.

In a possible implementation, when the energy unit in each direct current coupling unit includes at least one photovoltaic cell and at least one photovoltaic controller, the main controller may obtain the maximum discharging power of the at least one photovoltaic cell from the at least one photovoltaic controller.

If the photovoltaic controller is an MPPT controller, the MPPT controller may supply a maximum discharging power of a photovoltaic cell corresponding to the MPPT controller for the main controller, where a maximum discharging power of an $i^{th}$ photovoltaic cell in the energy unit in a $j^{th}$ direct current coupling unit is $p_{\text{max\_energy\_}ji}$.

It should be noted that, if the photovoltaic cell corresponding to the MPPT controller is not at the MPPT point, the maximum discharging power value supplied by the MPPT controller to the main controller may be an estimated value of the discharging power of the photovoltaic cell corresponding to the MPPT controller. If the photovoltaic cell corresponding to the MPPT controller is in a derating state, the maximum discharging power value supplied by the MPPT controller to the main controller may be a maximum discharging power after derating.

The main controller determines the maximum discharging power of the energy unit in each of the N direct current coupling units based on the maximum discharging power of the at least one photovoltaic cell, where the maximum discharging power of the energy unit in the $j^{th}$ direct current coupling unit, namely a first power value $p_{\text{bus\_max\_energy\_}j}$, is:

$$p_{bus\_\max\_energy\_j} = \sum p_{\max\_energy\_ji} \tag{1}$$

In other words, the maximum discharging power of the energy unit in each direct current coupling unit is a sum of the maximum discharging powers that are of photovoltaic cells and that are supplied by all photovoltaic controllers in the energy unit in each direct current coupling unit.

S122: The main controller obtains a second power value of each of the N direct current coupling units.

The second power value is a maximum discharging power of the inverter unit in each direct current coupling unit.

In a possible implementation, when the inverter unit in each direct current coupling unit includes at least one inverter, the main controller obtains the maximum discharging power of each inverter, where a maximum discharging power of an $i^{th}$ inverter in the inverter unit in the $j^{th}$ direct current coupling unit is $p_{pcs\_max\_discharge\_ji}$.

The main controller determines the maximum discharging power of the inverter unit in each of the N direct current coupling units based on the maximum discharging power of the at least one inverter, where the maximum discharging power of the inverter unit in the $j^{th}$ direct current coupling unit, namely a second power value $p_{bus\_max\_pcs\_discharge\_j}$, is:

$$p_{bus\_\max\_pcs\_disch\arg e\_j} = \sum p_{pcs\_\max\_disch\arg e\_ji} \tag{2}$$

In other words, the maximum discharging power of the inverter unit in each direct current coupling unit is a sum of the maximum discharging powers of all inverters in the inverter unit in each direct current coupling unit.

S123: The main controller determines a first amplitude limiting value of each of the N direct current coupling units based on the first power values of the N direct current coupling units and the second power values of the N direct current coupling units.

In a possible implementation, the main controller determines a minimum value in the following as the first amplitude limiting value of each direct current coupling unit: a first power value of each direct current coupling unit and a second power value of each direct current coupling unit.

In other words, the first amplitude limiting value $p_{\text{lim\_1\_}j}$ of the $j^{th}$ direct current coupling unit in the N direct current coupling units is:

$$p_{\lim\_1\_j} = \min(p_{bus\_\max\_energy\_j}, p_{bus\_\max\_pcs\_disch\arg e\_j}) \tag{3}$$

In other words, an actual network input power of the energy unit in the direct current coupling unit needs to be limited by the inverter unit, to prevent the photovoltaic cell, the energy controller, or the inverter from running in an excessive amplitude, thereby avoiding reduction of reliability of the power system.

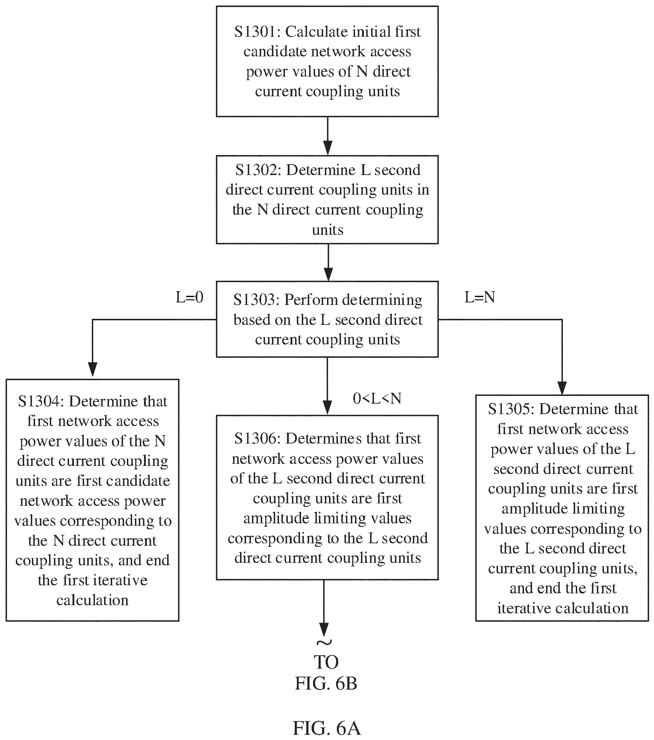

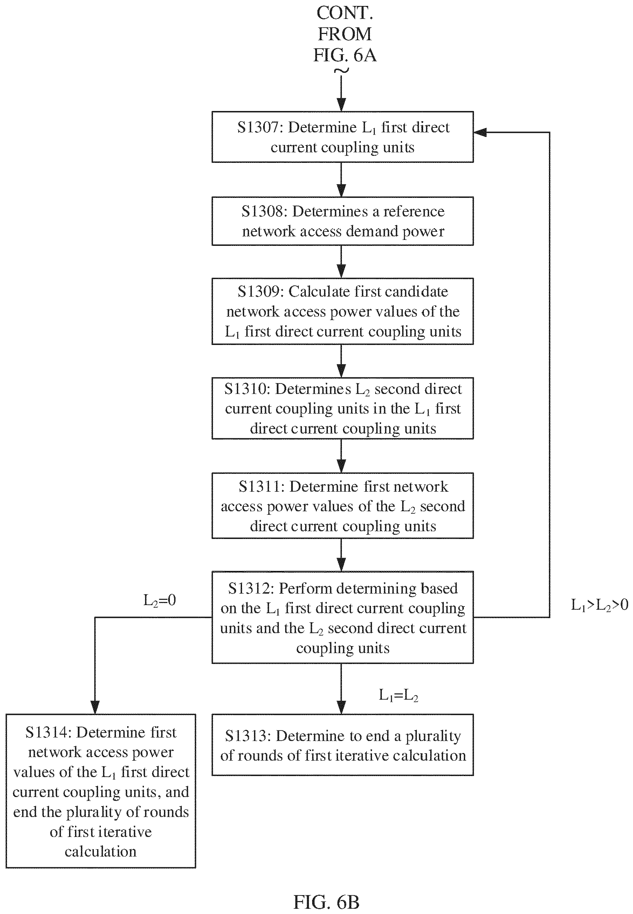

In a possible implementation, with reference to FIG. 6A and FIG. 6B, a manner of obtaining the first network input power value in step S 130 in FIG. 5 is described. FIG. 6A and FIG. 6B are a schematic flowchart of obtaining the first network input power value.

The main controller performs first iterative calculation based on a total network input demand power and a first amplitude limiting values of N direct current coupling units, to determine first network input power values of the N direct current coupling units.

S 1301: The main controller calculates initial first candidate network input power values of the N direct current coupling units.

In a possible implementation, the main controller determines an initial first candidate power value of each of the N direct current coupling units according to the following formula, where an initial first candidate power value of a $j^{th}$ direct current coupling unit is:

$$p_{bus\_energy\_to\_grid\_j} = p_1 \frac{p_{bus\_\max\_energy\_j}}{\sum\limits_{j \in N} p_{bus\_\max\_energy\_j}} \tag{4}$$

where $p_{bus\_energy\_to\_grid\_j}$ represents the initial first candidate network input power value of the $j^{th}$ direct current coupling unit in the N direct current coupling units, $p_1$ represents the total network input demand power, $p_{bus\_max\_energy\_j}$ represents the first power value of the $j^{th}$ direct current coupling unit in the N direct current coupling units, $\sum\limits_{j \in N} p_{bus\_\max\_energy\_j}$ represents a sum of first power values of the N direct current coupling units, and $1 \leq j \leq N$.

S1302: The main controller determines L second direct current coupling units in the N direct current coupling units.

In a possible implementation, the initial first candidate network input power values of the second direct current coupling units are greater than or equal to the first amplitude limiting values corresponding to the second direct current coupling units, and L is a positive integer.

It should be noted that the second direct current coupling unit may be understood as a direct current coupling unit in the first amplitude limiting state after the current calculation.

S1303: The main controller performs determining based on the L second direct current coupling units.

When L=0, S1304: The main controller determines that first network input power values of the N direct current coupling units are the first candidate network input power values corresponding to the N direct current coupling units, and ends the first iterative calculation.

In other words, when L=0, none of the N direct current coupling units is in the first amplitude limiting state after the current calculation, and the main controller may allocate, to the energy units in the N direct current coupling units, initial first candidate network input power values corresponding to the energy units to enter the power grid.

When L=N, S1305: The main controller determines that first network input power values of the L second direct current coupling units are the first amplitude limiting values corresponding to the L second direct current coupling units, and ends the first iterative calculation.

In other words, when L=N, all the N direct current coupling units are in the first amplitude limiting state after the current calculation, and the main controller allocates, to the energy units in the N direct current coupling units, the first amplitude limiting values corresponding to the energy units to enter the power grid.

When 0<L<N, S1306: The main controller determines that the first network input power values of the L second direct current coupling units are the first amplitude limiting values corresponding to the L second direct current coupling units.

The main controller first allocates the first network input power values to the L second direct current coupling units, and then performs S1307.

S1307: The main controller determines $L_1$ first direct current coupling units.

The $L_1$ first direct current coupling units are direct current coupling units to which no first network input power values are allocated in the previous first iterative calculation, $L_1$ is a positive integer, and $L_1 \leq N$.

It should be noted that the first direct current coupling units may also be understood as direct current coupling units whose first candidate network input power values obtained through calculation in the previous first iterative calculation are less than the first amplitude limiting values corresponding to the direct current coupling units.

S1308: The main controller determines a reference network input demand power.

In a possible implementation, the main controller determines the reference network input demand power according to the following formula:

$$p_{ref\_1} = p_1 - \sum_{j \notin L_1} p_{bus\_energy\_to\_grid\_j} \tag{5}$$

where $p_{ref\_1}$ represents the reference network input demand power, $\sum_{j \notin L_1} p_{bus\_energy\_to\_grid\_j}$ represents a sum of first network input power values of the direct current coupling units to which the first network input power values have been allocated, and $P_{bus\_energy\_to\_grid\_j}$ represents a first network input power value of a $j^{th}$ direct current coupling unit in the direct current coupling units to which the first network input power values have been allocated.

S1309: Calculate first candidate network input power values of the $L_1$ first direct current coupling units.

In a possible implementation, the main controller determines the first candidate network input power values of the $L_1$ first direct current coupling units according to the following formula:

$$p_{bus\_energy\_to\_grid\_j} = p_{ref\_1} \frac{p_{bus\_max\_energy\_j}}{\sum_{j \in L_1} p_{bus\_max\_energy\_j}} \tag{6}$$

where $P_{bus\_energy\_to\_grid\_j}$ represents a first candidate network input power value of the $j^{th}$ first direct current coupling unit in the $L_1$ first direct current coupling units, $p_{bus\_max\_energy\_j}$ represents a first power value of the $j^{th}$ first direct current coupling unit in the $L_1$ first direct current coupling units, $\sum_{j \in L_1} p_{bus\_max\_energy\_j}$ represents a sum of the first power values of the $L_1$ first direct current coupling units, and $1 \leq j \leq L1$.

S1310: The main controller determines $L_2$ second direct current coupling units in the $L_1$ first direct current coupling units.

The first candidate network input power values that are of the $L_2$ second direct current coupling units and that are obtained through calculation in S1309 are greater than or equal to the first amplitude limiting values corresponding to the second direct current coupling units, and $L_2$ is a positive integer.

S1311: The main controller determines first network input power values of the $L_2$ second direct current coupling units.

The $L_2$ second direct current coupling units are in the first amplitude limiting state. In other words, the main controller determines to allocate, to each of the $L_2$ second direct current coupling units, the first amplitude limiting value corresponding to the second direct current coupling unit to enter the power grid.

S1312: The main controller performs determining based on the $L_1$ first direct current coupling units and the $L_2$ second direct current coupling units.

When $L_1=L_2$, S1313: The main controller determines to end the plurality of rounds of first iterative calculation.

In this case, in S1311, first amplitude limiting values corresponding to the $L_1$ first direct current coupling units to which no first network input power values are allocated previously are allocated as the first network input power values.

When $L_1>L_2>0$, go back to S1307 to perform recalculation.

When $L_2=0$, S1314: The main controller determines first network input power values of the $L_1$ first direct current coupling units, and ends the plurality of rounds of first iterative calculation.

The first network input power values of the $L_1$ first direct current coupling units are corresponding first reference network input power values.

In this case, in this round of calculation, none of the $L_1$ first direct current coupling units is in the first amplitude limiting state, and all the network input power required by the power grid is allocated.

Therefore, in this application, the main controller in the power system may obtain the maximum discharging power that can be currently supplied by the energy unit in the direct current coupling unit to the power grid, namely the first amplitude limiting value. The main controller allocates the first network input power value to each direct current coupling unit based on the first amplitude limiting value and the total network input demand power. This can avoid reduction of running reliability of the power system caused by a power component in the power system that exceeds the amplitude limit, thereby improving running reliability of the power system.

FIG. 7 is a schematic flowchart of a method 200 for allocating a network input power to an energy storage unit according to an embodiment of this application. The method 200 may be applied to a power system, and the power system includes N direct current coupling units, N direct current buses, and a main controller.

For clarity, the following uses a photovoltaic power system in which solar energy is converted into electric energy as an example for description.

S210: The main controller obtains an energy storage network input demand power of a power grid.

The energy storage network input demand power refers to a network input power that needs to be supplied by the energy storage unit to the power grid.

S220: The main controller obtains second amplitude limiting values of the N direct current coupling units.

The second amplitude limiting value indicates a maximum discharging power that can be supplied by the energy storage unit in each direct current coupling unit to the power grid.

S230: The main controller determines a second network input power value of each direct current coupling unit based on the energy storage network input demand power and the second amplitude limiting values of the N direct current coupling units.

The second network input power value is a power value that is allocated to the energy storage unit in each direct current coupling unit and that is input to the power grid, where the energy storage unit in at least one of the N direct current coupling units is in a second amplitude limiting state, and the second amplitude limiting state is that a second network input power value allocated to a direct current coupling unit is equal to a second amplitude limiting value corresponding to the direct current coupling unit.

In a possible implementation, with reference to the following steps S211 to S213, a manner of obtaining the energy storage network input demand power in step S210 is described.

S211: The main controller determines a total first network input power value of the N direct current coupling units.

The total first network input power value is a total power value that is allocated to the energy units in the N direct current coupling units and that is input to the power grid.

The main controller may determine the first network input power value of each of the N direct current coupling units. The total first network input power value is a sum of the first network input power values of the N direct current coupling units. A process for determining the first network input power value of each of the N direct current coupling units may be similar to the process described in the method 100. Details are not described herein again.

In other words, the total first network input power value $p_{energy\_to\_grid}$ is:

$$p_{energy\_to\_grid} = \sum p_{bus\_energy\_to\_grid\_j} \tag{7}$$

$P_{bus\_energy\_to\_grid\_j}$ is the first network input power value of a $j^{th}$ direct current coupling unit in the N direct current coupling units.

S212: The main controller determines whether the total first network input power value of the N direct current coupling units meets a requirement of the power grid.

When the total first network input power value is less than the total demand power of the power grid, the main controller determines that the total first network input power value of the N direct current coupling units does not meet the requirement of the power grid.

In other words, when the energy units of the N direct current coupling units cannot meet the requirement of the power grid, network input power may be allocated to the energy storage units in the N direct current coupling units, so as to meet the requirement of the power grid.

When the main controller determines that the total first network input power value of the N direct current coupling units does not meet the requirement of the power grid, S213: The main controller determines, according to the total first network input power value, the energy storage network input demand power required by the power grid.

The energy storage network input demand power $p_2$ is a difference that is obtained by subtracting the total first network input power value $p_{energy\_to\_grid}$ from the total demand power $p_1$ of the power grid, that is:

$$p_2 = p_1 - p_{energy\_to\_grid} \tag{8}$$

In a possible implementation, a manner of obtaining the second amplitude limiting value in step S220 is described with reference to the following steps S221 to S223.

S221: The main controller obtains a second power value of each of the N direct current coupling units.

The second power value is a maximum discharging power of the inverter unit in each direct current coupling unit.

When the inverter unit in each direct current coupling unit includes at least one inverter, a method for obtaining the second power value by the main controller may be similar to S122 in the method 120. For brevity, details are not described herein again.

S222: The main controller obtains a third power value of each of the N direct current coupling units.

The third power value is a maximum discharging power of the energy storage unit in each direct current coupling unit.

In a possible implementation, when the energy storage unit in each direct current coupling unit includes at least one energy storage cell and at least one energy storage controller, the main controller may obtain the maximum discharging power of a corresponding energy storage cell from the at least one energy storage controller, and may further obtain the maximum discharging power of each energy storage controller.

The main controller determines the third power value of each direct current coupling unit based on the maximum discharging power of the at least one energy storage cell and the maximum discharging power of the at least one energy storage controller, where the third power value $p_{bus\_max\_bat\_discharge\_j}$ of a j$^{th}$ direct current coupling unit in the N direct current coupling units is:

$$p_{bus\_\max\_bat\_discharge\_j} = \sum \max(p_{bat\_\max\_discharge\_ji}, p_{dcdc\_\max\_discharge\_ji}) \qquad (9)$$

where $p_{bat\_max\_discharge\_ji}$ is a maximum discharging power of an i$^{th}$ energy storage cell in the j$^{th}$ direct current coupling unit, and $p_{dcdc\_max\_discharge\_ji}$ is a maximum discharging power of an i$^{th}$ energy storage controller in the j$^{th}$ direct current coupling unit. In addition, a negative sign may be defined as a charging direction of the energy storage unit, and both $p_{bat\_max\_discharge\_ji}$ and $p_{dcdc\_max\_discharge\_ji}$ are negative values.

In other words, the final maximum discharging power of the energy storage cell and the corresponding energy storage controller is a maximum value in the maximum discharging powers of the energy storage cell and the corresponding energy storage controller, and the maximum discharging power of the energy storage unit in the direct current coupling unit is a sum of the final maximum discharging powers of all the energy storage cells in the direct current coupling unit and the corresponding energy storage controller.

It should be noted that one energy storage controller may control one or more energy storage cells. This is not limited in this application.

S223: The main controller determines the second amplitude limiting value of each direct current coupling unit based on the second power value and the third power value of each of the N direct current coupling units.

In a possible implementation, the main controller determines a minimum value in the following as the second amplitude limiting value of each direct current coupling unit: a second power value of each direct current coupling unit and a third power value of each direct current coupling unit.

In other words, the second amplitude limiting value $p_{lim\_2\_j}$ of the j$^{th}$ direct current coupling unit in the N direct current coupling units is:

$$p_{\lim\_2\_j} = \min(p_{bus\_\max\_bat\_discharge\_j}, p_{bus\_\max\_pcs\_discharge\_j}) \qquad (10)$$

In other words, actual discharging of the energy storage unit in the direct current coupling unit needs to be limited by the inverter unit, to prevent the energy storage cell, the energy storage controller, or the inverter from running in an excessive amplitude, thereby avoiding reduction of reliability of the power system.

In another possible implementation, when the direct current coupling unit further includes an energy unit, and the main controller has allocated a first network input power value to the energy unit, the main controller may determine a minimum value in the following as the second amplitude limiting value of each direct current coupling unit: a second power value of each direct current coupling unit and a remaining discharging power value of each direct current coupling unit, where the remaining discharging power value is obtained by subtracting the first network input power value from the second power value of each direct current coupling unit.

In other words, the second amplitude limiting value $p_{lim\_2\_j}$ of the j$^{th}$ direct current coupling unit in the N direct current coupling units may be:

$$p_{\lim\_2\_j} = \min(p_{bus\_\max\_bat\_discharge\_j}, p_{bus\_\max\_pcs\_discharge\_j} - p_{bus\_energy\_to\_grid\_j}) \qquad (11)$$

In this case, because the inverter unit already bears the discharging power of the energy unit, the power that has been allocated to the energy unit and that is input to the power grid needs to be considered when the power that is input to the power grid is allocated to the energy storage unit.

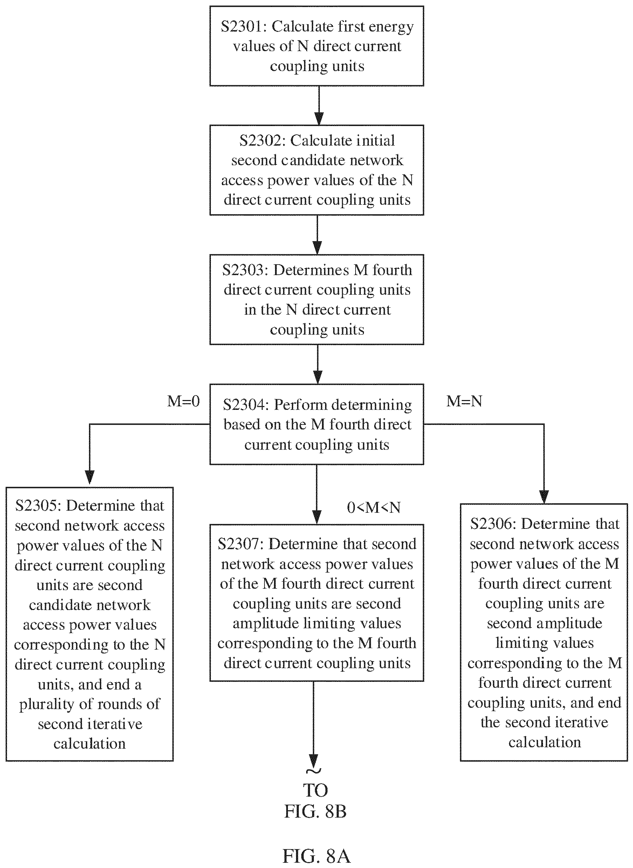

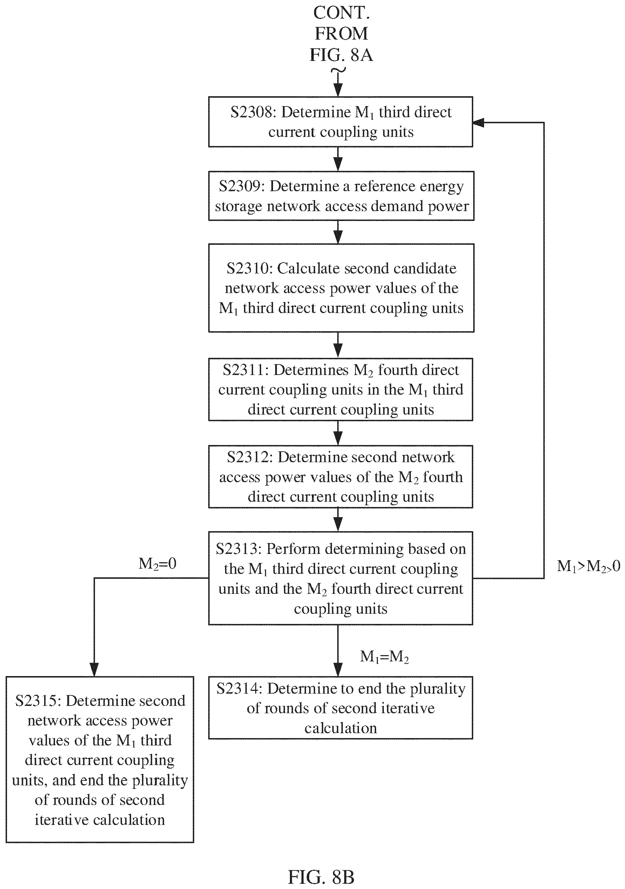

In a possible implementation, with reference to FIG. 8A and FIG. 8B, a manner of obtaining the second network input power value in step S230 in FIG. 7 is described. FIG. 8A and FIG. 8B are a schematic flowchart of obtaining the second network input power value.

The main controller performs second iterative calculation based on the energy storage network input demand powers and the second amplitude limiting values of the N direct current coupling units, to determine the second network input power values of the N direct current coupling units.

S2301: The main controller obtains first energy values of the N direct current coupling units.

The first energy value is electric energy currently stored in the energy storage unit in each of the N direct current coupling units.

In a possible implementation, the energy storage unit in each direct current coupling unit includes at least one energy storage cell, and the main controller may obtain electric energy currently stored in each energy storage cell in the energy storage unit in each direct current coupling unit.

The main controller determines a first energy value of each of the N direct current coupling units based on the electric energy currently stored in each energy storage cell, where the first energy value $SOE_{bus\_j}$ of a $j^{th}$ direct current coupling unit is:

$$SOE_{bus\_j} = \sum SOE_{ji} \qquad (12)$$

where $SOE_{ji}$ is the electric energy currently stored in the $i^{th}$ energy storage cell in the $j^{th}$ direct current coupling unit.

In other words, an energy storage unit in one direct current coupling unit may include a plurality of energy storage cells, and the first energy value of the direct current coupling unit is a sum of the electric energy currently stored in all energy storage cells in the direct current coupling unit.

S2302: The main controller calculates initial second candidate network input power values of the N direct current coupling units.

In a possible implementation, the main controller determines an initial second candidate power value of each of the N direct current coupling units according to the following formula, where the initial second candidate power value of the $j^{th}$ direct current coupling unit is:

$$P_{bus\_bat\_to\_grid\_j} = P_2 \frac{SOE_{bus\_j}}{\sum_{j \in N} SOE_{bus\_j}} \qquad (13)$$

where $P_{bus\_bat\_to\_grid\_j}$ represents the initial second candidate network input power value of the $j^{th}$ direct current coupling unit in the N direct current coupling units, $P_2$ represents an energy storage network input demand power, $\sum_{j \in N} SOE_{bus\_j}$ represents a sum of first energy values of the N direct current coupling units, and $1 \leq j \leq N$.

S2303: The main controller determines M fourth direct current coupling units in the N direct current coupling units.

In a possible implementation, the initial second candidate network input power value of the fourth direct current coupling unit is greater than or equal to the second amplitude limiting value corresponding to the fourth direct current coupling unit, and M is a positive integer.

It should be noted that the fourth direct current coupling unit may be understood as a direct current coupling unit in the second amplitude limiting state after the current calculation.

S2304: The main controller performs determining based on the M fourth direct current coupling units.

When M=0, S2305: The main controller determines that second network input power values of the N direct current coupling units are the initial second candidate network input power values corresponding to the N direct current coupling units, and ends the second iterative calculation.

In other words, when M=0, none of the N direct current coupling units is in the second amplitude limiting state after the current calculation, and the main controller may allocate, to the energy storage units in the N direct current coupling units, initial second candidate network input power values corresponding to the energy storage units to enter the power grid.

When M=N, S2306: The main controller determines that second network input power values of the M fourth direct current coupling units are the second amplitude limiting values corresponding to the M fourth direct current coupling units, and ends the second iterative calculation.

In other words, when M=N, all the N direct current coupling units are in the second amplitude limiting state after the current calculation, and the main controller allocates, to the energy storage units in the N direct current coupling units, the second amplitude limiting values corresponding to the energy storage units to enter the power grid.

When 0<L<N, S2307: The main controller determines that the second network input power values of the M fourth direct current coupling units are the second amplitude limiting values corresponding to the M fourth direct current coupling units.

The main controller first allocates the second network input power values to the M fourth direct current coupling units, and then performs S2308.

S2308: The main controller determines $M_1$ third direct current coupling units.

The $M_1$ third direct current coupling units are direct current coupling units to which no second network input power values are allocated in the previous second iterative calculation, $M_1$ is a positive integer, and $M_1 \leq N$.

It should be noted that the third direct current coupling units may also be understood as direct current coupling units whose second candidate network input power values obtained through calculation in the previous second iterative calculation are less than the second amplitude limiting values corresponding to the direct current coupling units.

S2309: The main controller determines a reference energy storage network input demand power.

In a possible implementation, the main controller determines the reference energy storage network input demand power according to the following formula:

$$P_{pref\_2} = P_2 - \sum_{j \notin M_1} p_{bus\_bat\_to\_grid\_j} \qquad (14)$$

where $P_{pref\_2}$ is the reference energy storage network input demand power, $\sum_{j \notin M_1} p_{bus\_bat\_to\_grid\_j}$ is a sum of second network input power values of the direct current coupling units to which the second network input power values have been allocated, and $p_{bus\_bat\_to\_grid\_j}$ is the second network input power value of a $j^{th}$ direct current coupling unit in the direct current coupling units to which the second network input power values have been allocated.

S2310: The main controller calculates second candidate network input power values of the $M_1$ third direct current coupling units.

In a possible implementation, the main controller determines the second candidate network input power values of the $M_1$ third direct current coupling units according to the following formula:

$$p_{bus\_bat\_to\_grid\_j} = P_{pref\_2} \frac{SOE_{bus\_j}}{\sum_{j \in M_1} SOE_{bus\_j}} \qquad (15)$$

where $p_{bus\_bat\_to\_grid\_j}$ represents a second candidate network input power value of a $j^{th}$ third direct current coupling unit in the $M_1$ third direct current coupling units, $P_{pref\_1}$ represents a reference energy storage network input demand power, the reference energy storage network input demand power is a difference that is obtained by subtracting a sum of second network input power values that have been allocated to the direct current coupling unit in the previous second iterative calculation from the energy storage network input demand power, $SOE_{bus\_j}$ represents the first energy value of the $j^{th}$ third direct current coupling unit in the $M_1$ third direct current coupling units, $\sum_{j \in M_1} SOE_{bus\_j}$ represents a sum of the first energy values of the $M_1$ third direct current coupling units, and $1 \leq j \leq M_1$.

S2311: The main controller determines $M_2$ fourth direct current coupling units in the $M_1$ third direct current coupling units.

The second candidate network input power values that are of the $M_2$ fourth direct current coupling units and that are obtained through calculation in S2310 are greater than or equal to the second amplitude limiting values corresponding to the fourth direct current coupling units, and $M_2$ is a positive integer.

S2312: The main controller determines second network input power values of the $M_2$ fourth direct current coupling units.

The $M_2$ fourth direct current coupling units are in the second amplitude limiting state. In other words, the main controller determines to allocate, to each of the $M_2$ fourth direct current coupling units, the second amplitude limiting value corresponding to the fourth direct current coupling unit to enter the power grid.

S2313: The main controller performs determining based on the $M_1$ third direct current coupling units and the $M_2$ fourth direct current coupling units.

When $M_1 = M_2$, S2314: The main controller determines to end the plurality of rounds of second iterative calculation.

In this case, in S2312, the second amplitude limiting values corresponding to all the $M_1$ third direct current coupling units to which no second network input power values are allocated previously are allocated as the second network input power values.

When $M_1 > M_2 > 0$, go back to S2308 to perform recalculation.

When $M_2 = 0$, S2315: The main controller determines second network input power values of the $M_1$ third direct current coupling units, and ends the plurality of rounds of second iterative calculation.

The second network input power values of the $M_1$ third direct current coupling units are corresponding second candidate network input power values.

In this case, in this round of calculation, none of the $M_1$ third direct current coupling units is in the second amplitude limiting state, and all the network input power required by the energy storage unit is allocated.

Therefore, in this application, the main controller in the power system may obtain the maximum discharging power that can be currently supplied by the energy storage unit in the direct current coupling unit to the power grid, namely the second amplitude limiting value. The main controller allocates the second network input power value to each direct current coupling unit based on the second amplitude limiting value and the energy storage network input demand power. This can avoid reduction of running reliability of the power system caused by a power component in the power system that exceeds the amplitude limit, thereby improving running reliability of the power system. In addition, the energy storage units in the power system can perform equalized discharging, thereby prolonging the life cycle of power components in the energy storage units.

FIG. 9 is a schematic flowchart of a method 300 for allocating a first inversion power to an inverter unit according to an embodiment of this application. The method 300 may be applied to a power system, and the power system includes N direct current coupling units, N direct current buses, and a main controller.

For clarity, the following uses a photovoltaic power system in which solar energy is converted into electric energy as an example for description.

S310: The main controller obtains discharging demand powers of the N direct current coupling units.

The discharging demand power indicates a power that is allocated to the energy unit in each direct current coupling unit and that is used to charge the energy storage unit in each of the N direct current coupling units.

S320: The main controller obtains discharging demand powers of the N direct current coupling units.

The charging demand power indicates a power that is allocated to the energy storage unit in each direct current coupling unit and that is obtained from the energy unit in each of the N direct current coupling units.

S330: The main controller determines a first inversion power value of each direct current coupling unit based on the discharging demand powers of the N direct current coupling units and the charging demand powers of the N direct current coupling units.

The first inversion power value indicates a power at which the inverter unit in each direct current coupling unit supplies electric energy to the power grid, or the first inversion power value indicates a power at which the inverter unit in each direct current coupling unit absorbs electric energy from the power grid.

In a possible implementation, with reference to the following steps S311 to S319, a manner of obtaining the discharging demand power of each direct current coupling unit in step S310 is described.

S311: The main controller obtains a first power value of each of the N direct current coupling units.

The first power value is a maximum discharging power of the energy unit in each direct current coupling unit.

A manner in which the main controller obtains the first power value may be similar to the manner described in S 121 in the method 100. For brevity, details are not described herein again.

S312: The main controller obtains a total first network input power value of the N direct current coupling units.

The total first network input power value is a total power value that is allocated to the energy units in the N direct current coupling units and that is input to the power grid.

The main controller may determine the first network input power value of each of the N direct current coupling units. The total first network input power value is a sum of the first network input power values of the N direct current coupling units. A process for determining the first network input power value of each of the N direct current coupling units may be similar to the process described in the method 100. Details are not described herein again.

In other words, the total first network input power value $P_{energy\_to\_grid}$ is:

$$P_{energy\_to\_grid} = \sum P_{bus\_energy\_to\_grid\_j} \tag{16}$$

$P_{bus\_energy\_to\_grid\_j}$ is the first network input power value of a $j^{th}$ direct current coupling unit in the N direct current coupling units.

S313: The main controller obtains a third power value of each of the N direct current coupling units.

The third power value is a maximum discharging power of the energy storage unit in each direct current coupling unit.

A manner in which the main controller obtains the third power value may be similar to the manner described in S222 in the method 200. For brevity, details are not described herein again.

S314: The main controller determines whether the total first network input power value of the N direct current coupling units meets a requirement of the power grid.

When the total first network input power value is equal to the total demand power of the power grid, the main controller determines that the total first network input power value of the N direct current coupling units meets the requirement of the power grid.

In other words, when the energy units of the N direct current coupling units meet the requirement of the power grid, remaining power of the energy units in the N direct current coupling units may be allocated to the energy storage units in the N direct current coupling units for storage, thereby improving utilization of new-energy electric energy.

When the main controller determines that the total first network input power value of the N direct current coupling units meets the requirement of the power grid, the main controller determines, according to the total first network input power value, a total charging demand power.

The total charging demand power is a total power that is allocated to the energy storage units in N direct current coupling units and that is obtained from the energy units in the N direct current coupling units.

In a possible manner, S315: The main controller determines a first charging capability value of the N direct current coupling units.

The first charging capability value is a capability value of electric energy that can be supplied by the energy units in the N direct current coupling units to the energy storage unit.

The main controller may determine, according to the following formula, the first charging capability value $p_{\max\_energy\_to\_bat\_1}$ of the energy unit in the N direct current coupling units for the energy storage unit as follows:

$$p_{\max\_energy\_to\_bat\_1} = \sum_{j \in N} p_{bus\_\max\_energy\_j} - p_{energy\_to\_grid} \qquad (17)$$

where $p_{bus\_\max\_energy\_j}$ is a first power value of the $j^{th}$ direct current coupling unit in the N direct current coupling units,

and $\sum_{j \in N} p_{bus\_\max\_energy\_j}$ is a sum of the first power values of the N direct current coupling units.

In other words, when the energy units in the N direct current coupling units have supplied the first network input power value to the power grid, the first charging capability value is a remaining dischargeable power value of the energy units in the N direct current coupling units.

S316: The main controller obtains a maximum charging power of an energy storage unit in each of the N direct current coupling units.

In a possible implementation, when the energy storage unit in each direct current coupling unit includes at least one energy storage cell and at least one energy storage controller, the main controller may obtain the maximum charging power of a corresponding energy storage cell from the at least one energy storage controller, and may further obtain the maximum charging power of each energy storage controller.

The main controller determines the maximum charging power of the energy storage unit in each direct current coupling unit based on the maximum charging power of the at least one energy storage cell and the maximum charging power of the at least one energy storage controller, where the maximum charging power $P_{bus\_\max\_bat\_charge\_j}$ of the energy storage unit in the $j^{th}$ direct current coupling unit in the N direct current coupling units is:

$$p_{bat\_\max\_charge\_j} = \sum \min(p_{bat\_\max\_charge\_ji}, p_{dcdc\_\max\_charge\_ji}) \qquad (18)$$

where $P_{bat\_\max\_charge\_ji}$ is a maximum charging power of an $i^{th}$ energy storage cell in the $j^{th}$ direct current coupling unit, and $P_{dcdc\_\max\_charge\_ji}$ is a maximum charging power of an $i^{th}$ energy storage controller in the $j^{th}$ direct current coupling unit.

In other words, the final maximum charging power of the energy storage cell and the corresponding energy storage controller is a minimum value in the maximum charging powers of the energy storage cell and the corresponding energy storage controller, and the maximum charging power of the energy storage unit in the direct current coupling unit is a sum of the final maximum charging powers of all energy storage cells in the direct current coupling unit and the corresponding energy storage controller.

It should be noted that one energy storage controller may control one or more energy storage cells. This is not limited in this application.

S317: The main controller determines a second charging capability value of the N direct current coupling units.

The second charging capability value is a capability value of electric energy that can be accepted by the energy storage units in the N direct current coupling units.

In a possible implementation, the main controller may obtain the second charging capability value $p_{max\_bat\_charge}$ according to the following formula:

$$p_{\max\_bat\_charge} = \sum_{j \in N} p_{bus\_\max\_bat\_charge\_j} \tag{19}$$

In other words, the second charging capability value of the N direct current coupling units is a sum of the maximum charging power values of the energy storage units in each of the N direct current coupling units.

S318: The main controller obtains a total charging demand power.

The total charging demand power is a total power that is allocated to the energy storage units in N direct current coupling units and that is obtained from the energy units in the N direct current coupling units.

In a possible implementation, the main controller may determine the total charging demand power according to the following formula:

$$p_{\max\_energy\_to\_bat} = \min(p_{\max\_bat\_charge}, p_{\max\_energy\_to\_bat\_1}) \tag{20}$$

In other words, the main controller may determine a minimum value in the first charging capability value and the second charging capability value as the total charging demand power.

S319: The main controller obtains a discharging demand power of each of the N direct current coupling units.

In a possible manner, the main controller may determine a discharging demand power of each of the N direct current coupling units according to the following formula, where a discharging demand power $p_{bus\_energy\_to\_bat\_j}$ of the $j^{th}$ direct current coupling unit is:

$$p_{bus\_energy\_to\_bat\_j} = p_{\max\_energy\_to\_bat} \frac{p_{bus\_\max\_energy\_j}}{\sum_{j \in N} p_{bus\_\max\_energy\_j}} \tag{21}$$

In other words, the total discharging demand power may be allocated to each of the N direct current coupling units based on the first power value of each direct current coupling unit, namely a ratio of a maximum discharging power value of an energy unit in the direct current coupling unit to a sum of the first power values of the N direct current coupling units, so as to obtain a power that is allocated to the energy unit in each direct current coupling unit and that is used for storage.

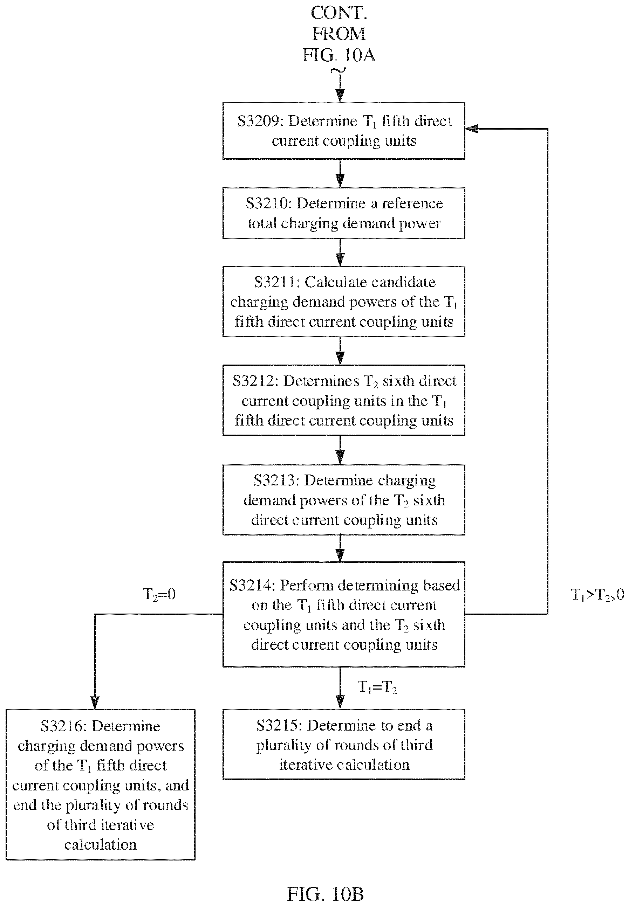

In a possible implementation, with reference to FIG. 10A and FIG. 10B, a manner of obtaining the charging demand power of each direct current coupling unit in step S320 in FIG. 9 is described. FIG. 10A and FIG. 10B are a schematic flowchart of obtaining the charging demand power.

The main controller may perform third iterative calculation, to determine the charging demand power of each of the N direct current coupling units.

S3201: The main controller obtains third amplitude limiting values of the N direct current coupling units.

The third amplitude limiting value indicates a maximum charging power that can be supplied by the energy storage unit in each of the N direct current coupling units.

In a possible implementation, the third amplitude limiting value of each direct current coupling unit may be the maximum charging power of each energy storage unit.

S3202: The main controller obtains a second energy value of each of the N direct current coupling units.

The second energy value is a difference between a sum of storable electric energy values and a stored electric energy value that are of the energy storage unit in each direct current coupling unit.

The main controller may obtain, from the energy storage unit, a sum of electric energy values that can be supplied by the energy storage unit in each direct current coupling unit. Alternatively, the sum of electric energy values that can be supplied by the energy storage unit in each direct current coupling unit may be preconfigured in the main controller.

It should be noted that the electric energy value stored in the energy storage unit in each of the N direct current coupling units may be understood as the first energy value in the method 200, namely the electric energy currently stored in the energy storage unit in each of the N direct coupling units. Therefore, the obtaining manner may be similar to the obtaining manner in step S2301 in the method 200. For brevity, details are not described herein again.

S3203: The main controller calculates the initial candidate charging demand powers of the N direct current coupling units.

In a possible implementation, the main controller determines an initial candidate charging demand power of each of the N direct current coupling units according to the following formula, where the initial candidate charging demand power of a j$^{th}$ direct current coupling unit is:

$$p_{bus\_bat\_charge\_j} = p_{\max\_energy\_to\_bat} \frac{SOE_{bus\_able\_j}}{\sum\limits_{j \in N} SOE_{bus\_able\_j}} \qquad (22)$$

where $p_{bus\_bat\_charge\_j}$ represents the initial candidate charging demand power of the j$^{th}$ direct current coupling unit in the N direct current coupling units, $SOE_{bus\_able\_j}$ represents the second energy value of the j$^{th}$ direct current coupling unit in the N direct current coupling units, $\sum\limits_{j \in N} SOE_{bus\_able\_j}$ is a sum of second energy values of the N direct current coupling units, and $1 \leq j \leq N$.

S3204: The main controller determines T sixth direct current coupling units in the N direct current coupling units.

In a possible implementation, an initial candidate charging demand power of the sixth direct current coupling unit is greater than or equal to the third amplitude limiting value corresponding to the sixth direct current coupling unit, and T is a positive integer.

It should be noted that the sixth direct current coupling unit may be understood as a direct current coupling unit in the third amplitude limiting state after the current calculation.

S3205: The main controller performs determining based on the T sixth direct current coupling units.

When T=0, S3206: The main controller determines that the charging demand powers of the N direct current coupling units are the initial candidate charging demand powers corresponding to the N direct current coupling units, and ends the third iterative calculation.

In other words, when T=0, none of the N direct current coupling units is in the third amplitude limiting state after the current calculation, and the main controller may determine that the charging demand powers of the N direct current coupling units are the initial candidate charging demand powers corresponding to the N direct current coupling units.

When T=N, S3207: The main controller determines that the charging demand powers of the T sixth direct current coupling units are the third amplitude limiting values corresponding to the T sixth direct current coupling units, and ends the third iterative calculation.

In other words, when T=N, all the N direct current coupling units are in the third amplitude limiting state after the current calculation, and the main controller may determine that the charging demand powers of the N direct current coupling units are the third amplitude limiting values corresponding to the N direct current coupling units.

When 0<T<N, S3208: The main controller determines that the charging demand powers of the T sixth direct current coupling units are the third amplitude limiting values corresponding to the T sixth direct current coupling units.

The main controller first allocates charging demand powers to the T sixth direct current coupling units, and then performs S3209.

S3209: The main controller determines T$_1$ fifth direct current coupling units.

The T$_1$ fifth direct current coupling units are direct current coupling units to which no charging demand powers are allocated in the previous third iterative calculation, T$_1$ is a positive integer, and T$_1 \leq N$.

It should be noted that the fifth direct current coupling units may also be understood as direct current coupling units whose candidate charging demand powers obtained through calculation in the previous third iterative calculation are less than the third amplitude limiting values corresponding to the direct current coupling units.

S3210: The main controller determines a reference total charging demand power.

In a possible implementation, the main controller determines the reference total charging demand power according to the following formula:

$$p_{pref\_3} = p_{\max\_energy\_to\_bat} - \sum\limits_{j \notin T_1} p_{bus\_bat\_charge\_j} \qquad (23)$$

where $p_{pref\_3}$ is the reference total charging demand power, $\sum\limits_{j \notin T_1} p_{bus\_bat\_charge\_j}$ is a sum of charging demand powers of direct current coupling units to which the charging demand powers have been allocated, and $p_{bus\_bat\_charge\_j}$ is the charging demand power of a $j^{th}$ direct current coupling unit in the direct current coupling units to which the charging demand powers have been allocated.

S3211: The main controller calculates candidate charging demand powers of the $T_1$ fifth direct current coupling units.

In a possible implementation, the main controller determines the candidate charging demand powers of the $T_1$ fifth direct current coupling units according to the following formula:

$$p_{bus\_bat\_charge\_j} = P_{pref\_3} \frac{SOE_{bus\_able\_j}}{\sum_{j \in T_1} SOE_{bus\_able\_j}} \tag{24}$$

where $p_{bus\_bat\_charge\_j}$ represents the candidate charging demand power of the $j^{th}$ fifth direct current coupling unit in the $T_1$ fifth direct current coupling units, $p_{pref\_3}$ represents a reference total charging demand power, $SOE_{bus\_able\_j}$ represents the second energy value of the $j^{th}$ fifth direct current coupling unit in the $T_1$ fifth direct current coupling units,

$$\sum_{j \in T_1} SOE_{bus\_able\_j}$$

represents a sum of the second energy values of the $T_1$ fifth direct current coupling units, and $1 \leq j \leq T_1$.

S3212: The main controller determines $T_2$ sixth direct current coupling units in the $T_1$ fifth direct current coupling units.

The candidate charging demand power values that are of the $T_2$ sixth direct current coupling units and that are obtained through calculation in S3211 are greater than or equal to the third amplitude limiting values corresponding to the $T_2$ sixth direct current coupling units, and $T_2$ is a positive integer.

S3213: The main controller determines charging demand powers of the $T_2$ sixth direct current coupling units.

The $T_2$ sixth direct current coupling units are in the third amplitude limiting state. In other words, the main controller determines that the charging demand powers of the Tz sixth direct current coupling units are the third amplitude limiting values corresponding to the $T_2$ sixth direct current coupling units.

S3214: The main controller performs determining based on the $T_1$ fifth direct current coupling units and the $T_2$ sixth direct current coupling units.

When $T_1=T_2$, S3215: The main controller determines to end the plurality of rounds of third iterative calculation.

In this case, in S3213, the third amplitude limiting values corresponding to all the $T_1$ fifth direct current coupling units to which no charging demand powers are allocated previously are allocated as the charging demand powers.

When $T_1 > T_2 > 0$, go back to S3209 to perform recalculation.

When $T_2=0$, S3216: The main controller determines charging demand powers of the $T_1$ fifth direct current coupling units, and ends the plurality of rounds of third iterative calculation.

The charging demand powers of the $T_1$ fifth direct current coupling units are corresponding reference charging demand powers.

In this case, in this round of calculation, none of the $T_1$ fifth direct current coupling units is in the third amplitude limiting state, and the total charging demand power is allocated.

In other words, after the third iterative calculation, the main controller may determine the charging demand powers of the N direct current coupling units.

In a possible implementation, a manner of obtaining the first inversion power value in step S330 in FIG. 9 is described with reference to the following steps S3301 to S3309.

S3301: The main controller determines an exchange power of each of N direct current coupling units.

The exchange power is obtained by subtracting a charging demand power corresponding to each of the N direct current coupling units from a discharging demand power of the direct current coupling unit.

In other words, the exchange power $p_{bus\_pcs\_to\_other\_j}$ of a $j^{th}$ direct current coupling unit in the N direct current coupling units is:

$$p_{bus\_pcs\_to\_other\_j} = p_{bus\_energy\_to\_bat\_j} - p_{bus\_bat\_charge\_j} \tag{25}$$

S3302: The main controller selects first candidate inversion powers of the N direct current coupling units.

In a possible implementation, when a power value (namely, a first network input power value) that is input to a power grid has been allocated to an energy unit in the direct current coupling unit, the first candidate inversion power of each of the N direct current coupling units is a sum of the exchange power of each direct current coupling unit and a corresponding first network input power value, and the first candidate inversion power value $p_{bus\_pcs\_to\_grid\_j\_1}$ of the jth direct current coupling unit in the N direct current coupling units is:

$$p_{bus\_pcs\_to\_grid\_j\_1} = p_{bus\_pcs\_to\_other\_j} + p_{bus\_energy\_to\_grid\_j} \qquad (26)$$

In other words, an inverter unit in the direct current coupling unit needs to bear a power value output by an energy unit in a same direct current coupling unit. Therefore, an inversion power actually borne on the inverter unit is related to the power that is of the energy unit in the same direct current coupling unit and that is input to the power grid, a power at which the energy unit charges the energy storage unit, and a charging power of the energy unit in the same direct current coupling unit.

S3303: The main controller obtains a second power value of each of the N direct current coupling units.

The second power value is a maximum discharging power of the inverter unit in each direct current coupling unit.

When the inverter unit in each direct current coupling unit includes at least one inverter, a method for obtaining the second power value by the main controller may be similar to S122 in the method 120.

S3304: The main controller determines a discharging adjustment demand value.

The discharging adjustment demand value is a sum of differences that are obtained by subtracting a corresponding second power value from the first candidate inversion power value of each direct current coupling unit that is in the N direct current coupling units and whose first candidate inversion power value is greater than 0 and greater than the corresponding second power value.

In other words, the discharging adjustment demand value *Delta_pos_sum* is:

$$Delta\_pos\_sum = \sum_{\substack{p_{bus\_pcs\_to\_grid\_j\_1} > 0 \\ p_{bus\_pcs\_to\_grid\_j\_1} > p_{bus\_max\_pcs\_discharge\_j}}} p_{bus\_pcs\_to\_grid\_j\_1} - p_{bus\_max\_pcs\_discharge\_j} \qquad (27)$$

It should be noted that, that the first candidate inversion power value of the direct current coupling unit is greater than 0 may be understood as that the inverter unit of the direct current coupling unit is in a discharging state. It may be considered whether the first candidate inversion power value of the direct current coupling unit exceeds a maximum discharging power value of the inverter unit. If the first candidate inversion power value of the direct current coupling unit exceeds a maximum discharging power value of the inverter unit, it indicates that the direct current coupling unit cannot bear the first candidate inversion power, and the amplitude of the inverter unit is limited. The discharging adjustment demand value is a sum of differences that are obtained by subtracting a corresponding second power value from the power value of each inverter unit in each of the direct current coupling units that are in the N direct current coupling units and whose amplitudes of the inverter units are limited.

S3305: The main controller determines a charging adjustment demand value.

The charging adjustment demand value is a sum of differences that are obtained by subtracting a corresponding first candidate inversion power value from a fourth power value of each direct current coupling unit that is in the N direct current coupling units and whose first candidate inversion power value is less than 0 and less than the corresponding fourth power value.

The fourth power value is a maximum charging power of the inverter unit in each direct current coupling unit.

In a possible implementation, when the inverter unit in each direct current coupling unit includes at least one inverter, the main controller obtains the maximum charging power of each inverter, where a maximum charging power of an ith inverter in the inverter unit in the jth direct current coupling unit is $p_{pcs\_max\_charge\_ji}$.

The main controller determines the maximum charging power of the inverter unit in each of the N direct current coupling units based on the maximum charging power of the at least one inverter, where the maximum charging power of the inverter unit in the jth direct current coupling unit, namely a fourth power value $p_{buy\_max\_pcs\_charge\_j}$, is:

$$p_{bus\_max\_pcs\_charge\_j} = \sum p_{pcs\_max\_charge\_ji} \cdot$$

In other words, the maximum charging power of the inverter unit in each direct current coupling unit is a sum of the maximum charging powers of all inverters in the inverter unit in each direct current coupling unit.

In other words, the charging adjustment demand value *Delta_neg_sum* is:

$$Delta\_neg\_sum = \sum_{\substack{p_{bus\_pcs\_to\_grid\_j\_1}<0 \\ p_{bus\_pcs\_to\_grid\_j\_1}<p_{bus\_max\_pcs\_charge\_j}}} p_{bus\_max\_pcs\_charge\_j} - p_{bus\_pcs\_to\_grid\_j\_1} \qquad (28)$$

A negative sign of the first candidate inversion power value and the fourth power value represents that a power direction is a charging direction. The charging direction may be understood as a direction from a power grid to an energy storage unit through an inverter unit, and an absolute value of the charging direction represents the magnitude of the power value.

It should be noted that, that the first candidate inversion power value of the direct current coupling unit is less than 0 may be understood as that the inverter unit of the direct current coupling unit is in a charging state. It may be considered whether an absolute value of the first candidate inversion power value of the direct current coupling unit exceeds a maximum charging power value of the inverter unit. If the first candidate inversion power value of the direct current coupling unit exceeds a maximum charging power value of the inverter unit, it indicates that the direct current coupling unit cannot bear the first candidate inversion power, and the amplitude of the inverter unit is limited. The discharging adjustment demand value is a sum of differences that are obtained by subtracting a corresponding fourth power value from the power value of each inverter unit in each of the direct current coupling units that are in the N direct current coupling units and whose amplitudes of the inverter units are limited.

S3306: The main controller determines an adjustment demand power.

The adjustment demand power is an absolute value of a difference that is obtained by subtracting the charging adjustment demand value from the discharging adjustment demand value.

In other words, the adjustment demand power *Delta* is:

$$Delta = | Delta\_pos\_\max - Delta\_neg\_\max | \qquad (29)$$

S3307: The main controller obtains an adjustment proportion value of each of the N direct current coupling units.

The adjustment proportion value is a proportion of an exchange power value of each direct current coupling unit to a sum of exchange power values of direct current coupling units whose exchange power values are greater than 0.

In other words, the adjustment proportion value of a $j^{th}$ direct current coupling unit in the N direct current coupling units is:

$$K_{bus\_j} = \frac{p_{bus\_pcs\_to\_other\_j}}{p_{bus\_pcs\_to\_other}} \qquad (30)$$

where

$$p_{bus\_pcs\_to\_other} = \sum_{p_{bus\_pcs\_to\_other\_j}>0} p_{bus\_pcs\_to\_other\_j} \qquad (31)$$

S3308: The main controller determines a second candidate inversion power value of each of the N direct current coupling units.

The second candidate inversion power value of the direct current coupling unit whose first candidate inversion power value is greater than 0 is a minimum value in a corresponding first candidate inversion power value and a corresponding second power value, and the second candidate inversion power value of the direct current coupling unit whose first candidate inversion power value is less than 0 is a maximum value in a corresponding first candidate inversion power value and a corresponding fourth power value.

In other words:

if $p_{bus\_pcs\_to\_grid\_j\_1} > 0$,

$$p_{bus\_pcs\_to\_grid\_j\_2} = \min( p_{bus\_pcs\_to\_grid\_j\_1}, p_{bus\_max\_pcs\_discharge\_j} ) \qquad (32)$$

if $p_{bus\_pcs\_to\_grid\_j\_1} < 0$,

$$p_{bus\_pcs\_to\_grid\_j\_2} = \max(p_{bus\_pcs\_to\_grid\_j\_1}, p_{bus\_max\_pcs\_charge\_j}) \tag{33}$$

where $p_{bus\_pcs\_to\_grid\_j\_2}$ represents a second candidate inversion power value of a $j^{th}$ direct current coupling unit in the N direct current coupling units, $p_{bus\_pcs\_to\_grid\_j\_1}$ represents the first candidate inversion power value of the $j^{th}$ direct current coupling unit in the N direct current coupling units, $p_{bus\_max\_pcs\_discharge\_j}$ represents the second power value of the $j^{th}$ direct current coupling unit in the N direct current coupling units, and $p_{bus\_max\_pcs\_charge\_j}$ represents the fourth power value of the $j^{th}$ direct current coupling unit in the N direct current coupling units.

S3309: When the main controller determines that the discharging demand power is greater than the charging demand power, determine that the first inversion power value of the direct current coupling unit whose exchange power value is less than 0 is a difference that is obtained by subtracting a product of an adjustment demand power and a corresponding adjustment proportion value from a corresponding second candidate inversion power value, and determine that the first inversion power value of the direct current coupling unit whose exchange power is greater than 0 is a corresponding second candidate inversion power value.

In other words,

if *Delta_pos_*max > *Delta_neg_*max,
the first inversion power value of the direct current coupling unit whose $p_{bus\_pcs\_to\_other\_j}$ < 0 is:

$$p_{bus\_pcs\_to\_grid\_j} = p_{bus\_pcs\_to\_grid\_j\_2} - Delta * K_{bus\_j} \tag{34}$$

the first inversion power value of the direct current coupling unit whose $p_{bus\_pcs\_to\_other\_j}$ > 0 is:

$$p_{bus\_pcs\_to\_grid\_j} = p_{bus\_pcs\_to\_grid\_j\_2} \tag{35}$$

if *Delta_pos_* max < *Delta_neg_*max ,
the first inversion power value of the direct current coupling unit whose $p_{bus\_pcs\_to\_other\_j}$ < 0 is:

$$p_{bus\_pcs\_to\_grid\_j} = p_{bus\_pcs\_to\_grid\_j\_2} \tag{36}$$

the first inversion power value of the direct current coupling unit whose $p_{bus\_pcs\_to\_other\_j}$ > 0 is:

$$p_{bus\_pcs\_to\_grid\_j} = p_{bus\_pcs\_to\_grid\_j\_2} - Delta * K_{bus\_j} \tag{37}$$

In a possible implementation, if the inverter unit in the direct current coupling unit includes a plurality of inverters, the first inversion power value may be allocated based on a ratio of the maximum discharging power of each inverter to the second power value, or the first inversion power value may be allocated based on a ratio of the maximum charging power of each inverter to the fourth power value.

For example, if $p_{bus\_pcs\_to\_grid\_j}$ > 0,

$$p_{pcs\_to\_grid\_ji} = p_{bus\_pcs\_to\_grid\_j} \frac{p_{pcs\_max\_discharge\_ji}}{p_{bus\_max\_pcs\_discharge\_j}} \tag{38}$$

if $p_{bus\_pcs\_to\_grid\_j}$ < 0,

$$p_{pcs\_to\_grid\_ji} = p_{bus\_pcs\_to\_grid\_j} \frac{p_{pcs\_max\_charge\_ji}}{p_{bus\_max\_pcs\_charge\_j}} \tag{39}$$

where $p_{pcs\_to\_grid\_ji}$ represents an inversion power of an $i^{th}$ inverter in the inverter unit in a $j^{th}$ direct current coupling unit, $p_{pcs\_max\_discharge\_ji}$ represents the maximum discharging power of the $i^{th}$ inverter in the inverter unit in the $j^{th}$ direct current coupling unit, and $p_{pcs\_max\_charge\text{-}ji}$ represents the maximum charging power of the $i^{th}$ inverter in the inverter unit in the

j<sup>th</sup> direct current coupling unit.

Therefore, in this application, the first inversion power value of the inverter unit in each of the N direct current coupling units may be determined, so that electric energy generated by the energy unit of the direct current coupling unit is charged to the energy storage unit of the direct current coupling unit and/or another direct current coupling unit, thereby reducing an electric energy waste of the energy unit.

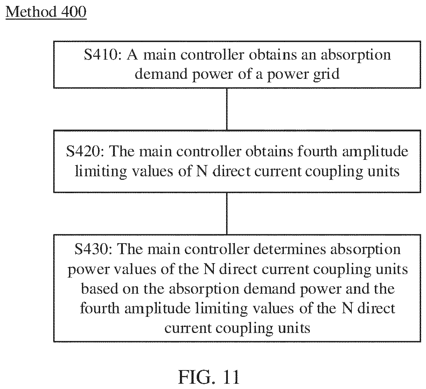

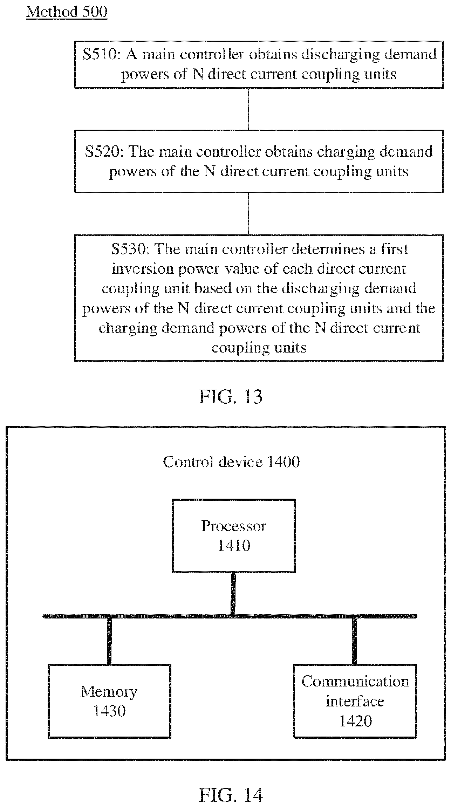

With reference to FIG. 11 and FIG. 13, the following describes a scenario in which the power grid schedules power to absorb power from the power grid.

It should be noted that FIG. 11 shows a method 400 for allocating an absorption power to an energy storage unit, and FIG. 13 shows a method 500 for allocating a first inversion power to an inverter unit. The method 400 and the method 500 may be independently used in a power system, or may be used together in the power system.

For example, when the method 400 and the method 500 are used together, it may be understood that the method 400 is used to allocate an absorption power to an energy storage unit in the direct current coupling system. If the energy storage unit can meet a scheduling requirement of a power grid, the method 500 may be used to allocate a first inversion power to an inverter unit in the direct current coupling system, so that remaining capacity of the energy storage unit can store electric energy generated by the energy unit.

FIG. 11 is a schematic flowchart of a method 400 for allocating an absorption power to an energy storage unit according to an embodiment of this application. The method 400 may be applied to a power system, and the power system includes N direct current coupling units, N direct current buses, and a main controller.

For clarity, the following uses a photovoltaic power system in which solar energy is converted into electric energy as an example for description.

S410: The main controller obtains an absorption demand power of the power grid.

The absorption demand power is a power that needs to be absorbed by an energy storage unit in the N direct current coupling units from the power grid.

S420: The main controller obtains fourth amplitude limiting values of the N direct current coupling units.

The fourth amplitude limiting value indicates a maximum charging power that can be supplied by each direct current coupling unit.

S430: The main controller determines absorption power values of the N direct current coupling units based on the absorption demand power and the fourth amplitude limiting values of the N direct current coupling units.

The absorption power value is a power value that is allocated to the energy unit in each direct current coupling unit and that is of the power grid, where at least one of the N direct current coupling units is in a fourth amplitude limiting state, and the fourth amplitude limiting state is that an absorption power value allocated to a direct current coupling unit is equal to a fourth amplitude limiting value corresponding to the direct current coupling unit.

In a possible implementation, a manner of obtaining the fourth amplitude limiting value in step S420 in FIG. 11 is described with reference to the following steps S421 to S423.

S421: The main controller obtains an absolute value of a fourth power value of each of the N direct current coupling units.

The fourth power value is a maximum charging power of the inverter unit in each direct current coupling unit.

In a possible implementation, when the inverter unit in each direct current coupling unit includes at least one inverter, the main controller obtains the maximum charging power of each inverter, where a maximum charging power of an i<sup>th</sup> inverter in the inverter unit in the j<sup>th</sup> direct current coupling unit is $P_{pcs\_max\_charge\_ji}$.

The main controller determines the maximum charging power of the inverter unit in each of the N direct current coupling units based on the maximum charging power of the at least one inverter, where the maximum charging power of the inverter unit in the j<sup>th</sup> direct current coupling unit, namely a fourth power value $P_{bus\_max\_pcs\text{-}charge\_j}$, is:

$$P_{bus\_\max\_pcs\_charge\_j} = \sum P_{pcs\_\max\_charge\_ji} \tag{40}$$

In other words, the maximum charging power of the inverter unit in each direct current coupling unit is a sum of the maximum charging powers of all inverters in the inverter unit in each direct current coupling unit.

S422: The main controller obtains a fifth power value of each of the N direct current coupling units.

The fifth power value is a maximum charging power of the energy storage unit in each direct current coupling unit.

In a possible implementation, when the energy storage unit in each direct current coupling unit includes at least one energy storage cell and at least one energy storage controller, the main controller may obtain the maximum charging power of a corresponding energy storage cell from the at least one energy storage controller, and may further obtain the maximum charging power of each energy storage controller.

The main controller determines the fifth power value of each direct current coupling unit based on the maximum charging power of the at least one energy storage cell and the maximum charging power of the at least one energy storage controller, where the fifth power value $P_{bus\_max\_bat\_charge\_j}$ of a j<sup>th</sup> direct current coupling unit in the N direct current coupling units is:

$$P_{bus\_\max\_bat\_charge\_j} = \sum \min(P_{bat\_\max\_charge\_ji}, P_{dcdc\_\max\_charge\_ji}) \qquad (41)$$

where $P_{bat\_max\_charge\_ji}$ is a maximum charging power of an $i^{th}$ energy storage cell in the $j^{th}$ direct current coupling unit, and $P_{dcdc\_max\_charge\_ji}$ is a maximum charging power of an $i^{th}$ energy storage controller in the $j^{th}$ direct current coupling unit.

In other words, the final minimum charging power of the energy storage cell and the corresponding energy storage controller is a maximum value of the maximum charging powers of the energy storage cell and the corresponding energy storage controller, and the maximum charging power of the energy storage unit in the direct current coupling unit is a sum of the final maximum charging powers of all the energy storage cells in the direct current coupling unit and the corresponding energy storage controller.

It should be noted that one energy storage controller may control one or more energy storage cells. This is not limited in this application.

S423: The main controller obtains fourth amplitude limiting values of the N direct current coupling units.

For example, the main controller determines a minimum value in the following as the fourth amplitude limiting value of each direct current coupling unit: an absolute value of the fourth power value of each direct current coupling unit and a fifth power value of each direct current coupling unit.

In other words, the fourth amplitude limiting value $P_{\lim\_4\_j}$ of the $j^{th}$ direct current coupling unit in the N direct current coupling units is:

$$P_{\lim\_4\_j} = \min(P_{bus\_\max\_bat\_charge\_j}, P_{bus\_\max\_pcs\_charge\_j}) \qquad (42)$$

In other words, an actual charging power of the energy storage unit in the direct current coupling unit needs to be limited by the inverter unit, to prevent the energy storage cell, the energy storage controller, or the inverter from running in an excessive amplitude, thereby avoiding reduction of reliability of the power system.

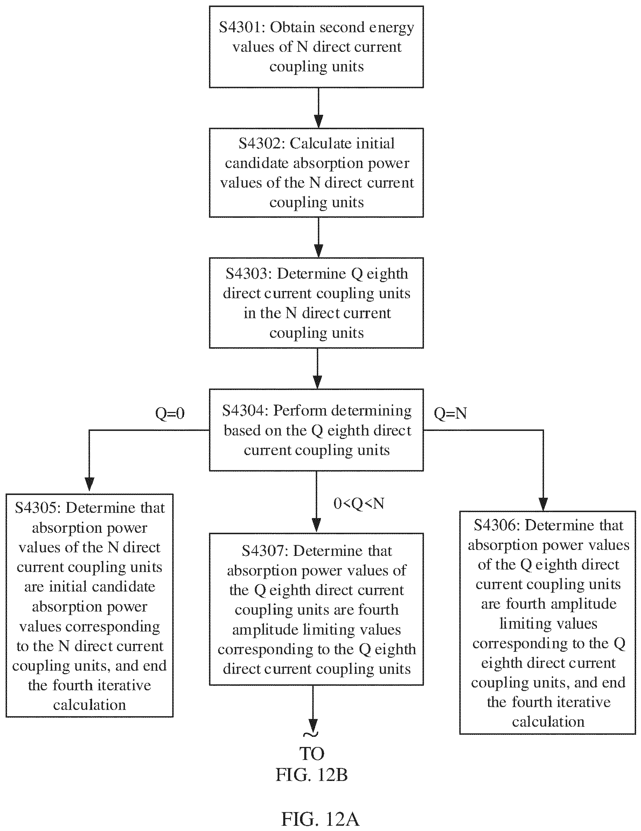

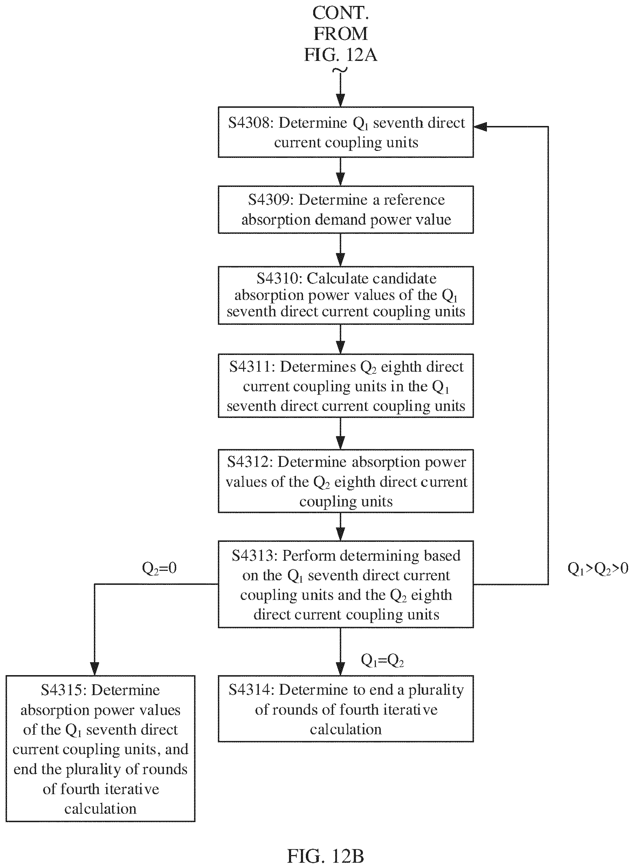

In a possible implementation, with reference to FIG. 12A and FIG. 12B, a manner of obtaining the absorption power value in step S430 in FIG. 11 is described. FIG. 12A and FIG. 12B are a schematic flowchart of obtaining the absorption power value.

S4301: The main controller obtains second energy values of the N direct current coupling units.

The second energy value is a difference between a sum of storable electric energy values and a stored electric energy value that are of the energy storage unit in each direct current coupling unit.

The first energy value is electric energy currently stored in the energy storage unit in each of the N direct current coupling units.

In a possible implementation, the main controller may obtain electric energy values that have been stored in the N direct current coupling units, and define the electric energy that has been stored in each of the N direct current coupling units, namely the currently stored electric energy, as the first energy value.

If the energy storage unit in each direct current coupling unit includes at least one energy storage cell, and the main controller may obtain electric energy currently stored in each energy storage cell in the energy storage unit in each direct current coupling unit.

The main controller determines a first energy value of each of the N direct current coupling units based on the electric energy currently stored in each energy storage cell, where the first energy value $SOE_{bus\_j}$ of a $j^{th}$ direct current coupling unit is:

$$SOE_{bus\_j} = \sum SOE_{ji} \qquad (43)$$

where $SOE_{ji}$ is the electric energy currently stored in the $i^{th}$ energy storage cell in the $j^{th}$ direct current coupling unit.

In other words, an energy storage unit in one direct current coupling unit may include a plurality of energy storage cells, and the first energy value of the direct current coupling unit is a sum of the electric energy currently stored in all energy storage cells in the direct current coupling unit.

Optionally, a sum of electric energy values that can be supplied by the energy storage unit in each direct current coupling unit may be obtained from the energy storage unit. Alternatively, the sum of electric energy values that can be supplied by the energy storage unit in each direct current coupling unit may be preconfigured in the main controller.

In other words, the second energy value $SOE_{bus\_able\_j}$ of the $j^{th}$ direct current coupling unit in the N direct current coupling units is:

$$SOE_{bus\_able\_j} = SOE_{bus\_full\_j} - SOE_{bus\_j} \tag{44}$$

where $SOE_{bus\_full\_j}$ is a sum of storable electric energy values of the $j^{th}$ direct current coupling unit, and $SOE_{bus\_j}$ is the stored electric energy value of the $j^{th}$ direct current coupling unit.

S4302: The main controller calculates initial candidate absorption power values of the N direct current coupling units.

In a possible implementation, the main controller determines the initial candidate absorption power value of each of the N direct current coupling units according to the following formula, where the initial candidate absorption power value of the $j^{th}$ direct current coupling unit is:

$$p_{bus\_bat\_from\_grid\_j} = p_{absorb} \frac{SOE_{bus\_able\_j}}{\sum\limits_{j \in N} SOE_{bus\_able\_j}} \tag{45}$$

where $p_{absorb}$ is the absorption demand power, $p_{bus\_bat\_from\_grid\_j}$ represents the initial candidate absorption power value of the $j^{th}$ direct current coupling unit in the N direct current coupling units, $SOE_{bus\_able\_j}$ represents the second energy value of the $j^{th}$ direct current coupling unit in the N direct current coupling units, $\sum\limits_{j \in N} SOE_{bus\_able\_j}$ is a sum of second energy values of the N direct current coupling units, and $1 \leq j \leq N$.

S4303: The main controller determines Q eighth direct current coupling units in the N direct current coupling units.

In a possible implementation, the initial candidate absorption power value of the eighth direct current coupling unit is greater than or equal to the fourth amplitude limiting value corresponding to the eighth direct current coupling unit, and Q is a positive integer.

It should be noted that the eighth direct current coupling unit may be understood as a direct current coupling unit in the fourth amplitude limiting state after the current calculation.

S4304: The main controller performs determining based on the Q eighth direct current coupling units.

When Q=0, S4305: The main controller determines that the absorption power values of the N direct current coupling units are the initial candidate absorption power values corresponding to the N direct current coupling units, and ends the fourth iterative calculation.

In other words, when Q=0, none of the N direct current coupling units is in the fourth amplitude limiting state after the current calculation, and the main controller may determine that the absorption power values of the N direct current coupling units are the initial candidate absorption power values corresponding to the N direct current coupling units.

When Q=N, S4306: The main controller determines that the absorption power values of the Q eighth direct current coupling units are the fourth amplitude limiting values corresponding to the Q eighth direct current coupling units, and ends the fourth iterative calculation.

In other words, when Q=N, all the N direct current coupling units are in the fourth amplitude limiting state after the current calculation, and the main controller may determine that the absorption power values of the N direct current coupling units are the fourth amplitude limiting values corresponding to the N direct current coupling units.

When 0<Q<N, S4307: The main controller determines that the absorption power values of the Q eighth direct current coupling units are the fourth amplitude limiting values corresponding to the Q eighth direct current coupling units.

The main controller first allocates the absorption power values to the Q eighth direct current coupling units, and then performs S4308.

S4308: The main controller determines $Q_1$ seventh direct current coupling units.

The $Q_1$ seventh direct current coupling units are direct current coupling units to which no absorption power values are allocated in the previous fourth iterative calculation, $Q_1$ is a positive integer, and $Q_1 \leq N$.

It should be noted that the seventh direct current coupling units may also be understood as direct current coupling units whose candidate absorption power values obtained through calculation in the previous fourth iterative calculation are less than the fourth amplitude limiting values corresponding to the direct current coupling units.

S4309: The main controller determines a reference absorption demand power value.

In a possible implementation, the main controller determines the reference absorption demand power value according to the following formula:

$$p_{pref\_absorb} = p_{absorb} - \sum_{j \notin Q_1} p_{bus\_bat\_from\_grid\_j} \qquad (46)$$

where $p_{pref\_absorb}$ is the reference absorption demand power value, $\displaystyle\sum_{j \notin Q_1} p_{bus\_bat\_from\_grid\_j}$ is a sum of absorption power values of the direct current coupling units to which the absorption power values have been allocated, and $p_{bus\_bat\_from\_grid\_j}$ is the absorption power value of a $j^{th}$ direct current coupling unit in the direct current coupling units to which the absorption power values have been allocated.

S4310: The main controller calculates candidate absorption power values of the $Q_1$ seventh direct current coupling units.

In a possible implementation, the main controller determines candidate absorption power values of the $Q_1$ seventh direct current coupling units according to the following formula:

$$p_{bus\_bat\_from\_grid\_j} = p_{ref\_absorb} \frac{SOE_{bus\_able\_j}}{\displaystyle\sum_{j \in Q_1} SOE_{bus\_able\_j}} \qquad (47)$$

where $p_{bus\_bat\_from\_grid\_j}$ represents a first candidate absorption power value of a $j^{th}$ seventh direct current coupling unit in the $Q_1$ seventh direct current coupling units, $p_{ref\_absorb}$ represents a reference absorption demand power value, $SOE_{bus\_able\_j}$ represents the second energy value of the $j^{th}$ seventh direct current coupling unit in the $Q_1$ seventh direct current coupling units, $\displaystyle\sum_{j \in Q_1} SOE_{bus\_able\_j}$ represents a sum of the second energy values of the $Q_1$ seventh direct current coupling units, and $1 \leq j \leq Q_1$.

S4311: The main controller determines $Q_2$ eighth direct current coupling units in the $Q_1$ seventh direct current coupling units.

The candidate absorption power values that are of the $Q_2$ eighth direct current coupling units and that are obtained through calculation in S4310 are greater than or equal to the fourth amplitude limiting values corresponding to the eighth direct current coupling units, and $Q_2$ is a positive integer.

S4312: The main controller determines absorption power values of the $Q_2$ eighth direct current coupling units.

The $Q_2$ eighth direct current coupling units are in the fourth amplitude limiting state. In other words, the main controller determines that the absorption power values of the $Q_2$ eighth direct current coupling units are the fourth amplitude limiting values corresponding to the $Q_2$ eighth direct current coupling units.

S4313: The main controller performs determining based on the $Q_1$ seventh direct current coupling units and the $Q_2$ eighth direct current coupling units.

When $Q_1 = Q_2$, S4314: The main controller determines to end the plurality of rounds of fourth iterative calculation.

In this case, in S4312, the fourth amplitude limiting values corresponding to all the $Q_1$ seventh direct current coupling units that are not allocated previously are allocated as the absorption power values.

When $Q_1 > Q_2 > 0$, go back to S4308 to perform recalculation.

When $Q_2 = 0$, S4315: The main controller determines absorption power values of the $Q_1$ seventh direct current coupling units, and ends the plurality of rounds of fourth iterative calculation.

Absorption power values of the $Q_1$ seventh direct current coupling units are corresponding candidate absorption power values.

In this case, in this round of calculation, none of the $Q_1$ seventh direct current coupling units is in the fourth amplitude limiting state, and all absorption demand power is allocated.

In other words, after the fourth iterative calculation, the main controller may determine the absorption power values of the N direct current coupling units.

Therefore, in this application, the main controller in the power system may obtain the maximum charging power that can be supplied by each direct current coupling unit, namely the maximum charging power that can be currently absorbed by the energy storage unit in the direct current coupling unit from the power grid, namely a fourth amplitude limiting value. The main controller allocates the absorption power value to each direct current coupling unit based on the absorption demand power value and the fourth amplitude limiting value. This can avoid reduction of running reliability of the power system caused by a power component in the power system that exceeds the amplitude limit, thereby improving running reliability of the power system.

FIG. 13 is a schematic flowchart of a method 500 for allocating a first inversion power to an inverter unit according to an embodiment of this application. The method 500 may be applied to a power system, and the power system includes N direct current coupling units, N direct current buses, and a main controller.

For clarity, the following uses a photovoltaic power system in which solar energy is converted into electric energy as an example for description.

S510: The main controller obtains discharging demand powers of the N direct current coupling units.

The discharging demand power indicates a power that is allocated to the energy unit in each direct current coupling unit and that is used to charge the energy storage unit in each of the N direct current coupling units.

S520: The main controller obtains charging demand powers of the N direct current coupling units.

The charging demand power indicates a power that is allocated to the energy storage unit in each direct current coupling unit and that is obtained from the energy unit in each of the N direct current coupling units.

S530: The main controller determines a first inversion power value of each direct current coupling unit based on the discharging demand powers of the N direct current coupling units and the charging demand powers of the N direct current coupling units.

The first inversion power value indicates a power at which the inverter unit in each direct current coupling unit supplies electric energy to the power grid, or the first inversion power value indicates a power at which the inverter unit in each direct current coupling unit absorbs electric energy from the power grid.

In a possible implementation, with reference to the following steps S511 to S518, a manner of obtaining the discharging demand power in step S510 in FIG. 13 is described.

S511: The main controller obtains a first power value of each of the N direct current coupling units.

The first power value is a maximum discharging power of the energy unit in each direct current coupling unit.

In a possible implementation, when the energy unit in each direct current coupling unit includes at least one photovoltaic cell and at least one main photovoltaic controller, the main controller may obtain the maximum discharging power of the at least one photovoltaic cell from the at least one main photovoltaic controller.

If the main photovoltaic controller is an MPPT controller, the MPPT controller may supply a maximum discharging power of a photovoltaic cell corresponding to the MPPT controller for the main controller, where a maximum discharging power of an $i^{th}$ photovoltaic cell in the energy unit in a $j^{th}$ direct current coupling unit is $P_{\text{max\_energy\_}ji}$.

It should be noted that, if the photovoltaic cell corresponding to the MPPT controller is not at the MPPT point, the maximum discharging power value supplied by the MPPT controller to the main controller may be an estimated value of the discharging power of the photovoltaic cell corresponding to the MPPT controller. If the photovoltaic cell corresponding to the MPPT controller is in a derated state, the maximum discharging power value supplied by the MPPT controller to the main controller may be a maximum discharging power after derating.

The main controller obtains the maximum discharging power of the energy unit in each of the N direct current coupling units based on the maximum discharging power of the at least one photovoltaic cell, where the maximum discharging power $P_{bus\_\text{max\_energy\_}j}$ of the energy unit in the $j^{th}$ direct current coupling unit is:

$$P_{bus\_\max\_energy\_j} = \sum P_{\max\_energy\_ji} \qquad (48)$$

In other words, the maximum discharging power of the energy unit in each direct current coupling unit is a sum of the maximum discharging powers that are of photovoltaic cells and that are supplied by all main photovoltaic controllers in the energy unit in each direct current coupling unit.

S512: The main controller obtains a total absorption power value of the N direct current coupling units.

The absorption power value is a power value that is of the power grid and that is allocated to the energy unit in each direct current coupling unit.

The main controller may determine the absorption power value of each of the N direct current coupling units. The total absorption power value is a sum of the absorption power values of the N direct current coupling units. A process of determining the absorption power value of each of the N direct current coupling units may be similar to the process described in the method 400. For brevity, details are not described herein again.

In other words, the total absorption power value $p_{bat\_from\_grid}$ is:

$$p_{bat\_from\_grid} = \sum p_{bus\_bat\_from\_grid\_j} \qquad (49)$$

where $p_{bus\_bat\_from\_grid\_j}$ is the absorption power value of the $j^{th}$ direct current coupling unit in the N direct current coupling units.

S513: The main controller determines whether the total absorption power value of the N direct current coupling units meets a requirement of the power grid.

When the total absorption power value is equal to the absorption demand power of the power grid, the main controller determines that the total absorption power value of the N direct current coupling units meets the requirement of the power grid.

In other words, when the energy storage units of the N direct current coupling units meet a requirement of a power grid, and the energy storage units of the N direct current coupling units may further store electric energy, if there is still an energy unit in the N direct current coupling units, the main controller may allocate power of the energy unit to the energy storage units for storage, thereby improving utilization of new-energy electric energy.

When the main controller determines that the total absorption power value of the N direct current coupling units meets the requirement of the power grid, the main controller may determine the total charging demand power based on the total absorption power values.

The total charging demand power is a total power that is allocated to the energy storage units in N direct current coupling units and that is obtained from the energy units in the N direct current coupling units.

In a possible manner, S514: The main controller determines a first charging capability value of the N direct current coupling units.

The first charging capability value is a capability value of electric energy that can be supplied by the energy units in the N direct current coupling units to the energy storage unit.

The main controller may determine, according to the following formula, the first charging capability value $p_{\mathrm{max\_energy\_to\_bat\_1}}$ of the energy unit in the N direct current coupling units for the energy storage unit as follows:

$$p_{\mathrm{max\_energy\_to\_bat\_1}} = \sum_{j \in N} p_{bus\_\mathrm{max\_energy\_}j} \tag{50}$$

where $p_{bus\_\mathrm{max\_energy\_}j}$ is the first power value of the j$^{th}$ direct current coupling unit in the N direct current coupling units.

S515: The main controller obtains a maximum charging power of an energy storage unit in each of the N direct current coupling units.

In a possible implementation, when the energy storage unit in each direct current coupling unit includes at least one energy storage cell and at least one energy storage controller, the main controller may obtain the maximum charging power of a corresponding energy storage cell from the at least one energy storage controller, and may further obtain the maximum charging power of each energy storage controller.

The main controller determines the maximum charging power of the energy storage unit in each direct current coupling unit based on the maximum charging power of the at least one energy storage cell and the maximum charging power of the at least one energy storage controller, where the maximum charging power $P_{bus\_\mathrm{max\_bat\_charge\_}j}$ of the energy storage unit in the j$^{th}$ direct current coupling unit in the N direct current coupling units is:

$$P_{bus\_\mathrm{max\_bat\_charge\_}j} = \sum \min(p_{bat\_\mathrm{max\_charge\_}ji}, P_{dcdc\_\mathrm{max\_charge\_}ji}) \tag{51}$$

where $P_{bat\_\mathrm{max\_charge\_}ji}$ is a maximum charging power of an i$^{th}$ energy storage cell in the j$^{th}$ direct current coupling unit, and $P_{dcdc\_\mathrm{max\_charge\_}ji}$ is a maximum charging power of an i$^{th}$ energy storage controller in the j$^{th}$ direct current coupling unit.

In other words, the final maximum charging power of the energy storage cell and the corresponding energy storage controller is a minimum value in the maximum charging powers of the energy storage cell and the corresponding energy storage controller, and the maximum charging power of the energy storage unit in the direct current coupling unit is a sum of the final maximum charging powers of all energy storage cells in the direct current coupling unit and the corresponding energy storage controller.

It should be noted that one energy storage controller may control one or more energy storage cells. This is not limited in this application.

S516: The main controller determines a second charging capability value of the N direct current coupling units.

The second charging capability value is a capability value of electric energy that can be accepted by the energy storage units in the N direct current coupling units.

In a possible implementation, the main controller may obtain the second charging capability value $p_{bus\_bat\_rest\_charge}$ according to the following formula:

$$p_{bus\_bat\_rest\_charge} = \sum_{j \in N} (p_{bus\_\mathrm{max\_bat\_charge\_}j} - p_{bus\_bat\_from\_grid\_j}) \tag{52}$$

In other words, the second charging capability value of the N direct current coupling units is a sum of differences between the maximum charging power and the absorption power value that are of the energy storage unit in each direct current coupling unit.

S517: The main controller obtains a total charging demand power.

The total charging demand power is a total power that is allocated to the energy storage units in N direct current coupling units and that is obtained from the energy units in the N direct current coupling units.

In a possible implementation, the main controller may determine the total charging demand power according to the following formula:

$$p_{\max\_energy\_to\_bat} = \min(p_{bus\_bat\_rest\_charge}, p_{\max\_energy\_to\_bat\_1}) \tag{53}$$

In other words, the main controller may determine a minimum value in the first charging capability value and the second charging capability value as the total charging demand power.

S518: The main controller obtains a discharging demand power of each of the N direct current coupling units.

In a possible manner, the main controller may determine a discharging demand power of each of the N direct current coupling units according to the following formula, where a discharging demand power of the $j^{th}$ direct current coupling unit is:

$$p_{bus\_energy\_to\_bat\_j} = p_{\max\_energy\_to\_bat} \frac{p_{bus\_\max\_energy\_j}}{\sum_{j \in N} p_{bus\_\max\_energy\_j}} \tag{54}$$

In other words, the total discharging demand power may be allocated to each of the N direct current coupling units based on the first power value of each direct current coupling unit, namely a ratio of a maximum discharging power value of an energy unit in the direct current coupling unit to a sum of the first power values of the N direct current coupling units, so as to obtain a power that is allocated to the energy unit in each direct current coupling unit and that is used for storage.

In a possible implementation, with reference to the following steps S5201 to S5216, a manner of obtaining the charging demand power in step S520 in FIG. 13 is described.

The main controller may perform third iterative calculation, to determine the charging demand power of each of the N direct current coupling units.

S5201: The main controller obtains third amplitude limiting values of the N direct current coupling units.

The third amplitude limiting value indicates a maximum charging power that can be supplied by the energy storage unit in each of the N direct current coupling units.

In a possible implementation, the third amplitude limiting value of each direct current coupling unit may be the maximum charging power that can be supplied by each energy storage unit.

Optionally, when no absorption power value of the power grid is allocated to the energy storage unit of the direct current coupling unit, the maximum charging power that can be supplied by the energy storage unit is the maximum charging power of the direct current coupling unit. When the absorption power value of the power grid is allocated to the energy storage unit of the direct current coupling unit, the maximum charging power that can be supplied by the energy storage unit is a difference between the corresponding maximum charging power and the corresponding absorption power value.

In other words, the charging power that can be allocated to the energy storage unit is limited by the maximum charging power of the energy storage unit and the allocated charging power.

S5202: The main controller obtains a second energy value of each of the N direct current coupling units.

The second energy value is a difference between a sum of storable electric energy values and a stored electric energy value that are of the energy storage unit in each direct current coupling unit.

The main controller may obtain, from the energy storage unit, a sum of electric energy values that can be supplied by the energy storage unit in each direct current coupling unit. Alternatively, the sum of electric energy values that can be supplied by the energy storage unit in each direct current coupling unit may be preconfigured in the main controller.

A manner in which the main controller obtains the second energy value of each of the N direct current coupling units may be similar to the manner in which the second energy value is obtained in step S4301 in the method 400. For brevity, details are not described herein again.

S5203: The main controller calculates the initial candidate charging demand powers of the N direct current coupling units.

In a possible implementation, the main controller determines an initial candidate charging demand power of each of the N direct current coupling units according to the following formula, where the initial candidate charging demand power of a j$^{th}$ direct current coupling unit is:

$$p_{bus\_bat\_charge\_j} = p_{max\_energy\_to\_bat} \frac{SOE_{bus\_able\_j}}{\sum_{j \in N} SOE_{bus\_able\_j}}$$ (54)

where $p_{bus\_bat\_charge\_j}$ represents the initial candidate charging demand power of the j$^{th}$ direct current coupling unit in the N direct current coupling units, $SOE_{bus\_able\_j}$ represents the second energy value of the j$^{th}$ direct current coupling unit in the N direct current coupling units, $\sum_{j \in N} SOE_{bus\_able\_j}$ is a sum of second energy values of the N direct current coupling units, and $1 \le j \le N$.

S5204: The main controller determines T sixth direct current coupling units in the N direct current coupling units.

In a possible implementation, an initial candidate charging demand power of the sixth direct current coupling unit is greater than or equal to the third amplitude limiting value corresponding to the sixth direct current coupling unit, and T is a positive integer.

It should be noted that the sixth direct current coupling unit may be understood as a direct current coupling unit in the third amplitude limiting state after the current calculation.

S5205: The main controller performs determining based on the T sixth direct current coupling units.

When T=0, S5206: The main controller determines that the charging demand powers of the N direct current coupling units are the initial candidate charging demand powers corresponding to the N direct current coupling units, and ends the third iterative calculation.

In other words, when T=0, none of the N direct current coupling units is in the third amplitude limiting state after the current calculation, and the main controller may determine that the charging demand powers of the N direct current coupling units are the initial candidate charging demand powers corresponding to the N direct current coupling units.

When T=N, S5207: The main controller determines that the charging demand powers of the T sixth direct current coupling units are the third amplitude limiting values corresponding to the T sixth direct current coupling units, and ends the third iterative calculation.

In other words, when T=N, all the N direct current coupling units are in the third amplitude limiting state after the current calculation, and the main controller may determine that the charging demand powers of the N direct current coupling units are the third amplitude limiting values corresponding to the N direct current coupling units.

When 0<T<N, S5208: The main controller determines that the charging demand powers of the T sixth direct current coupling units are the third amplitude limiting values corresponding to the T sixth direct current coupling units.

The main controller first allocates charging demand powers to the T sixth direct current coupling units, and then performs S5209.

S5209: The main controller determines T$_1$ fifth direct current coupling units.

The T$_1$ fifth direct current coupling units are direct current coupling units to which no charging demand powers are allocated in the previous third iterative calculation, T$_1$ is a positive integer, and T$_1 \le N$.

It should be noted that the fifth direct current coupling units may also be understood as direct current coupling units whose candidate charging demand powers obtained through calculation in the previous third iterative calculation are less than the third amplitude limiting values corresponding to the direct current coupling units.

S5210: The main controller determines a reference total charging demand power.

In a possible implementation, the main controller determines the reference total charging demand power according to the following formula:

$$p_{pref\_3} = p_{max\_energy\_to\_bat} - \sum_{j \notin T_1} p_{bus\_bat\_charge\_j}$$ (55)

where $P_{ref\_3}$ is the reference total charging demand power, $\sum_{j \notin T_1} p_{bus\_bat\_charge\_j}$ is a sum of charging demand powers of direct current coupling units to which the charging demand powers have been allocated, and $p_{bus\_bat\_charge\_j}$ is the charging demand power of a j$^{th}$ direct current coupling unit in the direct current coupling units to which the charging demand powers have been allocated.

S5211: The main controller calculates candidate charging demand powers of the $T_1$ fifth direct current coupling units.

In a possible implementation, the main controller determines the candidate charging demand powers of the $T_1$ fifth direct current coupling units according to the following formula:

$$p_{bus\_bat\_charge\_j} = p_{pref\_3} \frac{SOE_{bus\_able\_j}}{\sum_{j \in T_1} SOE_{bus\_able\_j}} \tag{56}$$

where $p_{bus\_bat\_charge\_j}$ represents the candidate charging demand power of the $j^{th}$ fifth direct current coupling unit in the $T_1$ fifth direct current coupling units, $P_{pref\_3}$ represents a reference total charging demand power, $SOE_{bus\_able\_j}$ represents the second energy value of the $j^{th}$ fifth direct current coupling unit in the $T_1$ fifth direct current coupling units,

$$\sum_{j \in T_1} SOE_{bus\_able\_j}$$

represents a sum of the second energy values of the $T_1$ fifth direct current coupling units, and $1 \leq j \leq T_1$.

S5212: The main controller determines $T_2$ sixth direct current coupling units in the $T_1$ fifth direct current coupling units.

The candidate charging demand power values that are of the $T_2$ sixth direct current coupling units and that are obtained through calculation in S5211 are greater than or equal to the third amplitude limiting values corresponding to the $T_2$ sixth direct current coupling units, and $T_2$ is a positive integer.

S5213: The main controller determines charging demand powers of the $T_2$ sixth direct current coupling units.

The $T_2$ sixth direct current coupling units are in the third amplitude limiting state. In other words, the main controller determines that the charging demand powers of the $T_2$ sixth direct current coupling units are the third amplitude limiting values corresponding to the $T_2$ sixth direct current coupling units.

S5214: The main controller performs determining based on the $T_1$ fifth direct current coupling units and the $T_2$ sixth direct current coupling units.

When $T_1=T_2$, S5215: The main controller determines to end the plurality of rounds of third iterative calculation.

In this case, in S5213, the third amplitude limiting values corresponding to all the $T_1$ fifth direct current coupling units that are not allocated previously are allocated as the charging demand powers.

When $T_1>T_2>0$, go back to S5209 to perform recalculation.

When $T_2=0$, S5216: The main controller determines the charging demand powers of the $T_1$ fifth direct current coupling units, and ends the plurality of rounds of third iterative calculation.

The charging demand powers of the $T_1$ fifth direct current coupling units are corresponding reference charging demand powers.

In this case, in this round of calculation, none of the $T_1$ fifth direct current coupling units is in the third amplitude limiting state, and the total charging demand power is allocated.

In other words, after the third iterative calculation, the main controller may determine the charging demand powers of the N direct current coupling units.

In a possible implementation, a manner of obtaining the first inversion power value in step S530 in FIG. 13 is described with reference to the following steps S5301 to S5216.

S5301: The main controller determines an exchange power of each of N direct current coupling units.

The exchange power is obtained by subtracting a charging demand power corresponding to each of the N direct current coupling units from a discharging demand power of the direct current coupling unit.

In other words, the exchange power $p_{bus\_pcs\_to\_other\_j}$ of a $j^{th}$ direct current coupling unit in the N direct current coupling units is:

$$p_{bus\_pcs\_to\_other\_j} = p_{bus\_energy\_to\_bat\_j} - p_{bus\_bat\_charge\_j} \tag{57}$$

S5302: The main controller selects first candidate inversion powers of the N direct current coupling units.

In a possible implementation, when an absorption power value (namely, a first absorption power) that is of a power grid has been allocated to an energy storage unit in the direct current coupling unit, the first candidate inversion power of each of the N direct current coupling units is a difference between the exchange power of each direct current coupling unit and a corresponding absorption power value, and the first candidate inversion power value $p_{bus\_pcs\_to\_grid\_j\_1}$

of the $j^{th}$ direct current coupling unit in the N direct current coupling units is:

$$p_{bus\_pcs\_to\_grid\_j\_1} = p_{bus\_pcs\_to\_other\_j} - p_{bus\_bat\_from\_grid\_j} \qquad (58)$$

In other words, an inverter unit in the direct current coupling unit needs to bear an absorption power value of an energy storage unit in a same direct current coupling unit. Therefore, an inversion power actually borne on the inverter unit is related to the absorption power values of the energy storage units in the same direct current coupling unit, a power at which the energy unit charges the energy storage unit, and a power at which the energy unit in the same direct current coupling unit charges.

S5303: The main controller obtains a second power value of each of the N direct current coupling units.

The second power value is a maximum discharging power of the inverter unit in each direct current coupling unit.

In a possible implementation, when the inverter unit in each direct current coupling unit includes at least one inverter, the main controller obtains the maximum discharging power of each inverter, where a maximum discharging power of an $i^{th}$ inverter in the inverter unit in the $j^{th}$ direct current coupling unit is $p_{pcs\_max\_discharge\_ji}.$

The main controller determines the maximum discharging power of the inverter unit in each of the N direct current coupling units based on the maximum discharging power of the at least one inverter, where the maximum discharging power of the inverter unit in the $j^{th}$ direct current coupling unit, namely a second power value $p_{bus\_max\_pcs\_discharge\_j}$, is:

$$p_{bus\_max\_pcs\_discharge\_j} = \sum p_{pcs\_max\_discharge\_ji} \qquad (59)$$

In other words, the maximum discharging power of the inverter unit in each direct current coupling unit is a sum of the maximum discharging powers of all inverters in the inverter unit in each direct current coupling unit.

S5304: The main controller determines a discharging adjustment demand value.

The discharging adjustment demand value is a sum of differences that are obtained by subtracting a corresponding second power value from the first candidate inversion power value of each direct current coupling unit that is in the N direct current coupling units and whose first candidate inversion power value is greater than 0 and greater than the corresponding second power value.

In other words, the discharging adjustment demand value $Delta\_pos\_sum$ is:

$$Delta\_pos\_sum = \sum_{\substack{p_{bus\_pcs\_to\_grid\_j\_1} > 0 \\ p_{bus\_pcs\_to\_grid\_j\_1} > p_{bus\_max\_pcs\_discharge\_j}}} p_{bus\_pcs\_to\_grid\_j\_1} - p_{bus\_max\_pcs\_discharge\_j} \qquad (60)$$

It should be noted that, that the first candidate inversion power value of the direct current coupling unit is greater than 0 may be understood as that the inverter unit of the direct current coupling unit is in a discharging state. It may be considered whether the first candidate inversion power value of the direct current coupling unit exceeds a maximum discharging power value of the inverter unit. If the first candidate inversion power value of the direct current coupling unit exceeds a maximum discharging power value of the inverter unit, it indicates that the direct current coupling unit cannot bear the first candidate inversion power, and the amplitude of the inverter unit is limited. The discharging adjustment demand value is a sum of differences that are obtained by subtracting a corresponding second power value from the power value of each inverter unit in each of the direct current coupling units that are in the N direct current coupling units and whose amplitudes of the inverter units are limited.

S5305: The main controller determines a charging adjustment demand value.

The charging adjustment demand value is a sum of differences that are obtained by subtracting a corresponding first candidate inversion power value from a fourth power value of each direct current coupling unit that is in the N direct current coupling units and whose first candidate inversion power value is less than 0 and less than the corresponding fourth power value.

The fourth power value is a maximum charging power of the inverter unit in each direct current coupling unit.

In a possible implementation, when the inverter unit in each direct current coupling unit includes at least one inverter, the main controller obtains the maximum charging power of each inverter, where a maximum charging power of an $i^{th}$ inverter in the inverter unit in the $j^{th}$ direct current coupling unit is $p_{pcs\_max\_charge\_ji}.$

The main controller determines the maximum charging power of the inverter unit in each of the N direct current coupling units based on the maximum charging power of the at least one inverter, where the maximum charging power of the inverter unit in the $j^{th}$ direct current coupling unit, namely a fourth power value $p_{bus\_max\_pcs\_charge\_j}$, is:

$$p_{bus\_\max\_pcs\_charge\_j} = \sum p_{pcs\_\max\_charge\_ji} \cdot$$

In other words, the charging adjustment demand value *Delta_neg_sum* is:

$$Delta\_neg\_sum = \sum_{\substack{p_{bus\_pcs\_to\_grid\_j\_1}<0 \\ p_{bus\_pcs\_to\_grid\_j\_1}<p_{bus\_\max\_pcs\_charge\_j}}} p_{bus\_\max\_pcs\_discharge\_j} - p_{bus\_pcs\_to\_grid\_j\_1} \qquad (61)$$

A negative sign of the first candidate inversion power value and the fourth power value represents that a power direction is a charging direction. The charging direction may be understood as a direction from a power grid to an energy storage unit through an inverter unit, and an absolute value of the charging direction represents the magnitude of the power value.

It should be noted that, that the first candidate inversion power value of the direct current coupling unit is less than 0 may be understood as that the inverter unit of the direct current coupling unit is in a charging state. It may be considered whether an absolute value of the first candidate inversion power value of the direct current coupling unit exceeds a maximum charging power value of the inverter unit. If the first candidate inversion power value of the direct current coupling unit exceeds a maximum charging power value of the inverter unit, it indicates that the direct current coupling unit cannot bear the first candidate inversion power, and the amplitude of the inverter unit is limited. The discharging adjustment demand value is a sum of differences that are obtained by subtracting a corresponding fourth power value from the power value of each inverter unit in each of the direct current coupling units that are in the N direct current coupling units and whose amplitudes of the inverter units are limited.

S5306: The main controller determines an adjustment demand power.

The adjustment demand power is an absolute value of a difference that is obtained by subtracting the charging adjustment demand value from the discharging adjustment demand value.

In other words, the adjustment demand power *Delta* is:

$$Delta = \left| Delta\_pos\_\max - Delta\_neg\_\max \right| \qquad (62)$$

S5307: The main controller obtains an adjustment proportion value of each of the N direct current coupling units.

The adjustment proportion value is a proportion of an exchange power value of each direct current coupling unit to a sum of exchange power values of direct current coupling units whose exchange power values are greater than 0.

In other words, the adjustment proportion value of a $j^{th}$ direct current coupling unit in the N direct current coupling units is:

$$K_{bus\_j} = \frac{p_{bus\_pcs\_to\_other\_j}}{p_{bus\_pcs\_to\_other}} \qquad (63)$$

where

$$p_{bus\_pcs\_to\_other} = \sum_{p_{bus\_pcs\_to\_other\_j}>0} p_{bus\_pcs\_to\_other\_j} \qquad (64)$$

S5308: The main controller determines a second candidate inversion power value of each of the N direct current coupling units.

The second candidate inversion power value of the direct current coupling unit whose first candidate inversion power value is greater than 0 is a minimum value in a corresponding first candidate inversion power value and a corresponding second power value, and the second candidate inversion power value of the direct current coupling unit whose first candidate inversion power value is less than 0 is a maximum value in a corresponding first candidate inversion power value and a corresponding fourth power value.

In other words:

if $p_{bus\_pcs\_to\_grid\_j\_1} > 0$,

$$p_{bus\_pcs\_to\_grid\_j\_2} = \min(p_{bus\_pcs\_to\_grid\_j\_1}, p_{bus\_\max\_pcs\_discharge\_j}) \tag{65}$$

if $p_{bus\_pcs\_to\_grid\_j}\_1 < 0$,

$$p_{bus\_pcs\_to\_grid\_j\_2} = \max(p_{bus\_pcs\_to\_grid\_j\_1}, p_{bus\_\max\_pcs\_charge\_j}) \tag{66}$$

where $p_{bus\_pcs\_to\_grid\_j\_2}$ represents a second candidate inversion power value of a $j^{th}$ direct current coupling unit in the N direct current coupling units, $p_{bus\_pcs\_to\_grid\_j\_1}$ represents the first candidate inversion power value of the $j^{th}$ direct current coupling unit in the N direct current coupling units, $p_{bus\_\max\_pcs\_discharge\_j}$ represents the second power value of the $j^{th}$ direct current coupling unit in the N direct current coupling units, and $p_{bus\_\max\_pcs\_charge\_j}$ represents the fourth power value of the $j^{th}$ direct current coupling unit in the N direct current coupling units.

S3309: When the main controller determines that the discharging demand power is greater than the charging demand power, determine that the first inversion power value of the direct current coupling unit whose exchange power value is less than 0 is a difference that is obtained by subtracting a product of an adjustment demand power and a corresponding adjustment proportion value from a corresponding second candidate inversion power value, and determine that the first inversion power value of the direct current coupling unit whose exchange power is greater than 0 is a corresponding second candidate inversion power value.

In other words,

if *Delta_pos_m*ax > *Delta_neg_*max,
the first inversion power value of the direct current coupling unit whose $p_{bus\_pcs\_to\_other\_j} <$ is:

$$p_{bus\_pcs\_to\_grid\_j} = p_{bus\_pcs\_to\_grid\_j\_2} - Delta * K_{bus\_j} \tag{67}$$

the first inversion power value of the direct current coupling unit whose $p_{bus\_pcs\_to\_other\_j} > 0$ is:

$$p_{bus\_pcs\_to\_grid\_j} = p_{bus\_pcs\_to\_grid\_j\_2} \tag{68}$$

if *Delta_pos_*max < *Delta_neg_*max ,
the first inversion power value of the direct current coupling unit whose $p_{bus\_pcs\_to\_other\_j} < 0$ is:

$$p_{bus\_pcs\_to\_grid\_j} = p_{bus\_pcs\_to\_grid\_j\_2} \tag{69}$$

the first inversion power value of the direct current coupling unit whose $p_{bus\_pcs\_to\_other\_j} > 0$ is:

$$p_{bus\_pcs\_to\_grid\_j} = p_{bus\_pcs\_to\_grid\_j\_2} - Delta * K_{bus\_j} \tag{70}$$

In a possible implementation, if the inverter unit in the direct current coupling unit includes a plurality of inverters, the first inversion power value may be allocated based on a ratio of the maximum discharging power of each inverter to the second power value, or the first inversion power value may be allocated based on a ratio of the maximum charging power of each inverter to the fourth power value.

For example, if $p_{bus\_pcs\_to\_grid\_j} > 0$ ,

$$p_{pcs\_to\_grid\_ji} = p_{bus\_pcs\_to\_grid\_j} \frac{p_{pcs\_\max\_discharge\_ji}}{p_{bus\_\max\_pcs\_discharge\_j}} \tag{71}$$

if $p_{bus\_pcs\_to\_grid\_j} < 0$,

$$p_{pcs\_to\_grid\_ji} = p_{bus\_pcs\_to\_grid\_j} \frac{p_{pcs\_\max\_charge\_ji}}{p_{bus\_\max\_pcs\_charge\_j}} \qquad (72)$$

where $p_{pcs\_to\_grid\_ji}$ represents an inversion power of an $i^{th}$ inverter in the inverter unit in a $j^{th}$ direct current coupling unit, $p_{pcs\_max\_discharge\_ji}$ represents the maximum discharging power of the $i^{th}$ inverter in the inverter unit in the $j^{th}$ direct current coupling unit, and $p_{pcs\_max\_charge\_ji}$ represents the maximum charging power of the $i^{th}$ inverter in the inverter unit in the $j^{th}$ direct current coupling unit.

Therefore, in this application, the first inversion power value of the inverter unit in each of the N direct current coupling units may be determined, so that electric energy generated by the energy unit of the direct current coupling unit is charged to the energy storage unit of the direct current coupling unit and/or another direct current coupling unit, thereby reducing an electric energy waste of the energy unit.

FIG. 14 is a schematic diagram of a structure of a control device according to an embodiment of this application. The control device includes a processor 1410 and a communication interface 1420. Optionally, the control device may further include a memory 1430. Optionally, the memory 1430 may be included in the processor 1410. The processor 1410, the communication interface 1420, and the memory 1430 communicate with each other through an internal connection path. The memory 1430 is configured to store instructions, and the processor 1410 is configured to execute the instructions stored in the memory 1430, to implement the control methods according to embodiments of this application.

Optionally, the control device may be configured to perform functions of the main controller 101 in FIG. 1, or functions of the photovoltaic controllers 2400 to 2600 in FIG. 2, or functions of the energy storage controllers 3400 to 3600 in FIG. 3.

Optionally, the control device may be further configured to perform the control method shown in either FIG. 5 or FIG. 13.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, a thread of execution, a program, and/or a computer. As illustrated by using figures, a computing device and an application that is run on a computing device may be both components. One or more components may reside within a process and/or a thread of execution, and a component may be located on a computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the internet interacting with another system by using a signal).

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A power system, wherein the power system comprises N direct current coupling units, N direct current buses, and a controller, and the N direct current coupling units are in a one-to-one correspondence with the N direct current buses;

   the N direct current coupling units are configured to supply power to a power grid, each of the N direct current coupling units comprises an energy unit, the energy unit is configured to generate electric energy, and N is a positive integer; and
   the main controller is configured to:

   obtain a total network input demand power of the power grid, wherein the total network input demand power is a network input power required by the power grid;
   obtain first amplitude limiting values of the N direct current coupling units, wherein the first amplitude limiting value indicates a maximum discharging power that can be supplied by the energy unit in each direct current coupling unit to the power grid; and
   determine first network input power values of the N direct current coupling units based on the total network input demand power and the first amplitude limiting values of the N direct current coupling units, wherein the first network input power value is a power value that is allocated to the energy unit in each direct current coupling unit and that is input to the power grid, at least one of the N direct current coupling units is in a first amplitude limiting state, and the first amplitude limiting state is that a first network input power value allocated to a direct current coupling unit is equal to a first amplitude limiting value corresponding to the direct current coupling unit.

2. The power system according to claim 1, wherein each of the N direct current coupling units further comprises an inverter unit, and the inverter unit is configured to: receive, through the direct current bus, electric energy output by the energy unit, and supply electric energy to the power grid after performing direct current-to-alternating current conversion on the electric energy; and
   the main controller is specifically configured to:
   determine a minimum value in the following as the first amplitude limiting value of each direct current coupling unit: a first power value of each direct current coupling unit and a second power value of each direct current coupling unit, wherein the first power value is a maximum discharging power of the energy unit in each direct current coupling unit, and the second power value is a maximum discharging power of the inverter unit in each direct current coupling unit.

3. The system according to claim 1 or 2, wherein
   the main controller is specifically configured to:
   perform a plurality of rounds of first iterative calculation, to determine the first network input power values of the N direct current coupling units, wherein each round of first iterative calculation in the plurality of rounds of first iterative calculation comprises:

   determining $L_1$ first direct current coupling units, wherein the first direct current coupling unit is a direct current coupling unit to which no first network input power value is allocated in the previous first iterative calculation, $L_1$ is a positive integer, and $L_1 \leq N$;

calculating first candidate network input power values of the $L_1$ first direct current coupling units, wherein the first candidate network input power values are determined based on the total network input demand power and first power values of the $L_1$ direct current coupling units, and the first power value is a maximum discharging power of the energy unit in each direct current coupling unit; and

determining first network input power values of the $L_1$ first direct current coupling units based on the first candidate network input power values and first amplitude limiting values that are of the $L_1$ first direct current coupling units.

4. The system according to claim 3, wherein the main controller is specifically configured to:

determine $L_2$ second direct current coupling units in the $L_1$ first direct current coupling units, wherein first candidate network input power values of the second direct current coupling units are greater than or equal to first amplitude limiting values corresponding to the second direct current coupling units, and $L_2$ is a positive integer; and

determine first network input power values of the $L_2$ second direct current coupling units, wherein the $L_2$ second direct current coupling units are in the first amplitude limiting state.

5. The system according to claim 4, wherein each round of first iterative calculation in the plurality of rounds of first iterative calculation further comprises:

when $L_1=L_2$, determining to end the plurality of rounds of first iterative calculation; and
when $L_1>L_2$, determining to start a next round of first iterative calculation.

6. The system according to claim 3, wherein the main controller is specifically configured to:

determine that the first candidate network input power value of each of the $L_1$ first direct current coupling units is less than the first amplitude limiting value corresponding to the first direct current coupling unit; and
determine that the first network input power value of each of the $L_1$ first direct current coupling units is the first candidate network input power value corresponding to the first direct current coupling unit.

7. The system according to any one of claims 3 to 6, wherein the main controller is specifically configured to:

determine the first candidate network input power values of the $L_1$ first direct current coupling units when the following condition is met:

$$p_{bus\_energy\_to\_grid\_j} = p_{ref\_1} \frac{p_{bus\_\max\_energy\_j}}{\sum_{j \in L_1} p_{bus\_\max\_energy\_j}},$$

wherein
$P_{bus\_energy\_to\_grid\_j}$ represents a first candidate network input power value of a $j^{th}$ first direct current coupling unit in the $L_1$ first direct current coupling units, $P_{pref\_1}$ represents a reference network input demand power, the reference network input demand power is a difference between the total network input demand power and a first allocated power, and the first allocated power is a sum of first network input power values that have been allocated to direct current coupling units in the previous first iterative calculation; and $P_{bus\_max\_energy\_j}$ represents a first power value of the $j^{th}$ first direct current coupling unit in the $L_1$ first direct current coupling units,

$$\sum_{j \in L_1} p_{bus\_\max\_energy\_j}$$

represents a sum of the first power values of the $L_1$ first direct current coupling units, and $1 \leq j \leq L_1$.

8. A power system control method, wherein the method is applied to a power system, the power system comprises N direct current coupling units, N direct current buses, and a main controller, the N direct current coupling units are configured to supply power to a power grid, the N direct current coupling units are in a one-to-one correspondence with the N direct current buses, each of the N direct current coupling units comprises an energy storage unit, the energy storage unit is configured to store electric energy, N is a positive integer, and the method comprises:

obtaining, by the main controller, the energy storage network input demand power of the power grid, wherein the energy storage network input demand power refers to a network input power that needs to be supplied by the energy storage unit to the power grid;

obtaining, by the main controller, second amplitude limiting values of the N direct current coupling units, wherein the second amplitude limiting value indicates a maximum discharging power that can be supplied by the energy storage unit in each direct current coupling unit to the power grid; and

determining, by the main controller, a second network input power value of each direct current coupling unit based on the energy storage network input demand power and the second amplitude limiting values of the N direct current coupling units, wherein the second network input power value is a power value that is allocated to the energy storage unit in each direct current coupling unit and that is input to the power grid, the energy storage unit in at least one of the N direct current coupling units is in a second amplitude limiting state, and the second amplitude limiting state is that a second network input power value allocated to a direct current coupling unit is equal to a second amplitude limiting value corresponding to the direct current coupling unit.

9.   The method according to claim 8, wherein each of the N direct current coupling units further comprises an inverter unit, and the inverter unit is configured to: receive, through the direct current bus, electric energy output by the energy storage unit, and supply electric energy to the power grid after performing direct current-to-alternating current conversion on the electric energy; and
the obtaining, by the main controller, second amplitude limiting values of the N direct current coupling units comprises: determining, by the main controller, a minimum value in the following as the second amplitude limiting value of each direct current coupling unit: a second power value of each direct current coupling unit, and a third power value of each direct current coupling unit, wherein the second power value is a maximum discharging power of the inverter unit in each direct current coupling unit, and the third power value is a maximum discharging power of the energy storage unit in each direct current coupling unit.

10.  The method according to claim 8, wherein each of the N direct current coupling units further comprises an inverter unit and an energy unit, the energy unit is configured to generate electric energy, and the inverter unit is configured to: receive, through the direct current bus, electric energy output by the energy unit and/or the energy storage unit, and supply electric energy to the power grid after performing direct current-to-alternating current conversion on the electric energy; and
the obtaining, by the main controller, second amplitude limiting values of the N direct current coupling units comprises: determining, by the main controller, a minimum value in the following as the second amplitude limiting value of each direct current coupling unit: a third power value of each direct current coupling unit, and a remaining discharging power value of each direct current coupling unit, wherein the third power value is a maximum discharging power of the energy storage unit in each direct current coupling unit, the remaining discharging power value is a second power value of each direct current coupling unit minus a first network input power value, the second power value is a maximum discharging power of the inverter unit in each direct current coupling unit, and the first network input power value refers to a power value that is allocated to the energy unit in each direct current coupling unit and that is input to the power grid.

11.  The method according to any one of claims 8 to 10, wherein the determining, by the main controller, a second network input power value of each direct current coupling unit based on the energy storage network input demand power and the second amplitude limiting values of the N direct current coupling units comprises:
performing, by the main controller, a plurality of rounds of second iterative calculation, to determine the second network input power values of the N direct current coupling units, wherein each round of second iterative calculation in the plurality of rounds of second iterative calculation comprises:

determining, by the main controller, $M_1$ third direct current coupling units, wherein each third direct current coupling unit is a direct current coupling unit to which no second network input power value is allocated in the previous second iterative calculation, $M_1$ is a positive integer, and $M_1 \leq N$;

calculating, by the main controller, second candidate network input power values of the $M_1$ third direct current coupling units, wherein the second candidate network input power values are determined based on the energy storage network input demand power and first energy values of the N direct current coupling units, and the first energy value is electric energy currently stored by the energy storage unit in each direct current coupling unit; and

determining, by the main controller, second network input power values of the $M_1$ third direct current coupling units based on the second candidate network input power values and second amplitude limiting values that are

of the $M_1$ third direct current coupling units.

12. The method according to claim 11, wherein the determining, by the main controller, second network input power values of the $M_1$ third direct current coupling units based on the second candidate network input power values and second amplitude limiting values that are of the $M_1$ third direct current coupling units comprises:

   determining, by the main controller, $M_2$ fourth direct current coupling units in the $M_1$ third direct current coupling units, wherein a second candidate network input power value of each fourth direct current coupling unit is greater than or equal to a second amplitude limiting value corresponding to the fourth direct current coupling unit, and $M_2$ is a positive integer; and
   determining, by the main controller, second network input power values of the $M_2$ fourth direct current coupling units, wherein the $M_2$ direct current coupling units are in the second amplitude limiting state.

13. The method according to claim 12, wherein each round of second iterative calculation in the plurality of rounds of second iterative calculation further comprises:

   when $M_1=M_2$, determining, by the main controller, to end the plurality of rounds of second iterative calculation; and
   when $M_1>M_2$, determining, by the main controller, to start a next round of second iterative calculation.

14. The method according to claim 11, wherein the determining, by the main controller, second network input power values of the $M_1$ third direct current coupling units based on the second candidate network input power values and second amplitude limiting values that are of the $M_1$ third direct current coupling units comprises:

   determining that the second candidate network input power value of each of the $M_1$ third direct current coupling units is less than the second amplitude limiting value corresponding to the third direct current coupling unit; and
   determining that a second network input power value of each of the $M_1$ third direct current coupling units is the second candidate network input power value corresponding to the third direct current coupling unit.

15. The method according to any one of claims 11 to 14, wherein the calculating, by the main controller, second candidate network input power values of the $M_1$ third direct current coupling units comprises:

   determining the second candidate network input power values of the $M_1$ third direct current coupling units when the following condition is met:

$$P_{bus\_bat\_to\_grid\_j} = P_{pref\_2} \frac{SOE_{bus\_j}}{\sum\limits_{j \in M_1} SOE_{bus\_j}},$$

   wherein
   $P_{bus\_bat\_to\_grid\_j}$ represents a second candidate network input power value of a $j^{th}$ third direct current coupling unit in the $M_1$ third direct current coupling units, $P_{pref\_2}$ represents a reference energy storage network input demand power, the reference energy storage network input demand power is a difference that is obtained by subtracting a sum of second network input power values that have been allocated to the direct current coupling unit in the previous second iterative calculation from the energy storage network input demand power, $SOE_{bus\_j}$ represents the first energy value of the $j^{th}$ third direct current coupling unit in the $M_1$ third direct current coupling

   units, $\sum\limits_{j \in M_1} SOE_{bus\_j}$ represents a sum of the first energy values of the $M_1$ third direct current coupling units, and $1 \leq j \leq M_1$.

16. A power system, wherein the power system comprises N direct current coupling units, N direct current buses, and a main controller, the N direct current coupling units are in a one-to-one correspondence with the N direct current buses, and

   the N direct current coupling units are configured to transmit electric energy to a power grid, each of the N direct current coupling units comprises an inverter unit, and each of the N direct current coupling units further comprises an energy unit and/or an energy storage unit;

the inverter unit is configured to: receive, through the direct current bus, electric energy output by the energy unit, and supply electric energy to the power grid after performing direct current-to-alternating current conversion on the electric energy, or the inverter unit is configured to absorb electric energy of the power grid through the direct current bus, and supply electric energy to the energy storage unit after performing alternating current-to-direct current conversion on the electric energy, wherein the energy unit is configured to generate electric energy, and the energy storage unit is configured to store electric energy; and

the main controller is configured to:

obtain discharging demand powers of N direct current coupling units, wherein the discharging demand power indicates a power that is allocated to the energy unit in each direct current coupling unit and that is used to charge the energy storage unit in each of the N direct current coupling units;

obtain charging demand powers of N direct current coupling units, wherein the charging demand power indicates a power that is allocated to the energy storage unit in each direct current coupling unit and that is obtained from the energy unit in each of the N direct current coupling units; and

determine a first inversion power value of each direct current coupling unit based on the discharging demand powers of the N direct current coupling units and the charging demand powers of the N direct current coupling units, wherein the first inversion power value indicates a power at which the inverter unit in each direct current coupling unit supplies electric energy to the power grid, or the first inversion power value indicates a power at which the inverter unit in each direct current coupling unit absorbs electric energy from the power grid.

17. The system according to claim 16, wherein the main controller is specifically configured to:

obtain a total charging demand power, wherein the total charging demand power is a total power that is allocated to the energy storage units in N direct current coupling units and that is obtained from the energy units in the N direct current coupling units;

obtain third amplitude limiting values of the N direct current coupling units, wherein the third amplitude limiting value indicates a maximum charging power that can be supplied by the energy storage unit in each direct current coupling unit; and

determine a charging demand power of each direct current coupling unit based on the total charging demand power and the third amplitude limiting values of the N direct current coupling units, wherein at least one of the N direct current coupling units is in a third amplitude limiting state, and the third amplitude limiting state is that a charging demand power allocated to a direct current coupling unit is equal to a third amplitude limiting value corresponding to the direct current coupling unit.

18. The system according to claim 17, wherein the main controller is specifically configured to:
perform a plurality of rounds of third iterative calculation, to determine charging demand powers of the N direct current coupling units, wherein each round of third iterative calculation in the plurality of rounds of third iterative calculation comprises:

determining $T_1$ fifth direct current coupling units, wherein the fifth direct current coupling unit is a direct current coupling unit to which no charging demand power is allocated in the previous third iterative calculation, $T_1$ is a positive integer, and $T_1 \leq N$;

calculating candidate charging demand powers of the $T_1$ fifth direct current coupling units, wherein the candidate charging demand power is determined based on the total charging demand power and second energy values of the N direct current coupling units, and the second energy value is a difference between a sum of electric energy values that can be stored by the energy storage unit in each direct current coupling unit and a stored electric energy value; and

determining charging demand powers of the $T_1$ fifth direct current coupling units based on the candidate charging demand powers and third amplitude limiting values that are of the $T_1$ fifth direct current coupling units.

19. The system according to claim 18, wherein the main controller is specifically configured to:

determine $T_2$ sixth direct current coupling units in the $T_1$ fifth direct current coupling units, wherein a candidate charging demand power of each sixth direct current coupling unit is greater than or equal to a third amplitude limiting value corresponding to the sixth direct current coupling unit, and $T_2$ is a positive integer; and

determine charging demand powers of the $T_2$ sixth direct current coupling units, wherein the $T_2$ sixth direct current coupling units are in the third amplitude limiting state.

20. The system according to claim 19, wherein each round of first iterative calculation in the plurality of rounds of third iterative calculation further comprises:

when $T_1=T_2$, determining to end the plurality of rounds of third iterative calculation; and
when $T_1>T_2$, determining to start a next round of third iterative calculation.

21. The method according to claim 18, wherein the main controller is specifically configured to:

determine that the candidate charging demand power of each of the $T_1$ fifth direct current coupling unit is less than the third amplitude limiting value corresponding to the fifth direct current coupling unit; and
determine that the charging demand power of each of the $T_1$ fifth direct current coupling units is the candidate charging demand power corresponding to the fifth direct current coupling unit.

22. The method according to any one of claims 18 to 21, wherein the main controller is specifically configured to:

determine candidate charging demand powers of the $T_1$ fifth direct current coupling units when the following condition is met:

$$p_{bus\_bat\_charge\_j} = P_{pref\_3} \frac{SOE_{bus\_able\_j}}{\sum_{j \in T_1} SOE_{bus\_able\_j}},$$

wherein
$p_{bus\_bat\_charge\_j}$ represents a candidate charging demand power of a $j^{th}$ fifth direct current coupling unit in the $T_1$ fifth direct current coupling units, $P_{pref\_3}$ represents a reference total charging demand power, the reference total charging demand power is a difference that is obtained by subtracting a sum of charging demand powers that have been allocated to the direct current coupling unit in the previous third iterative calculation from the charging demand power, and $SOE_{bus\_able\_j}$ represents the second energy value of the $j^{th}$ fifth direct current coupling unit in the $T_1$ fifth direct current coupling units, $\sum_{j \in T_1} SOE_{bus\_able\_j}$ represents a sum of the second energy values of the $T_1$ fifth direct current coupling units, and $1 \leq j \leq T_1$.

23. The method according to any one of claims 16 to 22, wherein the main controller is specifically configured to:

determine exchange powers of N direct current coupling units, wherein the exchange power is obtained by subtracting a charging demand power corresponding to each direct current coupling unit from a discharging demand power of the direct current coupling unit;
determine adjustment demand powers based on the exchange powers of the N direct current coupling units; and
determine first inversion power values of the N direct current coupling units based on the adjustment demand powers and the exchange powers of the N direct current coupling units.

24. The method according to claim 23, wherein the main controller is specifically configured to:

determine first candidate inversion power values of the N direct current coupling units based on the exchange powers of the N direct current coupling units, wherein the first candidate inversion power value is a sum of the exchange power of each direct current coupling unit and a corresponding first network input power value, or the first candidate inversion power value is a difference that is obtained by subtracting a corresponding absorption power value from the exchange power of each direct current coupling unit, wherein
the first network input power value refers to a power value that is allocated to the energy unit in each direct current coupling unit and that is input to the power grid, and the absorption power value refers to a power value that is allocated to the energy storage unit in each direct current coupling unit and that is of the power grid; and
determine the adjustment demand powers based on the first candidate inversion power values of the N direct current coupling units and the exchange powers of the N direct current coupling units.

25. The method according to claim 24, wherein the main controller is specifically configured to:

determine a discharging adjustment demand value, wherein the discharging adjustment demand value is a sum of differences that are obtained by subtracting a corresponding second power value from the first candidate inversion power value of each direct current coupling unit that is in the N direct current coupling units and whose first candidate inversion power value is greater than 0 and greater than the corresponding second power value; determine a charging adjustment demand value, wherein the charging adjustment demand value is a sum of differences that are obtained by subtracting a corresponding first candidate inversion power value from a fourth power value of each direct current coupling unit that is in the N direct current coupling units and whose first candidate inversion power value is less than 0 and less than the corresponding fourth power value, wherein the second power value is a maximum discharging power of the inverter unit in each direct current coupling unit, and the fourth power value is a maximum charging power of the inverter unit in each direct current coupling unit; and

determine the adjustment demand power, wherein the adjustment demand power is an absolute value of a difference that is obtained by subtracting the charging adjustment demand value from the discharging adjustment demand value.

26. The method according to claim 24 or 25, wherein the main controller is specifically configured to:

determine adjustment proportion values of N direct current coupling units, wherein the adjustment proportion value is a proportion of an exchange power value of each direct current coupling unit to a sum of exchange power values of direct current coupling units whose exchange power values are greater than 0; determine second candidate inversion power values of the N direct current coupling units, wherein the second candidate inversion power value of the direct current coupling unit whose first candidate inversion power value is greater than 0 is a minimum value in a corresponding first candidate inversion power value and a corresponding second power value, and the second candidate inversion power value of the direct current coupling unit whose first candidate inversion power value is less than 0 is a maximum value in a corresponding first candidate inversion power value and a corresponding fourth power value; when it is determined that the discharging demand power is greater than the charging demand power, determine that the first inversion power value of the direct current coupling unit whose exchange power value is less than 0 is a difference that is obtained by subtracting a product of an adjustment demand power and a corresponding adjustment proportion value from a corresponding second candidate inversion power value, and determine that the first inversion power value of the direct current coupling unit whose exchange power is greater than 0 is a corresponding second candidate inversion power value; and when it is determined that the discharging demand power is less than the charging demand power, determine that the first inversion power value of the direct current coupling unit whose exchange power value is less than 0 is a corresponding second candidate inversion power value, and determine that the first inversion power value of the direct current coupling unit whose exchange power value is greater than 0 is a difference that is obtained by subtracting a product of the adjustment demand power and a corresponding adjustment proportion value from the corresponding second candidate inversion power value.

27. A power control method, wherein the method is applied to a power system, the power system comprises N direct current coupling units, N direct current buses, and a main controller, the N direct current coupling units are configured to absorb power from a power grid, the N direct current coupling units are in a one-to-one correspondence with the N direct current buses, each of the N direct current coupling units comprises an energy storage unit, the energy storage unit is configured to store electric energy, N is a positive integer, and the method comprises:

obtaining, by the main controller, an absorption demand power of the power grid, wherein the absorption demand power is a power that needs to be absorbed by an energy storage unit in the N direct current coupling units from the power grid; obtaining, by the main controller, fourth amplitude limiting values of the N direct current coupling units, wherein the fourth amplitude limiting value indicates a maximum charging power that can be supplied by each direct current coupling unit; and determining, by the main controller, absorption power values of the N direct current coupling units based on the absorption demand power and the fourth amplitude limiting values of the N direct current coupling units, wherein the absorption power value is a power value that is allocated to the energy unit in each direct current coupling unit and that is of the power grid, at least one of the N direct current coupling units is in a fourth amplitude limiting state, the fourth amplitude limiting state is that an absorption power value allocated to a direct current coupling unit is equal to a fourth amplitude limiting value corresponding to the direct current coupling unit.

28. The method according to claim 27, wherein each of the N direct current coupling units further comprises an inverter unit, the inverter unit is configured to receive electric energy of the power grid through the direct current bus, and transmit electric energy to the energy storage unit after performing alternating current-to-direct current conversion on the electric energy, and the method further comprises:
the obtaining, by the main controller, fourth amplitude limiting values of the N direct current coupling units comprises:
determining, by the main controller, a minimum value in the following as the fourth amplitude limiting value of each direct current coupling unit: an absolute value of a fourth power value of each direct current coupling unit and a fifth power value of each direct current coupling unit, wherein the fourth power value is a maximum charging power of the inverter unit in each direct current coupling unit, and the fifth power value is a maximum charging power of the energy storage unit in each direct current coupling unit.

29. The method according to claim 27 or 28, wherein the determining, by the main controller, absorption power values of the N direct current coupling units based on the absorption demand power and the fourth amplitude limiting values of the N direct current coupling units comprises:
performing, by the main controller, a plurality of rounds of fourth iterative calculation, to determine the absorption power values of the N direct current coupling units, wherein each round of fourth iterative calculation in the plurality of rounds of fourth iterative calculation comprises:

determining, by the main controller, $Q_1$ seventh direct current coupling units, wherein each seventh direct current coupling unit is a direct current coupling unit to which no absorption power value is allocated in the previous fourth iterative calculation, $Q_1$ is a positive integer, and $Q_1 \leq N$;
calculating, by the main controller, candidate absorption power values of the $Q_1$ seventh direct current coupling units, wherein the candidate absorption power values are determined based on the absorption demand powers and second energy values of the $Q_1$ direct current coupling units, and the second energy value is a difference between a sum of storable electric energy values of the energy storage units in each direct current coupling unit and a stored electric energy value; and
determining, by the main controller, absorption power values of the $Q_1$ seventh direct current coupling units based on the candidate absorption power values and fourth amplitude limiting values that are of the $Q_1$ seventh direct current coupling units.

30. The method according to claim 29, wherein the determining, by the main controller, absorption power values of the N direct current coupling units based on the absorption demand power and the fourth amplitude limiting values of the N direct current coupling units comprises:

determining, by the main controller, $Q_2$ eighth direct current coupling units in the $Q_1$ seventh direct current coupling units, wherein the candidate absorption power value of each eighth direct current coupling unit is greater than or equal to a fourth amplitude limiting value corresponding to the eighth direct current coupling unit, and $Q_2$ is a positive integer; and
determining, by the main controller, absorption power values of the $Q_2$ eighth direct current coupling units, wherein the $Q_2$ eighth direct current coupling units are in the fourth amplitude limiting state.

31. The method according to claim 30, wherein each round of fourth iterative calculation in the plurality of rounds of fourth iterative calculation further comprises:

when $Q_1 = Q_2$, determining, by the main controller, to end the plurality of rounds of fourth iterative calculation; and
when $Q_1 > Q_2$, determining, by the main controller, to start a next round of fourth iterative calculation.

32. The method according to claim 29, wherein the determining, by the main controller, absorption power values of the N direct current coupling units based on the absorption demand power and the fourth amplitude limiting values of the N direct current coupling units comprises:

determining that a candidate absorption power value of each of the $Q_1$ seventh direct current coupling units is less than a fourth amplitude limiting value corresponding to the seventh direct current coupling unit; and
determining that an absorption power value of each of the $Q_1$ seventh direct current coupling unit is the candidate absorption power value corresponding to the seventh direct current coupling unit.

33. The method according to any one of claims 29 to 32, wherein the calculating, by the main controller, candidate absorption power values of the $Q_1$ seventh direct current coupling units comprises:

determining the candidate absorption power values of the $Q_1$ seventh direct current coupling units when the following condition is met:

$$p_{bus\_bat\_from\_grid\_j} = p_{ref\_absorb} \frac{SOE_{bus\_able\_j}}{\sum\limits_{j \in Q_1} SOE_{bus\_able\_j}},$$

wherein
$P_{bus\_bat\_from\_grid\_j}$ represents a candidate absorption power value of a $j^{th}$ direct current coupling unit in the $Q_1$ seventh direct current coupling units, $P_{ref\_absorb}$ represents a reference absorption demand power, the reference absorption demand power is a difference that is obtained by subtracting a sum of absorption power values that have been allocated to the direct current coupling unit in the previous fourth iterative calculation from the absorption demand power, $SOE_{bus\_able\_j}$ represents the second energy value of the $j^{th}$ seventh direct current coupling unit in the $Q_1$ seventh direct current coupling units, $\sum\limits_{j \in Q_1} SOE_{bus\_able\_j}$ represents a sum of second energy values of the $Q_1$ seventh direct current coupling units, and $1 \leq j \leq Q_1$.

Power system 100

FIG. 1

Energy unit 2000

| Photovoltaic cell 2100 | Photovoltaic controller 2400 |

| Photovoltaic cell 2200 | Photovoltaic controller 2500 |

| Photovoltaic cell 2300 | Photovoltaic controller 2600 |

Direct current bus

FIG. 2

Energy storage unit 3000

| Energy storage cell 3100 | Energy storage controller 3400 |

| Energy storage cell 3200 | Energy storage controller 3500 |

| Energy storage cell 3300 | Energy storage controller 3600 |

Direct current bus

FIG. 3

Inverter unit 4000

Direct current bus

Inverter 4100

Inverter 4200

Power grid

Inverter 4300

FIG. 4

Method 100

S110: A main controller obtains a total network access demand power of a power grid

S120: The main controller obtains first amplitude limiting values of N direct current coupling units

S130: The main controller determines first network access power values of the N direct current coupling units based on the total network access demand power and the first amplitude limiting values of the N direct current coupling units

FIG. 5

S1301: Calculate initial first candidate network access power values of N direct current coupling units

↓

S1302: Determine L second direct current coupling units in the N direct current coupling units

↓

L=0 — S1303: Perform determining based on the L second direct current coupling units — L=N

↓

S1304: Determine that first network access power values of the N direct current coupling units are first candidate network access power values corresponding to the N direct current coupling units, and end the first iterative calculation

0<L<N

S1306: Determines that first network access power values of the L second direct current coupling units are first amplitude limiting values corresponding to the L second direct current coupling units

S1305: Determine that first network access power values of the L second direct current coupling units are first amplitude limiting values corresponding to the L second direct current coupling units, and end the first iterative calculation

↓

~
TO
FIG. 6B

FIG. 6A

CONT.
FROM
FIG. 6A

S1307: Determine $L_1$ first direct current coupling units

S1308: Determines a reference network access demand power

S1309: Calculate first candidate network access power values of the $L_1$ first direct current coupling units

S1310: Determines $L_2$ second direct current coupling units in the $L_1$ first direct current coupling units

S1311: Determine first network access power values of the $L_2$ second direct current coupling units

$L_2=0$

S1312: Perform determining based on the $L_1$ first direct current coupling units and the $L_2$ second direct current coupling units

$L_1>L_2>0$

$L_1=L_2$

S1314: Determine first network access power values of the $L_1$ first direct current coupling units, and end the plurality of rounds of first iterative calculation

S1313: Determine to end a plurality of rounds of first iterative calculation

FIG. 6B

Method 200

S210: A main controller obtains an energy storage
network access demand power of a power grid

S220: The main controller obtains second amplitude
limiting values of N direct current coupling units

S230: The main controller determines a second
network access power value of each direct current
coupling unit based on the energy storage network
access demand power and the second amplitude
limiting values of the N direct current coupling units

FIG. 7

S2301: Calculate first energy values of N direct current coupling units

S2302: Calculate initial second candidate network access power values of the N direct current coupling units

S2303: Determines M fourth direct current coupling units in the N direct current coupling units

M=0

S2304: Perform determining based on the M fourth direct current coupling units

M=N

S2305: Determine that second network access power values of the N direct current coupling units are second candidate network access power values corresponding to the N direct current coupling units, and end a plurality of rounds of second iterative calculation

0<M<N

S2307: Determine that second network access power values of the M fourth direct current coupling units are second amplitude limiting values corresponding to the M fourth direct current coupling units

S2306: Determine that second network access power values of the M fourth direct current coupling units are second amplitude limiting values corresponding to the M fourth direct current coupling units, and end the second iterative calculation

TO
FIG. 8B

FIG. 8A

CONT.
FROM
FIG. 8A

S2308: Determine $M_1$ third direct current coupling units

S2309: Determine a reference energy storage network access demand power

S2310: Calculate second candidate network access power values of the $M_1$ third direct current coupling units

S2311: Determines $M_2$ fourth direct current coupling units in the $M_1$ third direct current coupling units

S2312: Determine second network access power values of the $M_2$ fourth direct current coupling units

$M_2=0$

S2313: Perform determining based on the $M_1$ third direct current coupling units and the $M_2$ fourth direct current coupling units

$M_1>M_2>0$

$M_1=M_2$

S2315: Determine second network access power values of the $M_1$ third direct current coupling units, and end the plurality of rounds of second iterative calculation

S2314: Determine to end the plurality of rounds of second iterative calculation

FIG. 8B

Method 300

S310: A main controller obtains discharging demand powers of N direct current coupling units

S320: The main controller obtains charging demand powers of the N direct current coupling units

S330: The main controller determines a first inversion power value of each direct current coupling unit based on the discharging demand powers of the N direct current coupling units and the charging demand powers of the N direct current coupling units

FIG. 9

S3201: Obtain third amplitude limiting values of N direct current coupling units

↓

S3202: Obtain a second energy value of each of the N direct current coupling units

↓

S3203: Calculate initial candidate charging demand powers of the N direct current coupling units

↓

S3204: Determine T sixth direct current coupling units in the N direct current coupling units

↓

T=0 ← | S3205: Perform determining based on the T sixth direct current coupling units | → T=N

S3206: Determine that charging demand powers of the N direct current coupling units are initial candidate charging demand powers corresponding to the N direct current coupling units, and end the third iterative calculation

0<T<N

S3208: Determine that charging demand powers of the T sixth direct current coupling units are third amplitude limiting values corresponding to the T sixth direct current coupling units

S3207: Determine that charging demand powers of the T sixth direct current coupling units are third amplitude limiting values corresponding to the T sixth direct current coupling units, and end the third iterative calculation

~
TO
FIG. 10B

FIG. 10A

CONT.
FROM
FIG. 10A

S3209: Determine $T_1$ fifth direct
current coupling units

S3210: Determine a reference
total charging demand power

S3211: Calculate candidate
charging demand powers of the $T_1$
fifth direct current coupling units

S3212: Determines $T_2$ sixth direct
current coupling units in the $T_1$
fifth direct current coupling units

S3213: Determine charging
demand powers of the $T_2$ sixth
direct current coupling units

$T_2=0$

S3214: Perform determining based
on the $T_1$ fifth direct current
coupling units and the $T_2$ sixth
direct current coupling units

$T_1>T_2>0$

$T_1=T_2$

S3216: Determine
charging demand powers
of the $T_1$ fifth direct
current coupling units, and
end the plurality of rounds
of third iterative
calculation

S3215: Determine to end a
plurality of rounds of third
iterative calculation

FIG. 10B

66

Method 400

S410: A main controller obtains an absorption
demand power of a power grid

S420: The main controller obtains fourth amplitude
limiting values of N direct current coupling units

S430: The main controller determines absorption
power values of the N direct current coupling units
based on the absorption demand power and the
fourth amplitude limiting values of the N direct
current coupling units

FIG. 11

S4301: Obtain second energy values of N direct current coupling units

↓

S4302: Calculate initial candidate absorption power values of the N direct current coupling units

↓

S4303: Determine Q eighth direct current coupling units in the N direct current coupling units

↓

Q=0 ← S4304: Perform determining based on the Q eighth direct current coupling units → Q=N

S4305: Determine that absorption power values of the N direct current coupling units are initial candidate absorption power values corresponding to the N direct current coupling units, and end the fourth iterative calculation

0<Q<N

S4307: Determine that absorption power values of the Q eighth direct current coupling units are fourth amplitude limiting values corresponding to the Q eighth direct current coupling units

S4306: Determine that absorption power values of the Q eighth direct current coupling units are fourth amplitude limiting values corresponding to the Q eighth direct current coupling units, and end the fourth iterative calculation

↓

TO
FIG. 12B

FIG. 12A

CONT.
FROM
FIG. 12A

S4308: Determine $Q_1$ seventh direct current coupling units

S4309: Determine a reference absorption demand power value

S4310: Calculate candidate absorption power values of the $Q_1$ seventh direct current coupling units

S4311: Determines $Q_2$ eighth direct current coupling units in the $Q_1$ seventh direct current coupling units

S4312: Determine absorption power values of the $Q_2$ eighth direct current coupling units

S4313: Perform determining based on the $Q_1$ seventh direct current coupling units and the $Q_2$ eighth direct current coupling units

$Q_2=0$

$Q_1>Q_2>0$

$Q_1=Q_2$

S4315: Determine absorption power values of the $Q_1$ seventh direct current coupling units, and end the plurality of rounds of fourth iterative calculation

S4314: Determine to end a plurality of rounds of fourth iterative calculation

FIG. 12B

Method 500

S510: A main controller obtains discharging demand powers of N direct current coupling units

S520: The main controller obtains charging demand powers of the N direct current coupling units

S530: The main controller determines a first inversion power value of each direct current coupling unit based on the discharging demand powers of the N direct current coupling units and the charging demand powers of the N direct current coupling units

FIG. 13

Control device 1400

Processor 1410

Memory 1430

Communication interface 1420

FIG. 14

## INTERNATIONAL SEARCH REPORT

| International application No. |
| --- |
| **PCT/CN2022/088722** |

**A.    CLASSIFICATION OF SUBJECT MATTER**

H02J 3/38(2006.01)i;  H02J 3/46(2006.01)i;  H02J 3/32(2006.01)i

According to International Patent Classification (IPC) or to both national classification and IPC

**B.    FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT; CNABS; CNKI; SIPOABS; DWPI; USTXT; WOTXT; EPTXT: 华为, 直流母线, 入网功率, 功率, 需求, 限幅, 阈值, 最大, 利用率, 逆变, 储能, 电池, DC bus, power, need+, requir+, limit, threshold, max+, utilization, inverter, energy storage, battery

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 113300398 A (HUAWEI TECHNOLOGIES CO., LTD.) 24 August 2021 (2021-08-24)<br>claims 1-33 | 1-33 |
| A | CN 105811458 A (CHINA ELECTRONICS GREATWALL ENERGY (SHENZHEN) CO., LTD.) 27 July 2016 (2016-07-27)<br>description, paragraphs [0032]-[0051], and figures 1 and 2 | 1-33 |
| A | CN 208955673 U (GROWATT NEW ENERGY TECHNOLOGY CO., LTD.) 07 June 2019 (2019-06-07)<br>entire document | 1-33 |
| A | JP 2019080485 A (TOSHIBA IT & CONTROL SYSTEMS CORP.) 23 May 2019 (2019-05-23)<br>entire document | 1-33 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 May 2022** | **30 May 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/088722**

| Patent document cited in search report | | | Publication date (day/month/year) | Patent family member(s) | | | Publication date (day/month/year) |
|---|---|---|---|---|---|---|---|
| CN | 113300398 | A | 24 August 2021 | None | | | |
| CN | 105811458 | A | 27 July 2016 | None | | | |
| CN | 208955673 | U | 07 June 2019 | CN | 109038680 | A | 18 December 2018 |
| JP | 2019080485 | A | 23 May 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110481296